(19) Europäisches Patentamt
European Patent Office
Office européen des brevets

(11) Publication number: 0 093 829
B1

(12) # EUROPEAN PATENT SPECIFICATION

(45) Date of publication of patent specification: 07.01.87

(51) Int. Cl.$^4$: C 09 B 44/00, C 09 B 45/00 // D06P3/32, D21H1/46

(21) Application number: 83100107.8

(22) Date of filing: 06.05.81

(60) Publication number of the earlier application in accordance with Art. 76 EPC: 0 041 040

(54) **Sulphofree basic azo compounds in metal-free 1:1 or 1:2 metal complex form.**

(30) Priority: 08.05.80 CH 3601/80
08.05.80 CH 3602/80
08.05.80 CH 3603/80
08.05.80 CH 3604/80
08.05.80 CH 3605/80
08.05.80 CH 3606/80
13.05.80 CH 3735/80
13.05.80 CH 3736/80
13.05.80 CH 3737/80
29.05.80 CH 4183/80
29.05.80 CH 4184/80
29.05.80 CH 4185/80
01.07.80 CH 5079/80
01.07.80 CH 5080/80
01.07.80 CH 5081/80
10.12.80 CH 9104/80
10.12.80 CH 9105/80
10.12.80 CH 9106/80

(43) Date of publication of application: 16.11.83 Bulletin 83/46

(45) Publication of the grant of the patent: 07.01.87 Bulletin 87/02

(84) Designated Contracting States: CH DE FR GB IT LI

(73) Proprietor: SANDOZ AG
Lichtstrasse 35
CH-4002 Basel (CH)

(72) Inventor: Doswald, Paul
Eschenstrasse 4
CH-4142 Münchenstein (CH)
Inventor: Moriconi, Emil
Passwangstrasse 59
CH-4059 Basle (CH)
Inventor: Moser, Helmut
Libellenstrasse 25
CH-4104 Oberwil (CH)
Inventor: Schmid, Horst
Habshagstrasse 13
CH-4153 Reinach (CH)

(56) References cited:
CH-A- 472 486
GB-A- 883 445
GB-A-1 299 080
US-A-4 103 092
US-A-4 206 144

EP 0 093 829 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to sulpho-free azo compounds, in metal-free, 1:1 metal complex or 1:2 metal complex form, which are useful for dyeing paper and leather.

What is meant by a "1:1 metal complex" is that each molecule of the complex has 1 metal atom bonded to 1 dyestuff molecule or has 2 metal atoms bonded to two dyestuff units, which dyestuff units are joined together by a direct bond or a conventional bridging group; and what is meant by a "1:2 metal complex" is that the complex has 1 atom of metal bonded to two dyestuff units, which dyestuff units can be the same or different but which dyestuff units are part of two separate dyestuff molecules.

British Patent 883,445 describes complex copper compounds of monoazo dyestuffs containing quaternary ammonium groups and a process for their manufacture.

The invention provides sulpho-free azo compounds in metal-free, 1:1 metal complex or 1:2 metal complex form having at least 1.3 preferably 2 water solubilising basic groups, the compounds being of the formula IV

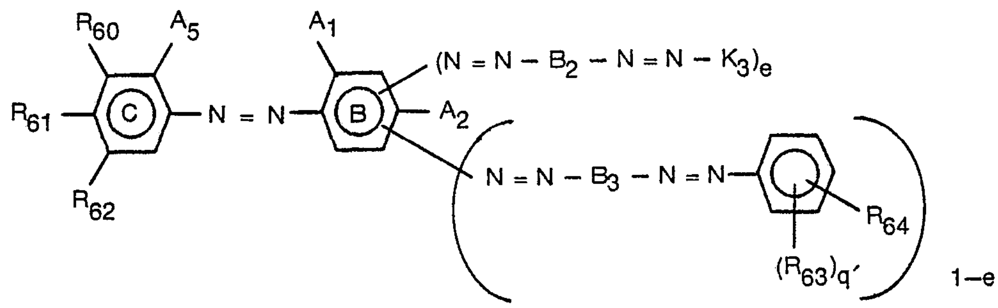

IV

in which $A_1$ is $—OH$ or $—NH_2$; $A_2$ is $—OH$ or $—NH_2$; and

$A_5$ is $—OH$, $(C_{1-4})$alkoxy or $—COOH$ or

$A_1$ and $A_5$ together form the group $—NH—Me—NH—$, $—NH—Me—OOC—$, $—NH—Me—O—$, $—O—Me—O$, $—O—Me—OOC$ where Me is a metal capable of either forming a 1:1 metal complex or a 1:2 metal complex or capable of forming both a 1:1 metal complex and a 1:2 metal complex;

e is 0 or 1;

$R_{60}$ is hydrogen or $—NO_2$;

$R_{61}$ and $R_{62}$, independently, are hydrogen,

$—NO_2$, $—CH_2—Z_2$, $—SO_2—NH_2$, $—SO_2—NH—(CH_2)_p—Z_2$, $—SO_2—NH—C_2H_4OH$,

$—SO_2—N—(R'_{62})_2$, $—CO—NH—(CH_2)_p—Z_2$, $—NH—CO—(CH_2)_p—Z_2$

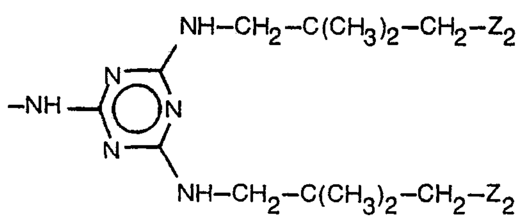

, or

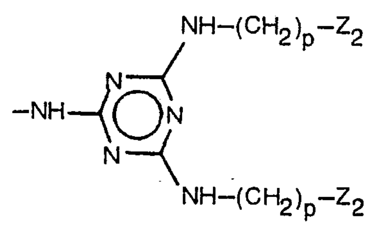

;

where $R'_{62}$ is $(C_{1-4})$alkyl,

$R_{63}$ is $—SO_2—NH—(CH_2)_p—Z_2$, $—CO—NH—(CH_2)_p—Z_2$, $—NH—CO—(CH_2)_p—Z_2$,

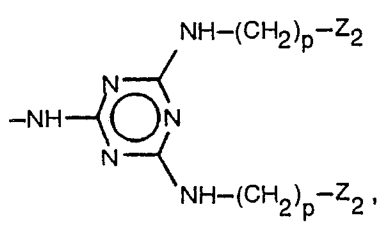

or $—CH_2—Z_2$;

$R_{64}$ is hydrogen or $(C_{1-4})$alkoxy;

each $R_{65}$ independently is hydrogen $(C_{1-4})$alkyl or $C_{1-4}$—alkoxy;

p is 1, 2 or 3;

q' is 1 or 2 with the proviso that when $R_{63}$ is $—CO—NH—(CH_2)_p—Z_2$ q' is 2;

$K_3$ is one of the following groups

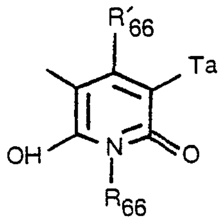,
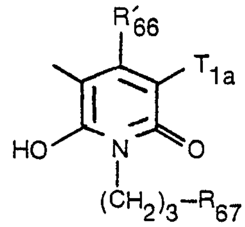,
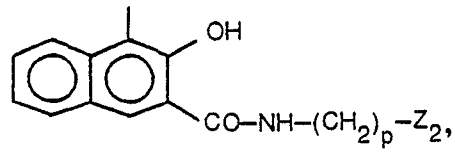

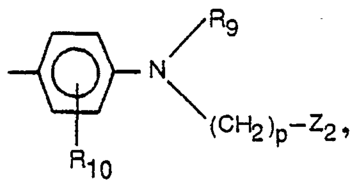
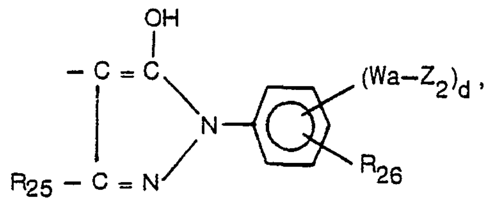

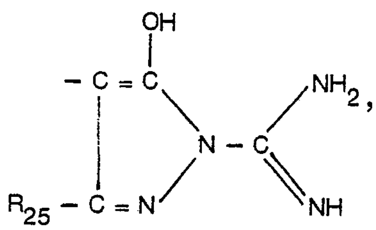
$R_{69}$—CO—CH—CO $R_{68}$

$R_9$ is $C_{1-4}$alkyl or $(CH_2)_p$—$Z_2$;
$R_{10}$ is hydrogen, $C_{1-4}$alkyl, $C_{1-4}$alkoxy, —NH—$COCH_3$ or —$NHCONH_2$;
$R_{29}$ is $C_{1-4}$alkyl,—$COO(R_{25a})$ or —COOH, where $R_{25a}$ is $C_{1-4}$alkyl;

$Z_2$ is $-NH_2$, $-N(R_o)_2$, $-\overset{\oplus}{N}(R_o)_3\ A^{\ominus}$, 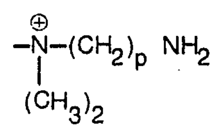

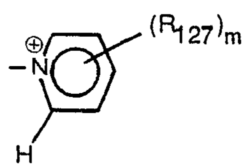 or 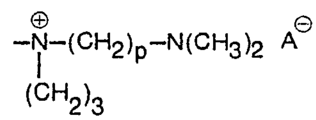

m is 0, 1 or 2;
$A^{\ominus}$ is a non-chromophoric anion;
$R_{127}$ is methyl or ethyl,
each $R_0$ independently, is methyl, ethyl, β-hydroxyethyl, benzyl, —$CH_2COCH_3$,

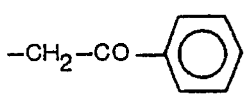

provided that no more than one benzyl, —$CH_2COCH_3$ or

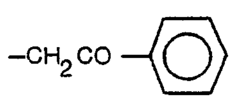

is attached or not more than two β-hydroxyethyl groups are attached to a nitrogen atom,
$R_{66}$ is hydrogen, $(C_{1-4})$alkyl, —$C_2H_4OH$ or —$(CH_2)_p$—$Z_2$;
$R'_{66}$ is $(C_{1-4})$alkyl,

Ta is a group of the formula

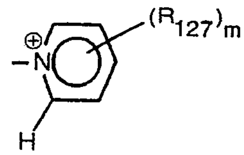 $A^{\ominus}$, 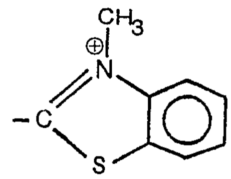 $A^{\ominus}$

$T_{1a}$ is —CN or —CO—$NH_2$;
$R_{67}$ is —$N(CH_3)_2$ or —$N^{\oplus}(CH_3)_3$ $A^{\ominus}$;
$R_{68}$ is $-(CH_2)_p$—$Z_2$, —NH—$(CH_2)_p$—$Z_2$ or

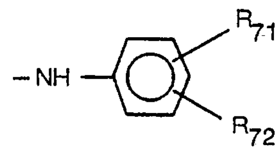 ;

where $R_{71}$ is hydrogen, —OH, $(C_{1-4})$alkoxy,

—NH—CO—$(CH_2)_p$—$Z_2$, —CO—NH—$(CH_2)_p$—$Z_2$, —$SO_2$—NH—$(CH_2)_p$—$Z_2$, —$(CH_2)_p$—$Z_2$ or

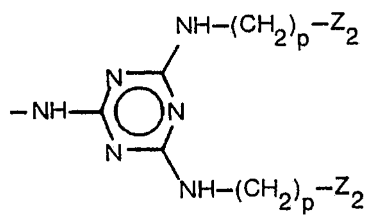 ;

and $R_{72}$ is hydrogen or —$(CH_2)_p$—$Z_2$;
$R_{69}$ is $(C_{1-4})$alkyl or —$(CH_2)_p$—$Z_2$ where p and $Z_2$ are above defined

$B_2$ is 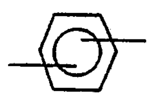 or 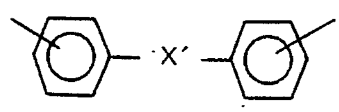

$B_3$ is 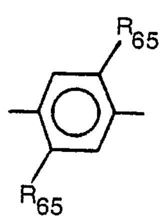 , 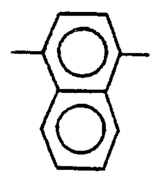 or 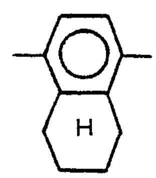

where each $R_{65}$ independently, is hydrogen, $(C_{1-4})$alkyl or $(C_{1-4})$alkoxy; and X' is as defined below;
$W_a$ is —$(CH_2)_s$, —NHCO$(C^*H_2)_s$—, —CONH—$(C^*H_2)_s$ or —$SO_2NH(C^*H_2)_s$
in which the starred C—atom is attached to the N-atom of the group $Z_2$ derfined above,
d' is 0 or 1;
$R_{26}$ is hydrogen, halogen, $C_{1-4}$alkyl or $C_{1-4}$alkoxy;
X' is a group of $X_1$ to $X_{53}$ below;
$X_1$ is a direct bond;

$X_2$ a straight or branched chain alkylene group of ($C_{1-4}$) carbon atoms,

$X_3$ $-CO-$, $X_4$ 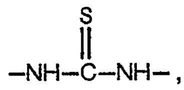, $X_5$ $-S-$, $X_6$ $-O-$, $X_7$ $-CH=CH-$, $X_8$ $-S-S-$,

$X_9$ $-SO_2-$, $X_{10}$ $-NH-$, $X_{11}$ $-NH-CO-$, $X_{12}$ 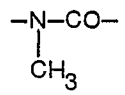, $X_{13}$ 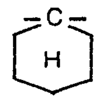

$X_{14}$ 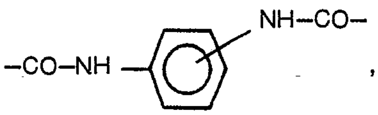, $X_{15}$ 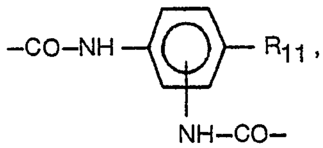,

$X_{16}$ 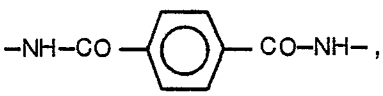, $X_{17}$ $-SO_2-NH-$, $X_{18}$ 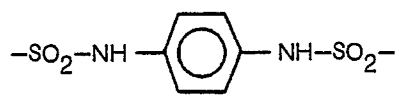,

$X_{19}$ 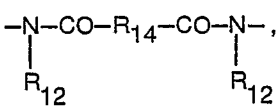, $X_{20}$ 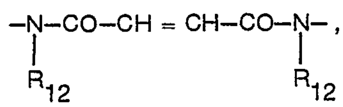, $X_{21}$ 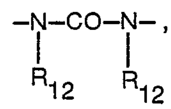,

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 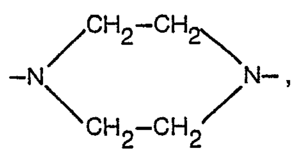,

$X_{26}$ 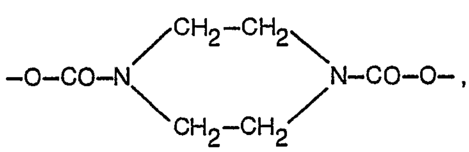, $X_{27}$ 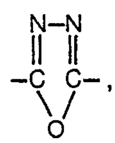, $X_{28}$ 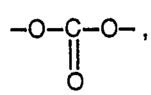,

$X_{29}$ 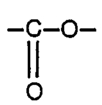, $X_{30}$ 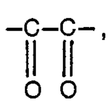, $X_{31}$ $-O-(CH_2)_q-O-$, $X_{32}$ 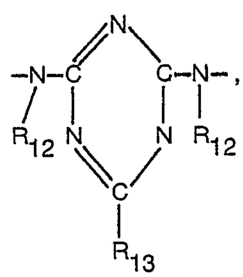

$X_{33}$ 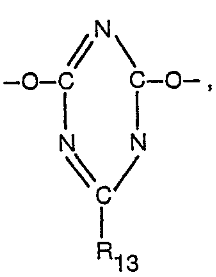, $X_{34}$ 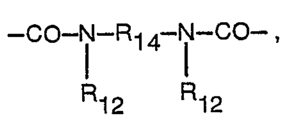,

$X_{35}$ 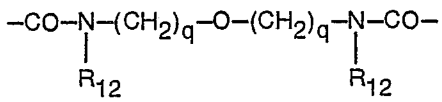, $X_{36}$ 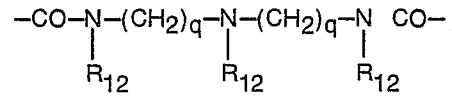,

$X_{37}$ 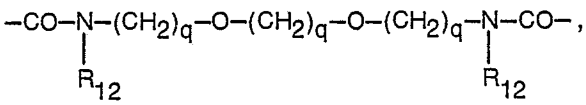, $X_{38}$ 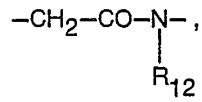,

$X_{39}$ 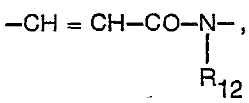, $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-OS-NH-CH_2-$, $X_{47}$ 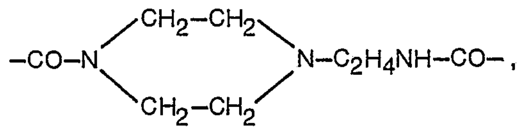,

$X_{48}$ 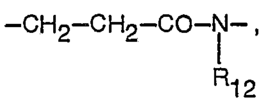, $X_{49}$ $-NH-CO-NH-$, $X_{50}$ $-O-(CH_2)_q-O-$,

$X_{51}$ 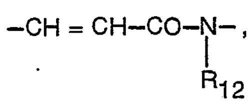, $X_{52}$ 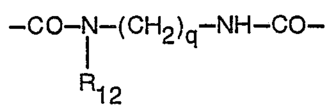, $X_{53}$ 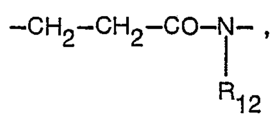,

where

$R_{11}$ is halogen, $(C_{1-4})$alkyl or $(C_{1-4})$alkoxy;

$R_{12}$ is hydrogen or $(C_{1-4})$alkyl;

$R_{13}$ is halogen, $-NH-CH_2-CH_2-OH$ or $-N(CH_2-CH_2OH)_2$;

$R_{14}$ is a straight or branched chain $(C_{1-4})$alkylene group and q is 1, 2, 3 or 4

with the provisos

(i) that $R_{60}$ and $R_{61}$ cannot both be $-NO_2$,

(ii) that when $R_{61}$ and $R_{62}$ are both hydrogen, $R_{60}$ cannot be $-NO_2$,

(iii) that $R_{61}$ and $R_{62}$ are not the same group unless both are hydrogen, and

(iv) that each azo bridge in ring B is in an ortho position either to $A_1$ or $A_2$ or to both $A_1$ and $A_2$.

Preferably when the compounds of the invention are in 1:1 metal complex form Me is copper, chromium, cobalt, iron, nickel or manganese, more preferably copper, chromium or cobalt, most preferably copper. Preferably copper is $Cu^{2+}$; chromium is $Cr^{2+}$; cobalt is $Co^{2+}$; iron is $Fe^{2+}$; nickel is $Ni^{2+}$ and manganese is $Mn^{2+}$.

Preferably when the compounds of the invention are in 1:2 metal complex form, Me is chromium, cobalt, iron or nickel, more preferably chromium, cobalt or iron, most preferably iron. Preferably chromium is $Cr^{3+}$; cobalt is $Co^{3+}$, iron is $Fe^{3+}$ and nickel is $Ni^{3+}$.

Preferably the compounds of the invention when in 1:2 metal complex form and/or in metal free form when n = 2, are symmetric, i.e. both dyestuff molecules bonded to the metal ion are the same.

Preferred azo compounds of formula IV in metal free form are of the formula IVa

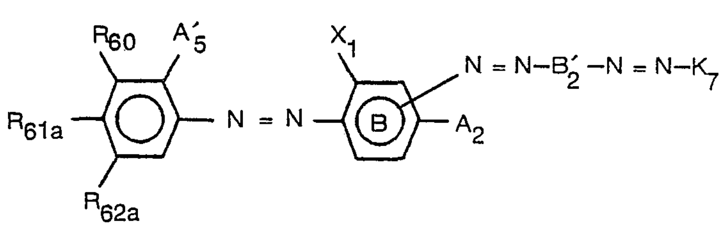 IVa,

in which $A_5'$ is $-OH$ or $-OCH_3$,

$R_{61a}$ is hydrogen,

$-NO_2$, $-CH_2-Z_2$, $-SO_2-NH-(CH_2)_p-Z_2$, $-NH-CO-(CH_2)_p-Z_2$ or

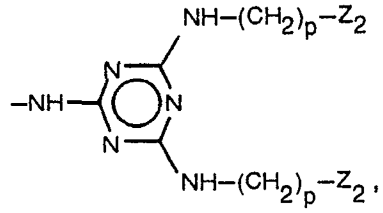

$R_{62a}$ is hydrogen,

$-NO_2$, $-CH_2-Z_2$, $-SO_2-NH_2$, $-SO_2-NH-(CH_2)_p-Z_2$,

$-CO-NH-(CH_2)_p-Z_2$, $-NH-CO-(CH_2)_p-Z_2$,

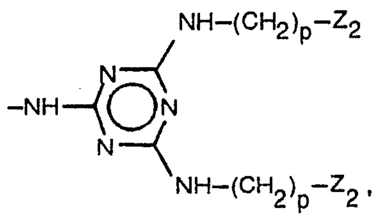

or

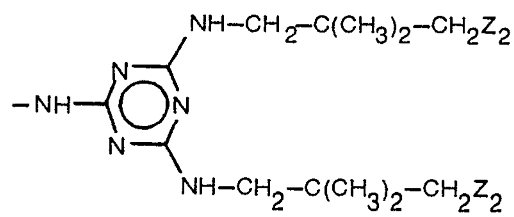

$B_2'$ is 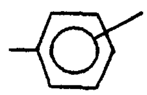 or 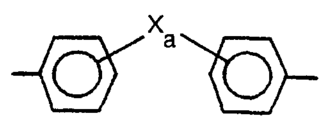 ;

$K_7$ is one of groups IVaa to IVaf below

IVaa 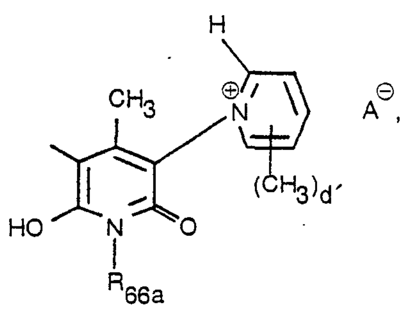

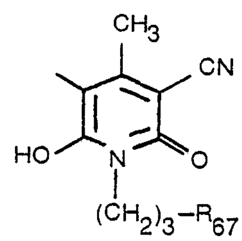 , IVab

IVac 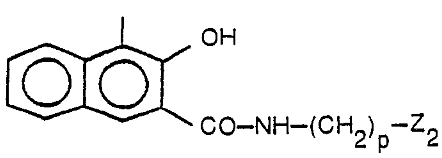

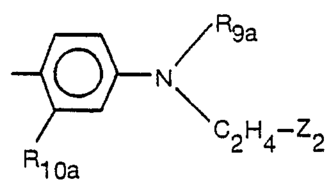 IVad

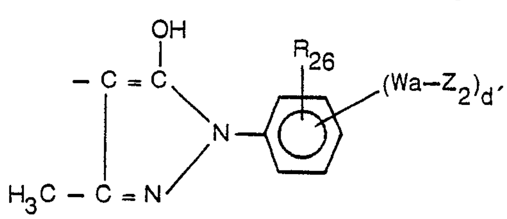 IVae

IVaf 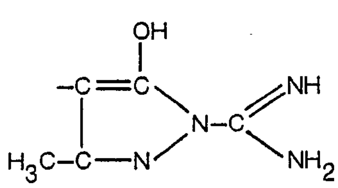

or 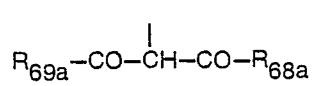 IVag

in which $R_{9a}$ is $-CH_3$, $-C_2H_5$ or $-C_2H_4-Z_2$;

Wa is $-(CH_2)_s$, $-NHCO(C^*H_2)_s-$, $-CONH(CH_2)_s$ or $-SO_2NH(C^*H_2)_5$ in which the starred C atom is attached to the N-atom of the group $Z_2$ and s is 1, 2, 3, 4, 5 or 6, d' is 0 or 1;

$R_{10a}$ is hydrogen, $-CH_3$, $-OCH_3$, $-NH-CO-CH_3$ or $-NH-CO-CH_2$;

$R_{66a}$ is hydrogen, $-CH_3$, $-C_2H_5$, n-$C_3H_7$, n-$C_4H_9$, i-$C_3H_7$, i-$C_4H_9$, $-C_2H_4OH$ or $-(CH_2)_p-Z_2$;

$R_{68a}$ is $-(CH_2)_p-Z_2$, $-NH-(CH_2)_p-Z_2$ or

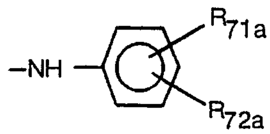 ;

$R_{69a}$ is $-CH_3$, $-C_2H_5$ or $-(CH_2)_p-Z_2$;

$R_{71a}$ is hydrogen,

$-OH$, $-OCH_3$, $-NH-CO-(CH_2)_p-Z_2$, $-CO-NH-(CH_2)_p$, $-SO_2-NH-(CH_2)_p-Z_2$ or

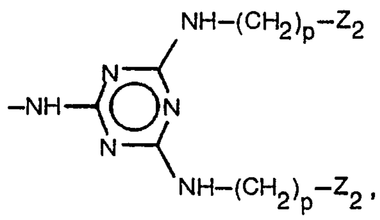 ,

$R_{72a}$ is hydrogen or $-(CH_2)_p-Z_2$;

$X_a$ is $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ or the following groups $X_2'$ —CH—$_2$, $X_2''$ $-(CH_2)_2-$, $X_2'''$ $-(CH_2)_3-$,

$X_2^{iv}$ $-(CH_2)_4-$, $X_{14}'$ 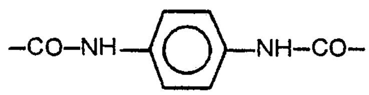 ,

$X_{15}'$ 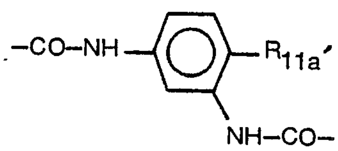 , $X_{19}'$ $-NH-CO-CH_2-CH_2-CO-NH-$,

$X_{19}''$ $-NH-CO-(CH_2)_4-CO-NH-$, $X_{19}'''$ 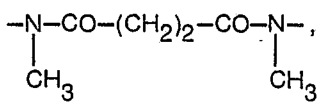 ,

$X_{20}'$ $-NH-CO-CH=CH-CO-NH-$, $X_{20}''$ 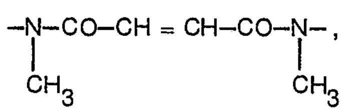 ,

$X_{21}'$ 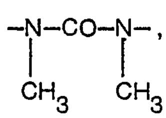 , $X_{32}'$ 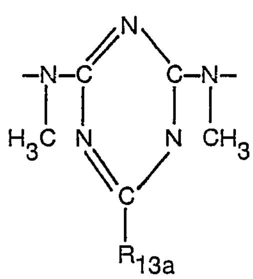

$X_{32}''$ 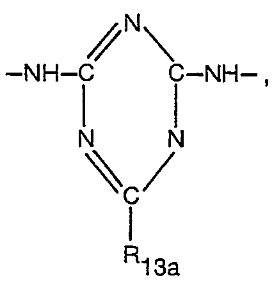 , $X_{34}'$ $-CO-NH-(CH_2)_2-NH-CO-$,

$X''_{34}$ $-CO-NH-(CH_2)_3-NH-CO-$, $X'''_{34}$ $-CO-NH-(CH_2)_4-NH-CO-$,

$X^{iv}_{34}$ 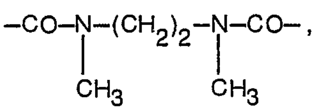 , $X^{v}_{34}$ 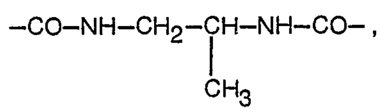 ,

$X^{vi}_{34}$ 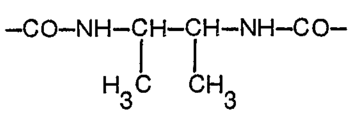 , $X''_{14}$ 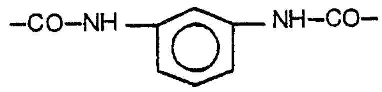 ,

$X''_{15}$ 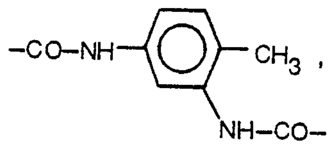 , $X'''_{15}$ 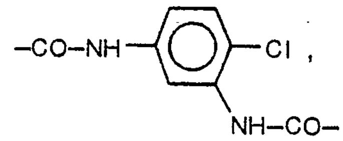 ,

$X^{iv}_{15}$ 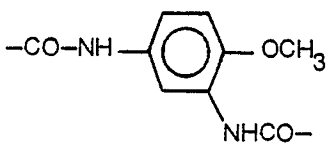 , $X'''_{32}$ 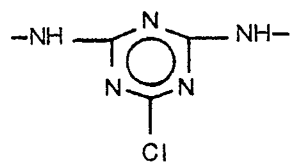 ,

$X^{iv}_{32}$ 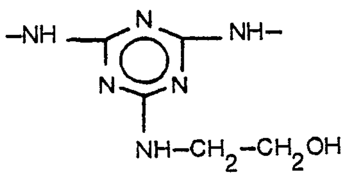 , $X^{v}_{32}$ 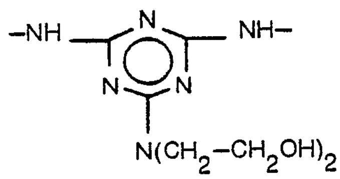 ,

$X^{vi}_{32}$ 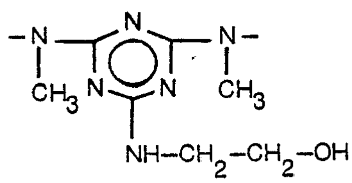 , $X'_{33}$ 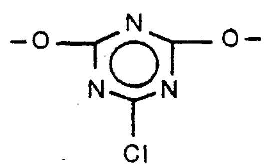 ,

$X''_{33}$ 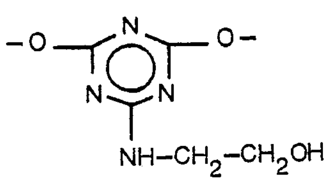 , $X'''_{33}$ 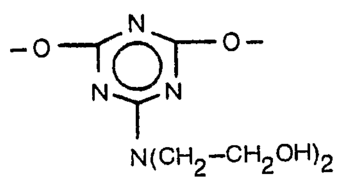 ,

$X'_{35}$ $-CO-NH-(CH_2)_2-O-(CH_2)_2-NH-CO-$,

$X''_{35}$ $-CO-NH-(CH_2)_2-O-(CH_2)_2-O-(CH_2)_2-NH-CO-$,

$X'_{36}$ $-CO-NH-(CH_2)_2-NH-(CH_2)_2-NH-CO-$,

$X''_{36}$ 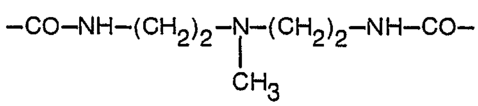 , $X'_{48}$ 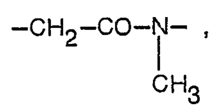 ,

$X'_{50}$ $-O-CH_2-CH_2-O-$, $X''_{50}$ $-O-(CH_2)-O-$, $X'_{51}$ $-CH=CH-CO-NH-$,

$X''_{51}$ 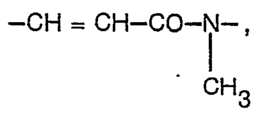 , $X'_{52}$ 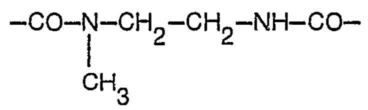 ,

$X'_{53}$ $-CH_2-CH_2-CO-NH-$ , $X''_{53}$ 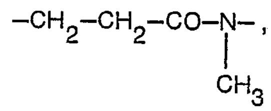 ,

where

$R_{11a}$ is hydrogen, —Cl, —$CH_3$ or —$OCH_3$;

$R_{13a}$ is —Cl, —NH—$CH_2$—$CH_2$—OH or —N($CH_2$—$CH_2$—$OH)_2$; and where all the other symbols are as defined above; with the provisos

(i) that each azo bridge in B is in an ortho position to $A_1$ or $A_2$ or to both $A_1$ and $A_2$;

(ii) that $R_{61a}$ and $R_{62a}$ cannot both be the same group, unless both are hydrogen;

(iii) that $R_{60}$ and $R_{61a}$ are not both —$NO_2$; and

(iv) that $R_{60}$ cannot be —$NO_2$ when $R_{61a}$ and $R_{62a}$ are hydrogen.

Preferred azo compounds of formula IVa are of formula IVb

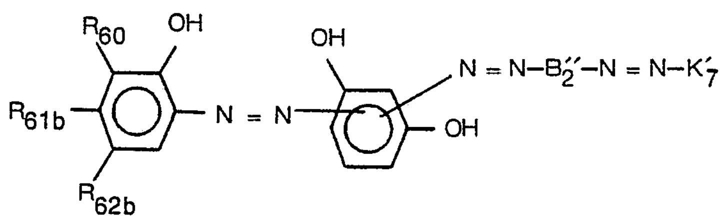 IVb

in which $R_{60}$ is above defined,

$R_{61b}$ is hydrogen,

—$NO_2$, —$CH_2$—$Z_3$, —$SO_2$—NH—$(CH_2)'_m$—$Z_3$, —CH—CO—$(CH_2)_a$ —$Z_3$ or

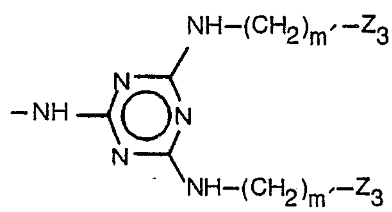 ;

$R_{62b}$ is hydrogen,

—$NO_2$, —$CH_2$—$Z_3$, —$SO_2$—$NH_2$, —$SO_2$—NH—$(CH_2)'_m$—$Z_3$, —CO—NH—$(CH_2)'_m$—$Z_3$; —NH—CO—$(CH_2)_a$ —$Z_3$ or

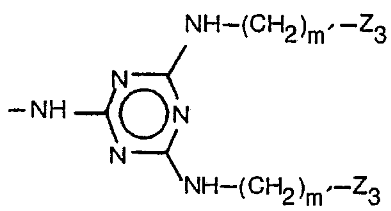 ; $B''_2$ is 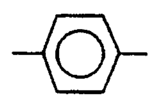 or 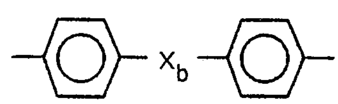

in which Xb is $X_1$, $X_{11}$, $X_{12}$, $X_{17}$, $X_{27}$, $X_{49}$, $X''_2$, $X'_{14}$, $X'_{19}$, $X''_{19}$, $X'''_{19}$, $X'_{20}$, $X''_{20}$, $X'_{32}$, $X'_{34}$ $X^{iv}_{34}$ $X^{v}_{34}$ or $X^{vi}_{34}$

$Z_3$ is $-N(CH_3)_2$ , $-\overset{\oplus}{N}(CH_3)_3\ A^{\ominus}$ , 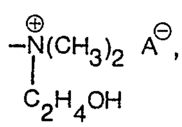 , 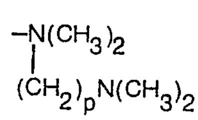

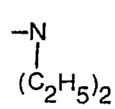 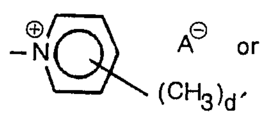 or 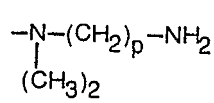 $A^{\ominus}$

m' is 2 or 3;

a is 1 or 2;

K₇' is one of the groups IVba to IVbf

IVba 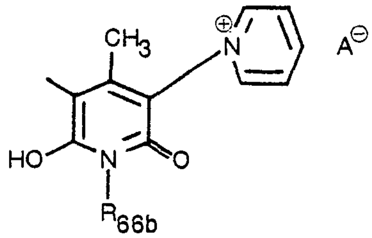

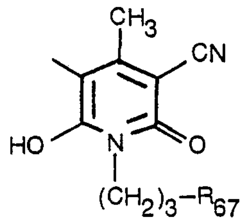 IVbb

IVbc 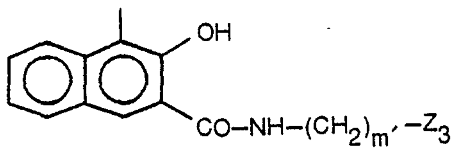

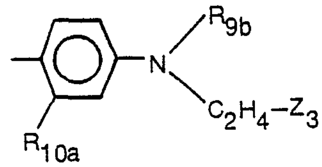 IVbd

IVbe 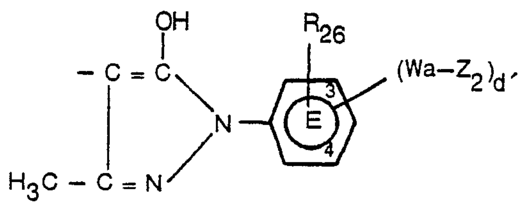

or 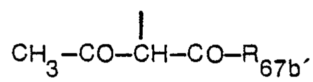 IVbf

where

$R_{9b}$ is $-CH_3$, $-C_2H_5$ or $-C_2H_4-Z_3$;

$R_{66b}$ is hydrogen, $-CH_3$, $-C_2H_5$, $-C_2H_4OH$ or $-(CH_2)_{m'}-Z_3$;

$R_{67b}$ is $-(CH_2)_{m'}-Z_3$, $-NH-(CH_2)_{m'}-Z_3$ or

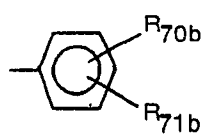

$R_{70b}$ is hydrogen,

$-OH$, $-OCH_3$, $-NH-CO-(CH_2)_a-Z_3-$, $-CO-NH-(CH_2)_{m'}-Z_3$, $-SO_2-NH-(CH_2)_{m'}-Z_3$ or

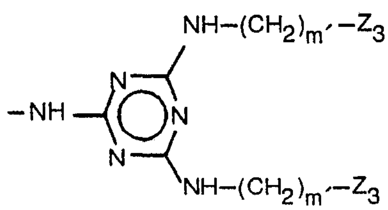 ;

$R_{71b}$ is hydrogen or $-(CH_2)_{m'}-Z_3$;

and all the other symbols are as defined above,

with the provisos that

(i) $R_{61b}$ and $R_{62b}$ cannot both be the same group unless both are hydrogen

(ii) $R_{60}$ and $R_{61b}$ are not both $NO_2$; and

(iii) $R_{60}$ is not $-NO_2$ when $R_{61b}$ and $R_{62b}$ are both hydrogen.

Alternatively preferred azo compounds of formula IV in metal-free form are of formula IVc

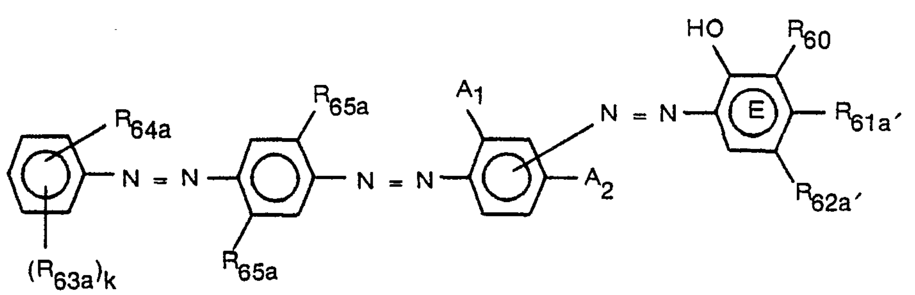 IVc

in which $R_{63a}$ is

$-SO_2-NH-(CH_2)_{m'}-Z_2$, $-CO-NH-(CH_2)_{m'}-Z_2$, $-NH-CO-(CH_2)_a-Z_2$, $-CH_2-Z_2$ or

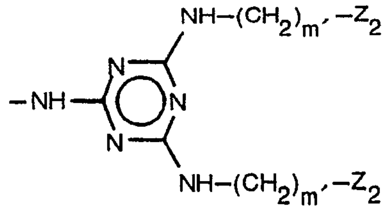

;

each

$R_{65a}$ independently, is $-CH_3$, $-C_2H_5$, $-OCH_3$ or $-OC_2H_5$;

$R_{64a}$ is hydrogen or $-OCH_3$;

k is 1 or 2, but only 2 when $R_{63a}$ is the group $-CO-NH-(CH_2)_{m'}-Z_2$;

$R'_{61a}$ is hydrogen, $-NO_2$, $-NH-CO(CH_2)_a-Z_2$ or

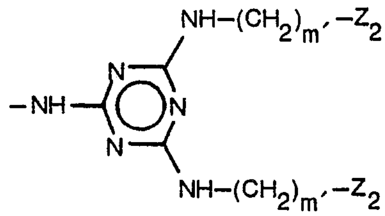

;

a is 1 or 2;

$R'_{62a}$ is hydrogen,

$-NO_2$, $-SO_2NH_2$, $-SO_2-N(CH_3)_2$, $-SO_2-N(C_2H_5)_2$, $-SO_2-NH-C_2H_4OH$, $-SO_2-NH-(CH_2)_{m'}-Z_2$,

or when $R_{60}$ and $R'_{61a}$ are hydrogen additionally

$-CO-NH-(CH_2)_a-Z_2$, $-NH-CO-(CH_2)_a-Z_2$ or

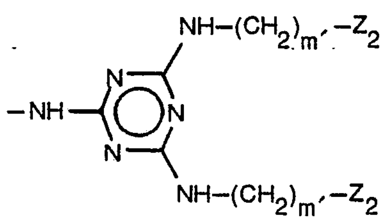

;

and all other symbols are as above defined,
with the provisos

(i) that $R_{60}$ and $R'_{61a}$ are not both $-NO_2$;

(ii) that $R'_{61a}$ and $R'_{62a}$ cannot both be the same group unless both are hydrogen; and

(iii) that $R_{60}$ is not $-NO_2$ when $R'_{61a}$ and $R'_{62a}$ are both hydrogen.

Preferred azo compounds of formula IVc are of the formula IVd

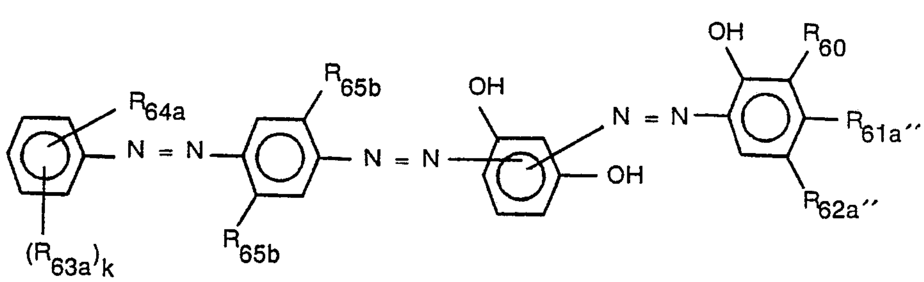

IVd

in which each

$R_{65b}$ independently, is $-CH_3$ or $-OCH_3$,

$R''_{61a}$ is hydrogen, $—NO_2$, $—NH—CO—CH_2—Z_3$ or

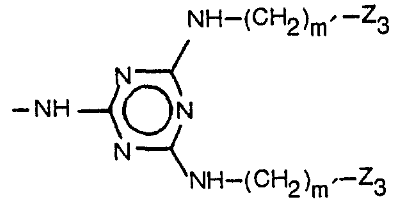

;

$R''_{62a}$ is hydrogen,

$—NO_2$, $—SO_2—NH_2$, $—SO_2—N(CH_3)_2$, $—SO_2—NH—(CH_2)_{m'}—Z_3$, $—SO_2—NH—C_2H_4OH$, or when $R_{60}$ and $R_{61}''$ are both hydrogen, $—CO—NH—(CH_2)_{m'}—Z_3$, $—NH—CO—CH_2—Z_3$ or

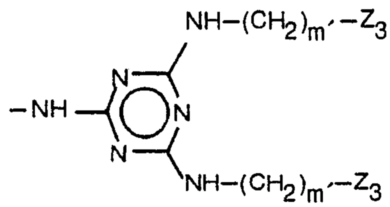

;

all the other symbols are as above defined, and the same provisos apply as to compounds of formula IVc.

Preferred azo compounds of formula IV in 1:1 metal complex form are of the formula IVe

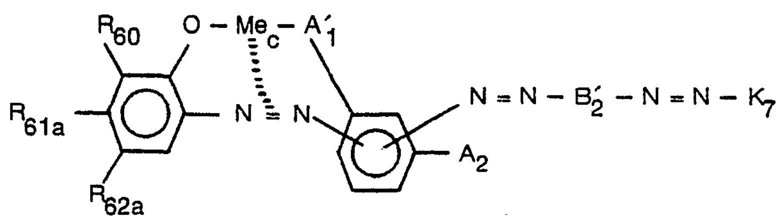

IVe

in which

$R_{60}$ and $A_2$ are defined above;
$A_1'$ is —NH—; —OOC— or —O—;
$Me_c$ is copper, cobalt or chromium;
and all other symbols are defined above,

with the provisos

i) that $R_{61a}$ and $R_{62a}$ cannot both be the same group unless both are hydrogen and
ii) that $R_{60}$ and $R_{61a}$ are not both $—NO_2$; and
iii) that $R_{60}$ is not $—NO_2$ when $R_{61a}$ and $R_{62a}$ are both hydrogen.

Most preferred azo compounds of formula IVe are of the formula IVf

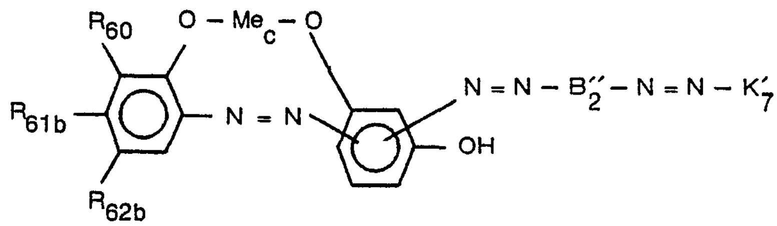

IVf

in which all the symbols are as defined above with the provisos

i) that $R_{61b}$ and $R_{62b}$ cannot both be the same group unless both are hydrogen;
ii) that $R_{60}$ and $R_{61b}$ are not both $—NO_2$; and
iii) that $R_{60}$ is not $—NO_2$ when $R_{61b}$ and $R_{62b}$ are both hydrogen.

Alternatively preferred azo compounds of formula IV in 1:1 metal complex form are of the formula IVg

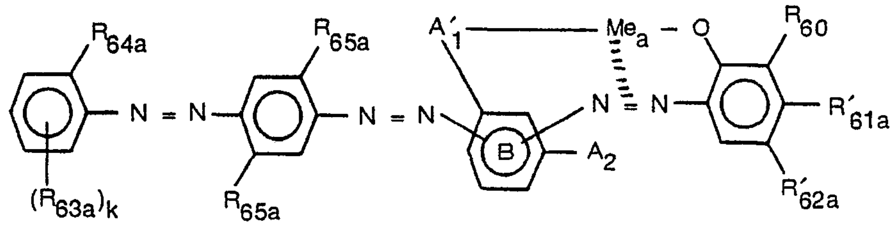

IVg

in which all the symbols are as above defined, with the provisos i) that $R_{60}$ and $R'_{61a}$ are not both $-NO_2$; ii) that $R'_{61a}$ and $R'_{62a}$ are not both the same unless both are hydrogen and iii) that $R_{60}$ is not $-NO_2$ when $R'_{61a}$ and $R'_{62a}$ are both hydrogen.

Preferred compounds of formula IVg are of the formula IVh

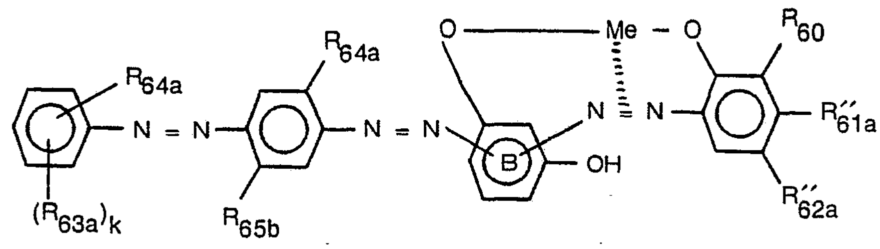

IVh

in which all the symbols are above defined.

Preferred azo compounds of formula IV in 1:2 metal complex form are of the formula IVi

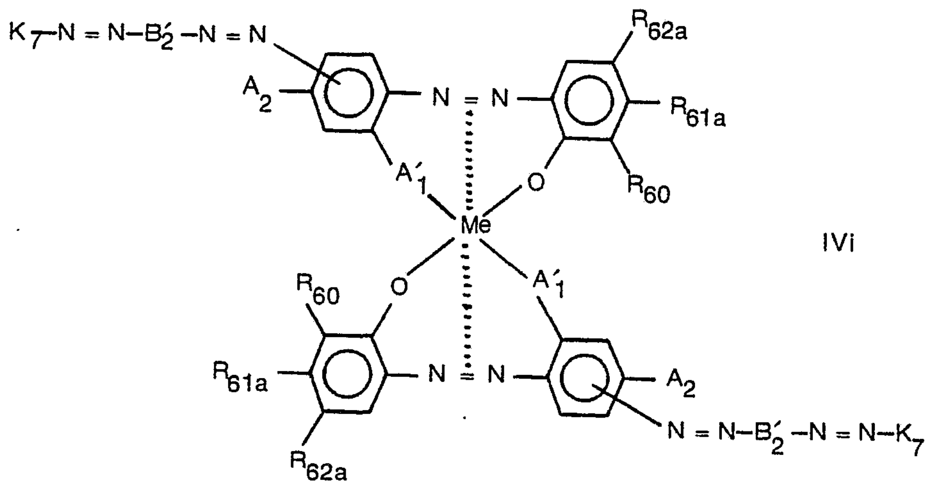

IVi

in which Me is chromium, iron or cobalt and all the other symbols are as above defined, with the provisos i) that $R_{61a}$ and $R_{62a}$ are not both the same unless both are hydrogen ii) that $R_{60}$ and $R_{61b}$ are not both $-NO_2$; and iii) that $R_{60}$ is not $-NO_2$ when $R_{61a}$ and $R_{62a}$ are both hydrogen.

Preferred azo compounds of formula IVi are of the formula IVj

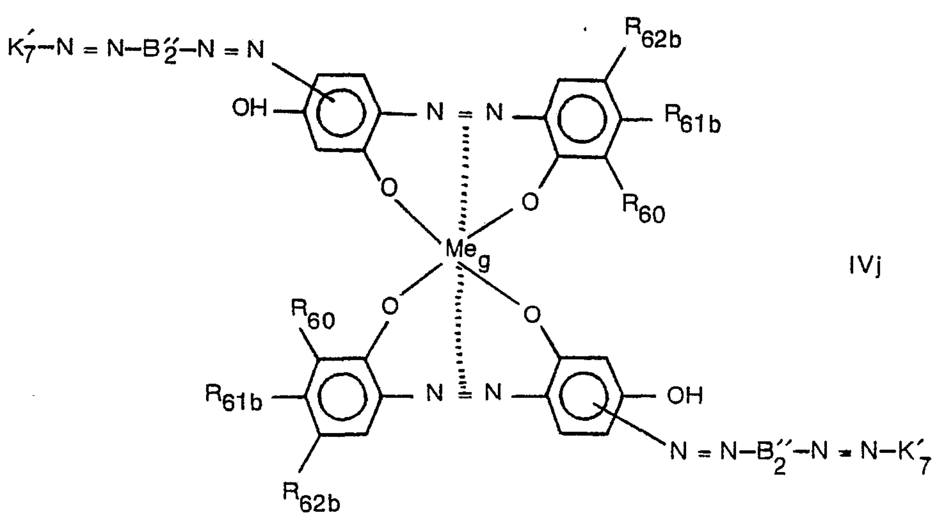

IVj

in which all the symbols are as above defined with the provisos i) that $R_{61b}$ and $R_{62b}$ are not both the same unless both are hydrogen, ii) that $R_{60}$ and $R_{61b}$ are not both $-NO_2$; and iii) that $R_{60}$ is not $-NO_2$ when $R_{61b}$ and $R_{62b}$ are both hydrogen.

Alternatively preferred compounds of formula IV in 1:2 metal complex form are of the formula IVl

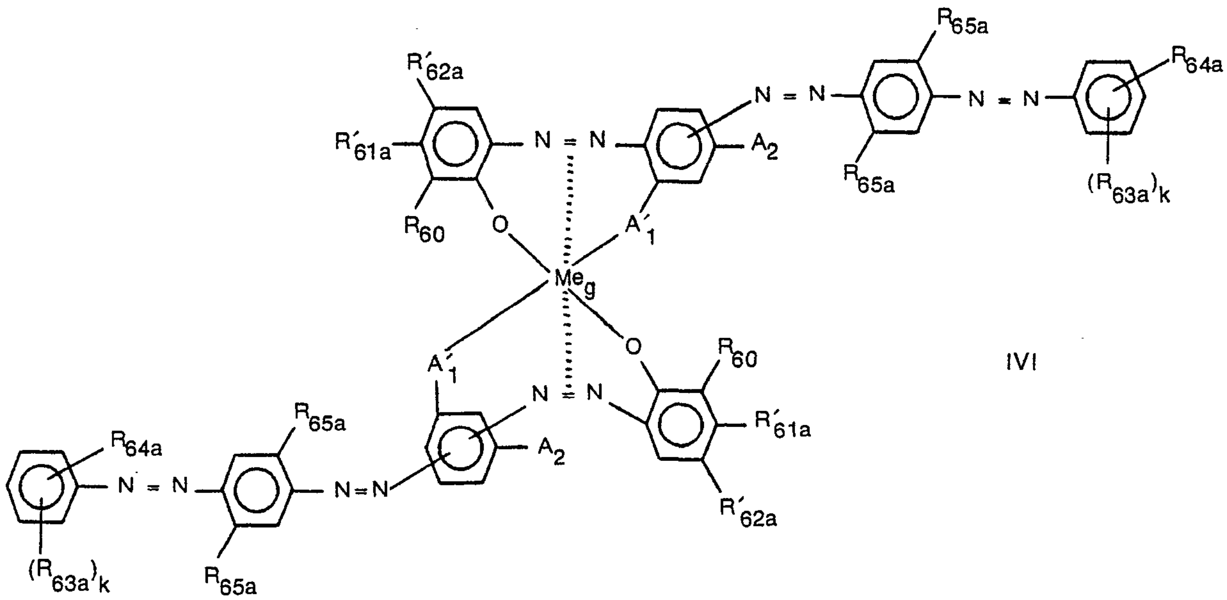

IVl

where $Me_g$ is iron or chromium and the other symbols are defined above.
in which all the symbols are above defined.

More preferred compounds of formula IVl are of the formula IVm

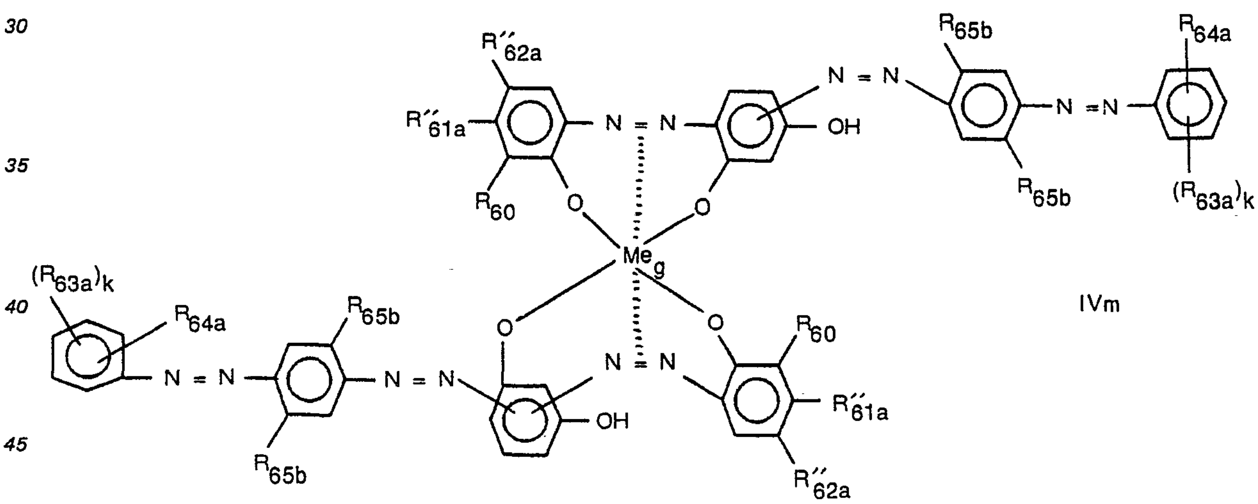

IVm

in which all the symbols are above defined.

In the azo compounds of formula I or II, X is preferably Xa defined above, more preferably Xb.

In the azo compounds of formula I, II, III or IV Z is preferably $Z_2$, more preferably $Z_3$ most preferably $Z_5$.

In the production of compounds of formula II chloromethylation of the group

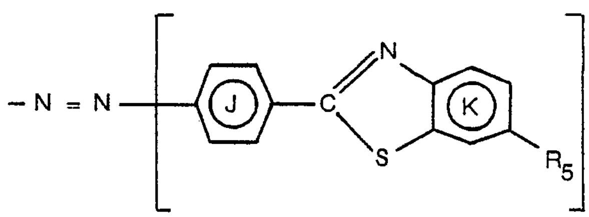

tends to give a mixture of compound rather than a single compound and accordingly the average number of basic water solubilising groups formed by subsequent reaction with amines has been found to be at least 1.3.

In formulae IIa, IIe and IIn $—D_1—Z_3$ is preferably

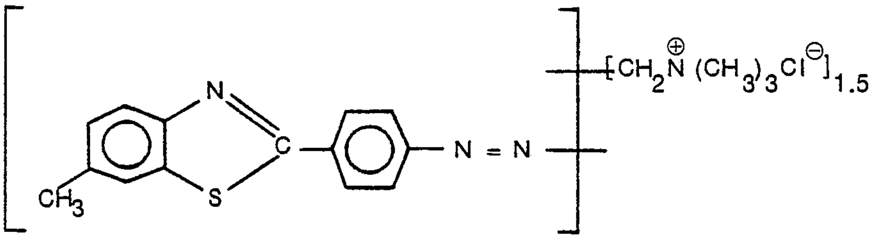

and $R_{3a}$ is preferably $R_{3b}$, more preferably $R_{3c}$, and $R_{3c}$ is preferably hydrogen, $—NO_2$, $—SO_2NH_2$, $—SO_2NH(CH_2)_3N(CH_3)_2$ or $—SO_2NHC_2H_4OH$.

Preferably in compounds of formulae IVd, IVh and IVm

$R_{63a}$ is 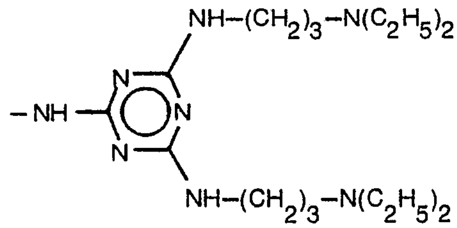 ,

and $R_{64a}$ is hydrogen.

Preferably in formula IV one of $R_{61}$ and $R_{62}$ respectively is hydrogen.

The azo compounds of formula IV in metal-free form can be prepared by known methods from known compounds.

The azo compounds of formula IV in 1:1 metal complex form may be prepared by metallising compounds of formula I in metal free form with a metal selected from copper, cobalt, iron, nickel, manganese, chromium or zinc.

The azo compounds of formula IV in 1:2 metal complex form may be prepared by metallising compounds of formula IV in metal free form with a metal selected from chromium, nickel, cobalt or iron.

A further method for the preparation of an azo compound of formula IV in 1:2 metal complex form is bonding an azo compound of formula IV in metal free form with an azo compound 1:1 metal complex form when the metal is chromium, nickel, cobalt or iron.

The metallisation process to form a 1:1 metal complex is advantageously carried out by treating 1 mole of azo compounds with a metallising agent containing 1 equivalent of metal.

Metallisation is carried out by known methods advantageously in aqueous medium or a mixture of water and a water-miscible organic solvent for example acetone, lower alkyl alcohols, dimethylformamide, formamide, glycols or acetic acid at a pH range from 1.0 to 8.0, preferably pH 2 to 7. The metallisation process may be carried out at a temperature from room temperature to the boiling point of the reaction medium.

Alternatively metallisation may be effected in a wholly organic medium (for example dimethylformamide). Advantageously for instance cobaltisation may be carried out in the presence of an inorganic nitrite such as lithium, sodium, ammonium or potassium nitrite in the ratio of 2 to 6 moles of nitrite per gram atom of cobalt.

Suitable cobalt-yielding compounds are for example cobalt (II) or Co (III) sulphate, acetate, formate or chloride.

Copper-yielding compounds are for example cupric sulphate, cupric formate, cupric acetate or cupric chloride.

The nickel-yielding compounds are Ni (II) or Ni (III) compounds, such as nickel formate, nickel acetate or nickel sulphate.

Preferred manganese yielding compounds are Mn (II) compounds and iron yielding compounds are Fe (II) or Fe (III) compounds. Examples of these and zinc-yielding compounds are manganese-, iron- or zinc formate, acetate or sulphate.

Preferred chromium yielding compounds are Cr (ii) or Cr (III) formate, acetate or sulphate.

The starting compounds of formula γ and δ are for the most part known or can be prepared according to known methods.

The coupling can be carried out according to known methods. Advantageously coupling is carried out in aqueous, acid, neutral or alkali medium at a temperature from −10°C to room temperature, if necessary in the presence of a coupling accelerator such as pyridine or urea. Alternatively, coupling may be effected in a mixture of solvents for example water and an organic solvent.

In the compounds of the invention the anion $A^{\ominus}$ can be any non-chromophoric anion conventional in basic dyestuff chemistry. Suitable anions include such as chloride and bromide, sulphate, bisulphate,

methylsulphate, aminosulphonate, perchlorate, benzosulphonate, oxalate, maleinate, acetate, propionate, lactate, succinate, tartrate, malate, methanesulphonate and benzoate, as well as complex anions for example zinc chloride double salts and anions of boric acid, citric acid, glycollic acid, diglycollic acid and adipic acid or of addition products of orthoboric acid with polyalcohols with at least an cis diol group present. These anions can be exchanged for each other by ion exchange resins or by reaction with acids or salts (for example via the hydroxide or bicarbonate or according to German Offenlegungsschrift 2 001 748 or 2 001 816).

The compounds according to the invention are suitably worked up into a solid or liquid preparation for example by granulation or by dissolving in a suitable solvent. The compounds of the invention are suitable for dyeing, padding or printing on fibres, threads or textile materials particularly natural or regenerated cellulose materials for example cotton, synthetic polyamides or synthetic polyesters in which the acid groups have been modified. Such polyamide is described in Belgian Patent 706,104 and such synthetic polyester is described in US Patent 3 379 723.

The new compounds are also used for dyeing, padding or printing fibres, threads or textiles produced therefrom, which consist of or contain homo-or mixed polymers of acrylonitrile or of asymmetrical dicyanoethylene.

The textile material is dyed, printed or pad-dyed in accordance with known methods. Acid modified-polyamide is dyed particularly advantageously in an aqueous, neutral or acid medium, at temperatures of 60°C to boiling point or at temperatures of above 100°C under pressure.

The textile material may also be dyed by the compounds of formula IV in organic solvents, e.g. in accordance with the directions given in German DOS 2 437 549.

Cellulose material is mainly dyed by the exhaust process, e.g. from a long or short bath, at room temperature to boiling temperature, optionally under pressure, whereby the ratio of the bath is from 1:1 to 1:100, and preferably from 1:20 to 1:50. If dyeing is effected from a short bath, then the liquor ratio is 1:5 to 1:15, and the pH value of the dye baths varies between 3 and 10. Dyeing preferably takes place in the presence of electrolytes.

Printing may be effected by impregnation with a printing paste produced by known methods.

The dyestuffs are also suitable for dyeing or printing paper, e.g. for the production of bulk-dyed, sized and unsized paper. The dyestuffs may similarly be used for dyeing paper by the dipping process. The dyeing of paper is effected by known methods.

The new dyestuffs are also suitable for dyeing or printing leather by known methods. Dyeings with good fastness are obtained both on paper and on leather.

Dyeings made from the new compounds on leather have good light fastness properties, good diffusion properties with PVC, good water-, wash- and sweat properties, good fastness to dry cleaning, good fastness to drops of water, good fastness to hard water.

Dyeings made from the new compounds on paper have good build-up, good light fastness, good fastness to water, milk, fruit juice, sweetened mineral water and alcoholic drinks, good fastness to 1% sodium chloride, washing powder solution, good sulphite reductive or oxidative (with hypochlorite) clearance and good fastness to hard water. Dyeings made from mixtures of the new dyestuffs remain tone-in-tone and the nuance stability of dyeings made from the dyestuffs is good.

Further the dyestuffs of the invention do not run after dyeing on paper nor on the whole are they pH sensitive.

The new compounds may be converted into dyeing preparations. The processing into stable, liquid or solid dyeing preparations may take place in a generally known manner. Advantageously by grinding or granulating, or by dissolving in suitable solvents, optionally adding an assistant, e.g. a stabiliser or dissolving intermediary, such as urea. Such preparations may be obtained for example as described in French Patent Specifications 1.572.030 and 1.581.900 or in accordance with German DOS 2.001.748 and 2.001.816.

Liquid preparations of the compounds of formula IV preferably comprise 10—30% by weight of a compound of formula IV and to 30% of a solubilising agent such as urea, lactic acid or acetic acid the rest of the composition being water. Solid preparations preferably comprising 20—80% dyestuff, 80—20% solubilising agent such as urea or $Na_2So_4$ and 2—5% water.

In the following examples all parts and percentages given are by weight and the temperatures given are in degrees centigrade unless indicated to the contrary.

Example 1

a) 27.3 Parts (0.1 mole) of 1-hydroxy-2-aminobenzol-4-sulphonic acid dimethylaminopropylamide is diazotised at 0—5° in 150 parts of water, 32 parts of 30% hydrochloric acid with 6.9 parts (0.1 mole) sodium nitrite (according to known methods). Over an hour the darkly coloured diazonium solution is added, dropwise, to 18.9 parts (0.1 mole) 4-aminophenyl-3-methyl pyrazolone dissolved in 105 parts of water and

25 parts of 30% hydrochloric acid. The mixture is slowly brought to a pH of 4.0 by the addition of 30% sodium hydroxide. The dyestuff so produced is of the formula a)

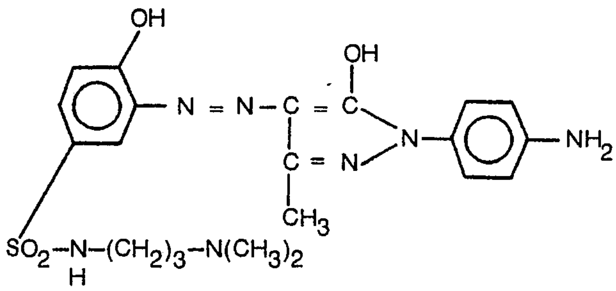

a)

which produces dyeings of a yellow shade.

b) A strongly acid solution of the monoazo dyestuff is made up with a 30% solution of hydrochloric acid and is then diazotised with 6.9 parts of sodium nitrite according to known methods. Over a period of 15 minutes the solution is added, dropwise, to 32.4 parts (0.1 mole) of 6-hydroxy-4-methyl-1-dimethyl-aminopropyl-pyridonyl-(3)-pyridinium chloride dissolved in 250 parts of water.

The pH of the solution is then brought to 6.5 using a sodium hydroxide solution and the reaction mixture concentrated by evaporation under vacuum. The resultant dyestuff is of formula b)

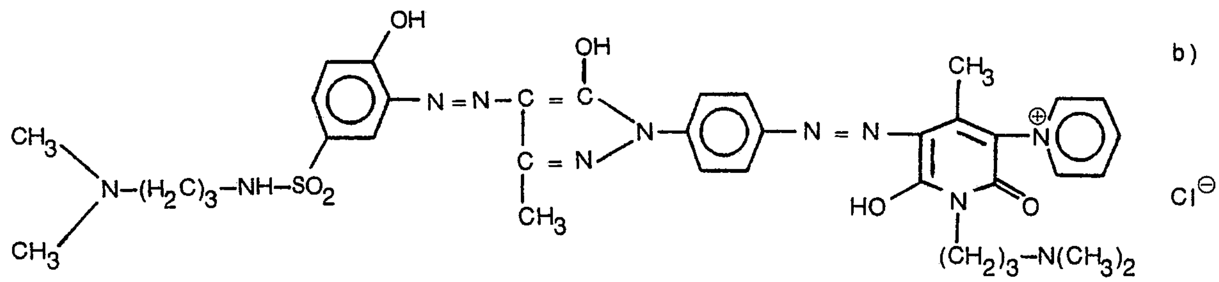

b)

which dyes leather a red/orange colour.

c) 40.4 Parts (1/20 mole) of the dyestuff b) above is dissolved in 200 parts of water at 65°C and the solution is made up with 8 parts of sodium acetate. A solution of 12.5 parts of copper sulfate in water is added, dropwise, to the solution and the resulting solution has a pH of 4.5 to 5. After 30 minutes stirring at 60°C the reaction mixture is concentrated by evaporation under vacuum. A 1:1 copper complex of formula c)

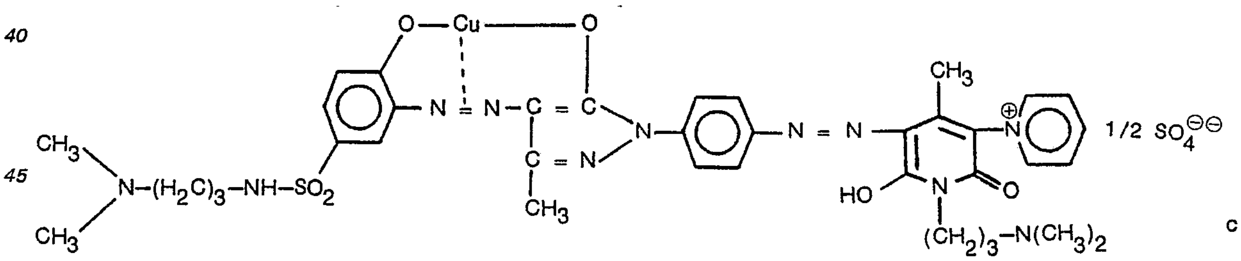

c)

is produced which dyes leather a red-brown tone and has good fastness properties.

Example 2

103.2 Parts (0.15 mole) of a dyestuff of formula d)

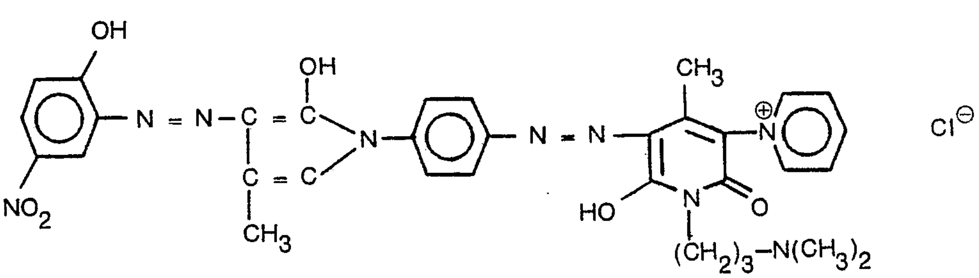

d)

and 82.7 parts of $KCr(SO_4)_2$ $12H_2O$ are autoclaved with 1500 parts of water. The mixture is brought to a pH

of 2 by the addition of sulphuric acid. The mixture is heated for 2 hours at a temperature of 130°C and the 1:1 chromium complex is formed under pressure. The so-formed complex dyes leather a brown shade and has good fastness properties.

Example 3

7 Parts of $CoSO_4\ 7H_2O$ (1/40 mole) and 10.5 parts of sodium nitrite are dissolved in 250 parts of water. At a temperature of 10°C, 17.2 parts (1/40 mole) of the dyestuff of formula d) above is added to the solution. To improve the solubility of the dyestuff 50 parts of dimethylformamide is added to the reaction mixture. The pH of the reaction solution is brought to 5.0—5.5 by the addition of hydrochloric acid. After about 3 hours cobaltisation is substantially completed and a 1:1 cobalt complex of the compound of formula d) above is formed and is isolated using acetone.

Example 4

40.4 Parts (1/20 mole) of the dyestuff of formula b) [of Example 1] is dissolved in 500 parts of water. The solution is heated to 60°C and 35 parts of sodium acetate and 12.5 parts (1/40 mole) of $KCr(SO_4)_2\ 12H_2O$ is added to the solution. The pH of the reaction mixture is about 4.5. The temperature of the reaction mixture is raised to 90—95°C and after 1 hour metalisation is substantially completed. The reaction mixture is cooled to 20°C and the product is isolated in acetone after which the product is filtered and dried. The product is a dyestuff of the formula e)

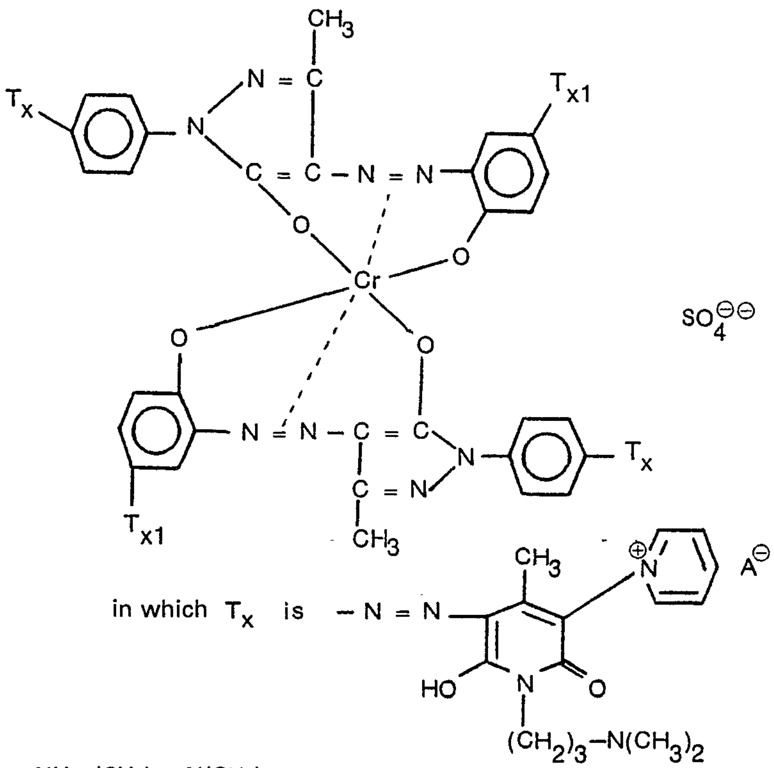

$SO_4^{\ominus\ominus}$ e)

in which $T_x$ is

and $T_{x1}$ is $—SO_2—NH—(CH_2)_3—N(CH_3)_2$

The dyestuff dyes leather a red brown colour with good fastness properties.

By substituting 7 parts cobalt sulphate (1/40 mole) or 6.8 parts of $FeCl_3\ 6H_2O$ (1/40 mole) for 12.5 parts of $KCr(SO_4)_2\ 12H_2O$ the corresponding 1:1 cobalt and iron complexes respectively can be produced.

Example 5

According to the method of Example 1a) and 1b) and with subsequent cobaltisation (with cobalt sulphate) a compound of formula f) is produced

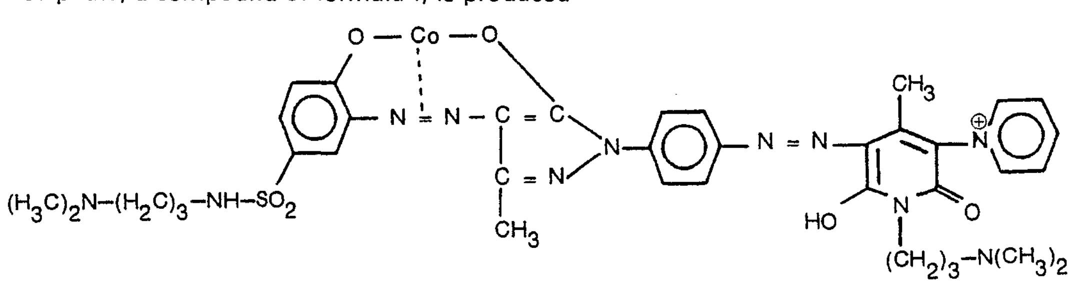

$Cl^{\ominus}$ f)

8.3 parts of the above dyestuff f) in 150 parts of water is heated to 85°C. 8 Parts of a dyestuff of the formula g)(1/10 mole)

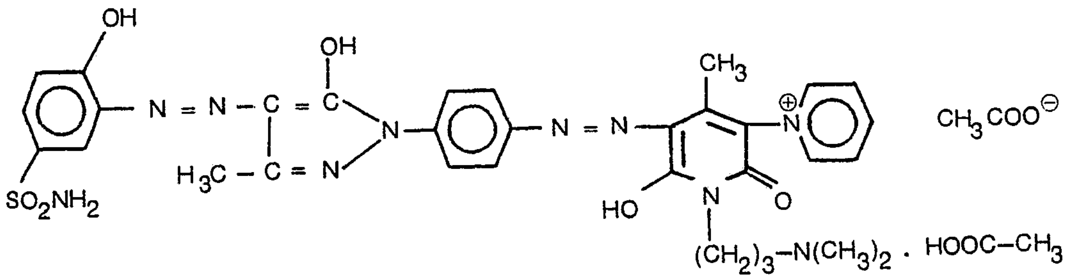

g)

is added gradually. The pH of the reaction is held at 9 by the addition of aqueous sodium hydroxide solution. After 3 hours an asymmetric 1:2 cobalt complex dyestuff of formula h)

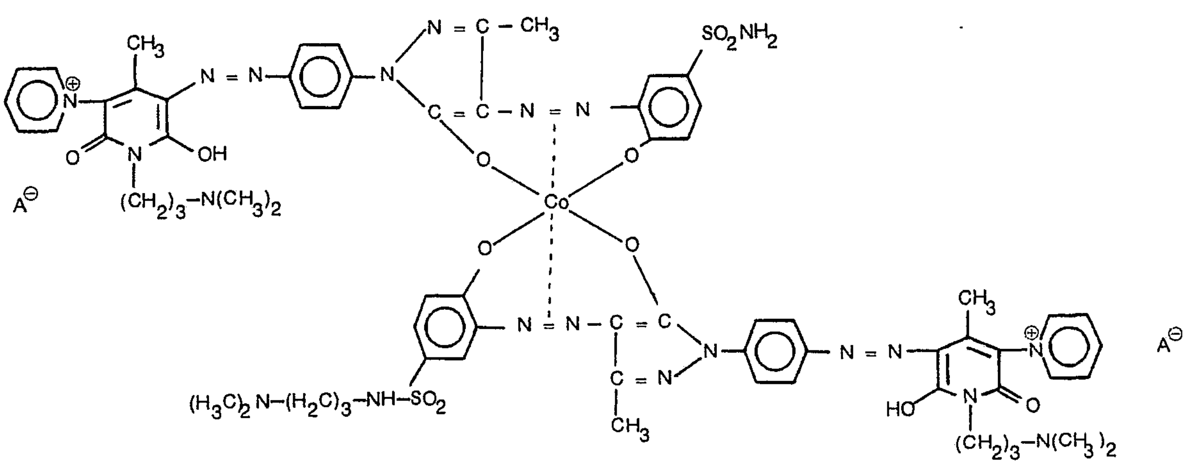

h)

is produced which is isolated in acetone, washed and vacuum dried. This dyestuff of formula h) dyes leather a red brown colour.

Example 6

a) 15.4 Parts (1/10 mole) of 1-hydroxy-2-amino-4-nitrobenzol are coupled with 11 parts of resorcinol to give a compound of the formula VIa

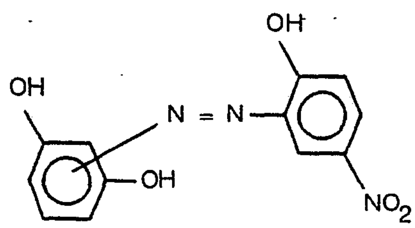

VIa

b) 24 Parts (1/10 mole) of 2(4'-aminophenyl)-6-methylbenzthiazole was chloromethylated according to the method of German Offenlegungsschrift No. 1 965 993 and then quaternised with 50 parts of a solution of trimethylamine in water at 40—45°. The resulting trimethylammonium compound is dissolved at 0—10° in dilute hydrochloric acid solution and is diazotised with 6.9 parts of sodium nitrite and the dyestuff suspension of the compound of formula VIa is dropwise added. A compound of the formula VIb

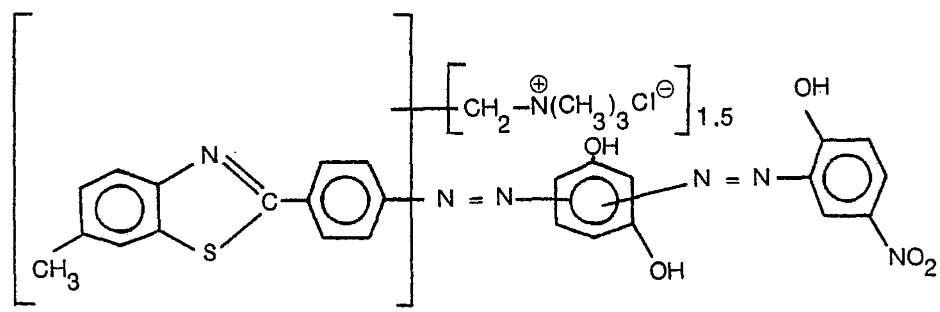

VIb

results.

c) 15.4 Parts (1/10 mole) of the dyestuff of formula b) is dissolved in 500 parts of formamide. The solution is warmed to 60° to give a solution of 35 parts sodium acetate and 35 parts of $KCr(SO_4)_2\ 12H_2O$ is added and

the temperature is raised to 90—95°C. After about 60 minutes metallisation is ended. The reaction mixture is cooled to 20° and is precipitated in acetone to give a 1:2 chromium complex of the formula VIc

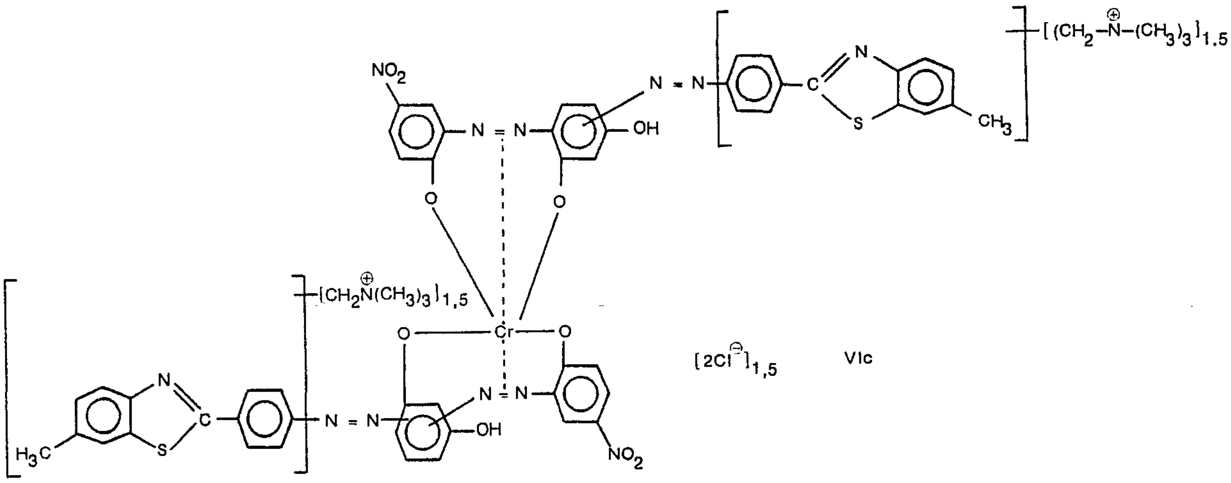

VIc

In the following Examples

Za is $-\overset{\oplus}{N}(CH_3)_3$ $A^{\ominus}$    Zb is $-\overset{\oplus}{N}(C_2H_5)_3$ $A^{\ominus}$

Zc is 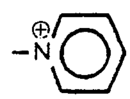 $A^{\ominus}$    Zd is 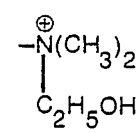 $A^{\ominus}$

Ze is 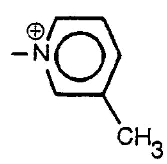 $A^{\ominus}$ ;    Zf is 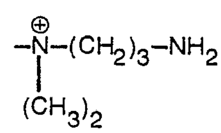 $A^{\ominus}$ ;

Zg is 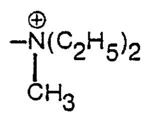 $A^{\ominus}$ ;    R300 is 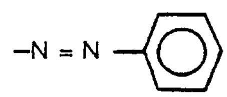 ;

R301 is 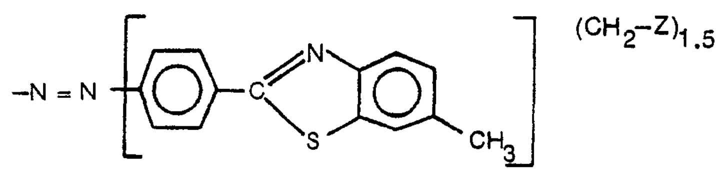 ;

R302 is 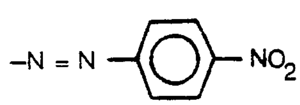 ;

R303 is 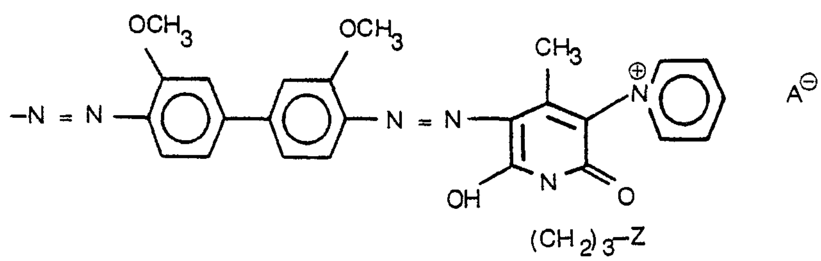 ;

R304 is 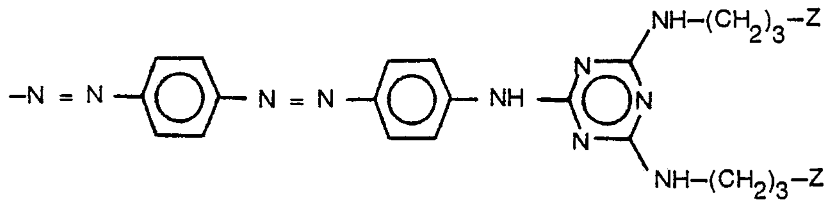 ;

R305 is 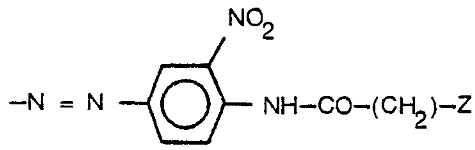 ;

R306 is 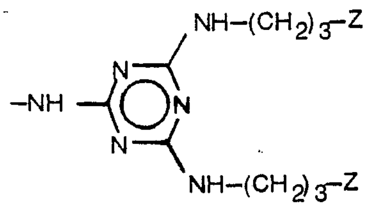 ;

R307 is 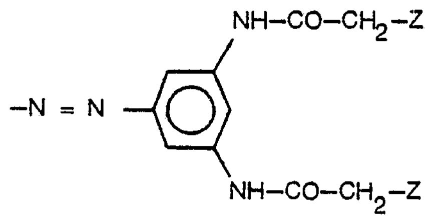 ;

R308 is 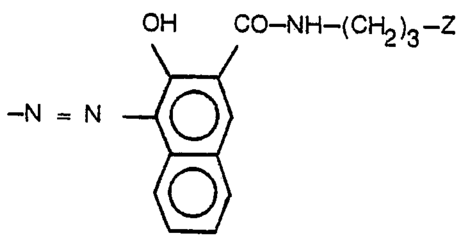 ;

R309 is 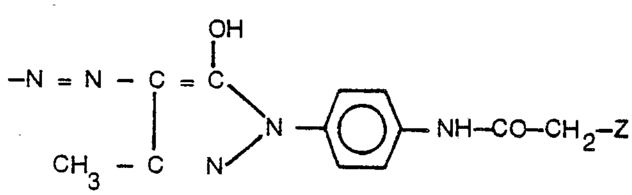 ;

R310 is 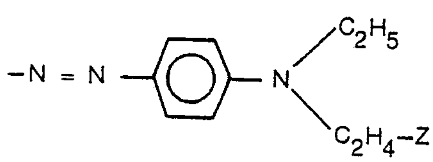 ;

R311 is 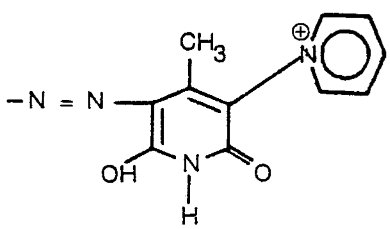

R312 is $-NH-CO-(CH_2)-Z$ ;

R313 is $-SO_2-NH-(CH_2)_3-Z$ ;

R314 is 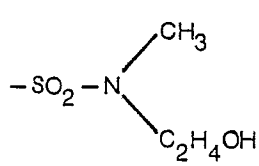 ;

Examples 7 — 16

The following Examples are compounds of the formula

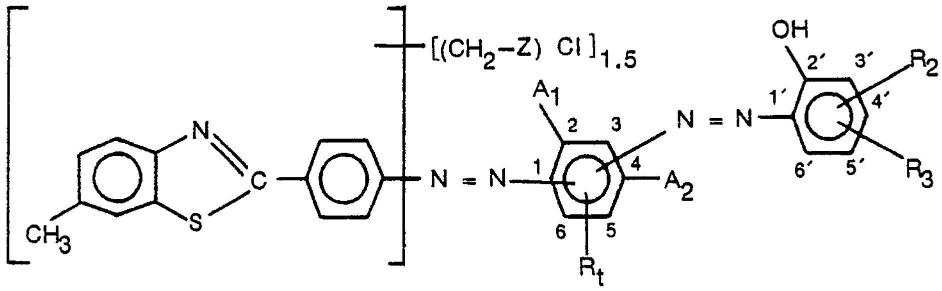

or in 1:1 metal complex or 1:2 metal complex form. These compounds can be prepared according to the method of Example 6 with suitable choice of starting materials. Each Z referred to in a specific Example has the same significance in that Example whenever it appears. Each Z referred to in a specific Example has the same significance in that Example wherever it appears.

| Ex. No. | Rt | $R_3$ | position of $R_3$ | $R_2$ | position of $R_2$ | Z | $A_1$ | $A_2$ | metal complex |
|---|---|---|---|---|---|---|---|---|---|
| 7 | H | $No_2$ | 3'- | $NO_2$ | 5'- | Zb | OH | OH | — |
| 8 | R300 | R306 | 5'- | H | — | Za | $NH_2$ | $NH_2$ | 1:1 Cu |
| 9 | R301 | R301 | 5'- | H | 4'- | Zd | $NH_2$ | OH | 1:2 Co |
| 10 | R302 | R308 | 5'- | H | — | Ze | OH | $NH_2$ | — |
| 11 | R303 | R309 | 5'- | do. | — | Zf | OH | OH | 1:1 Cu |
| 12 | R304 | R310 | 4'- | H | 5'- | Zg | OH | OH | 1:2 Fe |
| 13 | R305 | R311 | 3'- | $SO_2NH_2$ | 5'- | Zb | OH | $NH_2$ | — |
| 14 | R300 | R312 | 3'- | R314 | 5'- | Za | $NH_2$ | OH | 1:1 Cu |
| 15 | H | R313 | 5'- | R316 | 4'- | Zc | OH | $NH_2$ | 1:2 Fe |
| 16 | H | H | 5'- | $SO_2N(CH_3)_2$ | 5'- | Zd | OH | OH | — |

Examples 17 — 43

The following Examples are of compounds of the formula

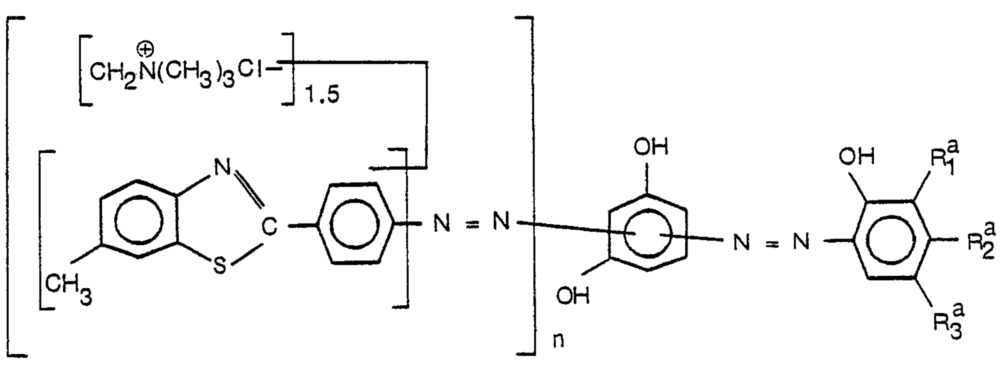

and in 1:1 metal complex and 1:2 metal complex form.

| Example No. | n | $R_1^a$ | $R_2^a$ | $R_3^a$ | metal complex |
|---|---|---|---|---|---|
| 17 | 1 | H | $NO_2$ | H | – |
| 18 | 1 | H | $NO_2$ | H | 1:1 cu |
| 19 | 1 | H | $NO_2$ | H | 1:2 Cr |
| 20 | 1 | H | $NO_2$ | H | 1:2 Co |
| 21 | 1 | H | H | $NO_2$ | 1:1 Cu |
| 22 | 1 | H | H | $SO_2NH_2$ | — |
| 23 | 1 | H | H | H | — |
| 24 | 1 | H | H | H | 1:1 Cu |
| 25 | 1 | H | H | H | 1:2 Cr |
| 26 | 1 | $NO_2$ | H | $NO_2$ | — |
| 27 | 1 | $NO_2$ | H | $NO_2$ | 1:1 Cu |
| 28 | 1 | $NO_2$ | H | $NO_2$ | 1:2 Cr |
| 29 | 1 | H | H | $SO_2NH_2$ | 1:1 Cu |
| 30 | 1 | H | H | $SO_2NH_2$ | 1:2 Cr |
| 31 | 1 | H | H | $SO_2NH_2$ | 1:2 Co |
| 32 | 2 | H | $NO_2$ | H | 1:1 Cu |
| 33 | 2 | H | $NO_2$ | H | 1:2 Fe |
| 34 | 2 | H | H | $NO_2$ | — |
| 35 | 2 | $NO_2$ | H | $NO_2$ | 1:1 Cu |
| 36 | 2 | $NO_2$ | H | $NO_2$ | 1:2 Cr |
| 37 | 2 | $NO_2$ | H | $NO_2$ | 1:2 Co |
| 38 | 2 | $NO_2$ | H | $NO_2$ | 1:2 Fe |
| 39 | 1 | H | H | 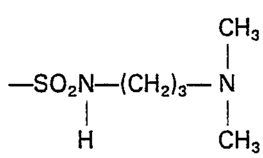 | — |
| 40 | 1 | H | H | do. | 1:1 Cu |
| 41 | 1 | H | H | do. | 1:2 Co |
| 42 | 1 | H | H | 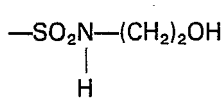 | — |
| 43 | 1 | H | H | do. | 1:1 Cu |

Example 44 to 58

The following Examples are compounds of the formula

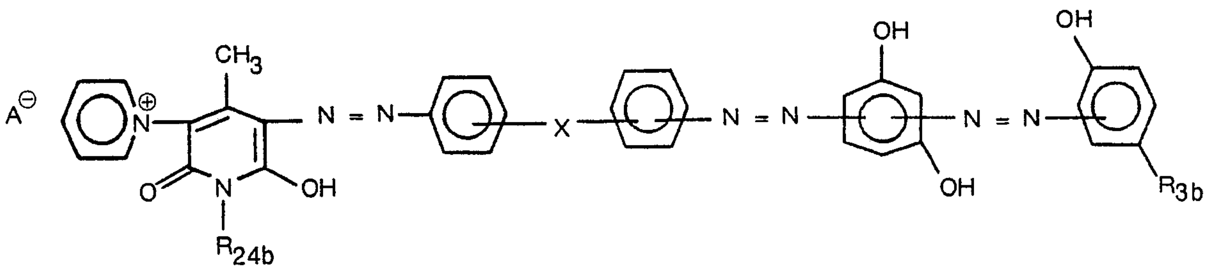

and can be prepared following the method of Example 1 (and Example 5 where 1:2 metallisation has been carried out), with suitable choice of starting materials.

In these Examples

$R_{317}$ is 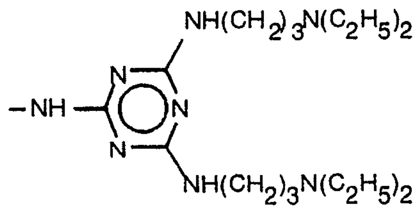

$R_{400}$ is $-SO_2-NH-(CH_2)_3-N(CH_3)_2$

| Example No. | $R_{24b}$ | X | $R_{3b}$ | metal complex |
|---|---|---|---|---|
| 44 | $-(CH_2)_3N(CH_3)_2$ | 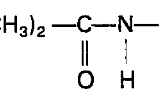 | $R_{317}$ | — |
| 45 | " | " | " | 1:1 Cu |
| 46 | " | " | " | 1.2 Cr |
| 47 | H | " | " | 1:2 Fe |
| 48 | H | " | " | 1:1 Cu |
| 49 | " | " | " | 1:2 Cr |
| 50 | $-(CH_2)_3N(CH_3)_2$ | " | $R_{400}$ | — |
| 51 | H | $-SO_2NH-$ | $R_{317}$ | — |
| 52 | " | " | " | 1:1 Cu |
| 53 | " | " | " | 1:2 Fe |
| 54 | $-(CH_2)_3N(CH_3)_2$ | " | " | — |
| 55 | " | " | " | 1:1 Cu |
| 56 | " | " | $R_{400}$ | — |
| 57 | " | " | " | 1:1 Cu |
| 58 | " | " | " | 1:2 Fe |

Examples 59 to 72

The following Examples are compounds of the formula

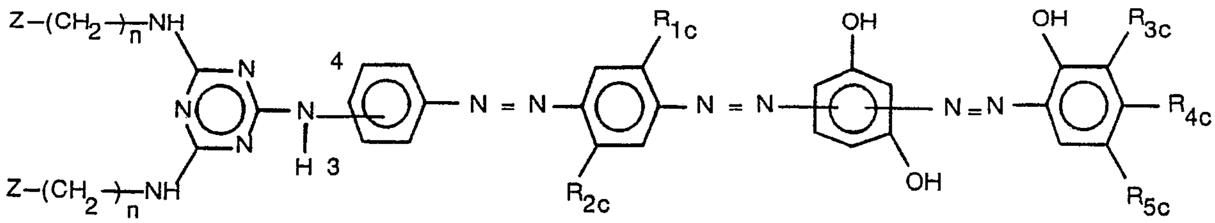

which can be made according to Example 1 and where 1:2 metallisation is necessary according to Example 5 using a suitable choice of starting materials. $Z_A$ is $N(C_2H_5)_2$ and $Z_B$ is $N(CH_3)_2$.

| Ex. No. | Z | position | $R_{1c}$ | $R_{2c}$ | $R_{3c}$ | $R_{4c}$ | $R_{5c}$ | metal complex | n |
|---|---|---|---|---|---|---|---|---|---|
| 59 | $Z_B$ | 4 | $OCH_3$ | $OCH_3$ | H | H | $NO_2$ | — | 2,3 |
| 60 | $Z_A$ | 4 | " | " | " | " | " | 1:1 Cu | 2,3 |
| 61 | $Z_A$ | 4 | " | " | " | " | " | 1:2 Cr | 2,3 |
| 62 | $Z_B$ | 4 | $CH_3$ | $CH_3$ | " | " | " | — | 2,3 |
| 63 | $Z_A$ | 4 | " | " | " | " | " | 1:1 Cu | 2,3 |
| 64 | $Z_A$ | 4 | " | " | " | " | " | 1:2 Co | 2,3 |
| 65 | $Z_B$ | 4 | $OCH_3$ | " | " | " | " | 1:1 Cu | 2,3 |
| 66 | $Z_A$ | 3 | $CH_3$ | " | $NO_2$ | " | $NO_2$ | — | 2,3 |
| 67 | $Z_B$ | 3 | " | " | " | " | " | 1:1 Cu | 2,3 |
| 68 | $Z_A$ | 3 | " | " | " | " | " | 1:2 Cr | 2,3 |
| 69 | $Z_B$ | 4 | " | " | H | " | $—SO_2NH_2$ | — | 2,3 |
| 70 | $Z_B$ | 4 | $OCH_3$ | $OCH_3$ | $NO_2$ | " | $NO_2$ | — | 2,3 |
| 71 | $Z_A$ | 4 | " | " | " | " | " | 1:1 Cu | 2,3 |
| 72 | $Z_A$ | 4 | " | " | " | " | " | 1:2 Cr | 2,3 |

In the following Examples

$K_{10}$ is 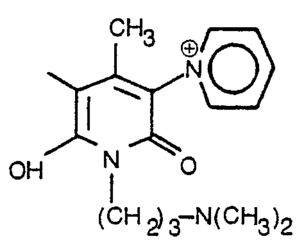 $A^{\ominus}$ ;

$K_{11}$ is 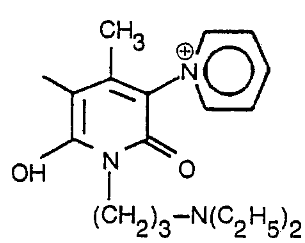 $A^{\ominus}$ ;

$K_{12}$ is 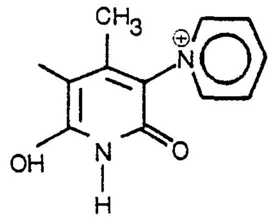 $A^{\ominus}$ ;

$K_{13}$ is 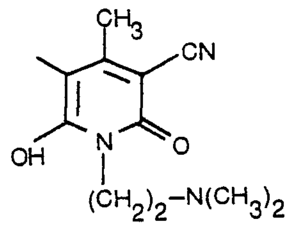 ;

$K_{14}$ is 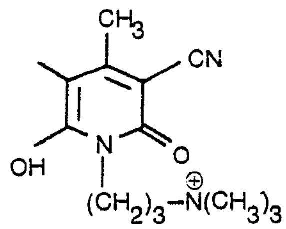 $A^{\ominus}$ ;

$K_{15}$ is 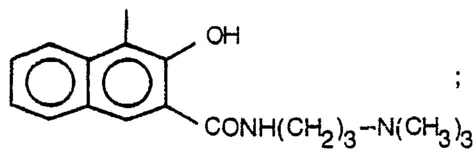 ;

$K_{16}$ is 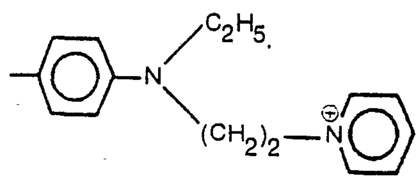 $A^{\ominus}$ ;

$K_{17}$ is 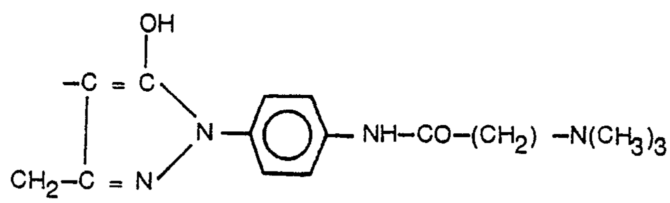 $A^{\ominus}$ ;

$K_{18}$ is 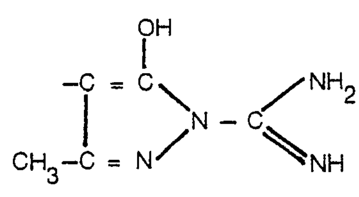 ;

$K_{19}$ is $CH_3-CO-\overset{|}{C}H-CO-NH-CH_2-\overset{\oplus}{N}-(CH_3)_3\ A^{\ominus}$;

$K_{20}$ is 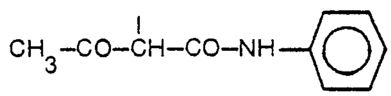 ;

$R_{317}$ is 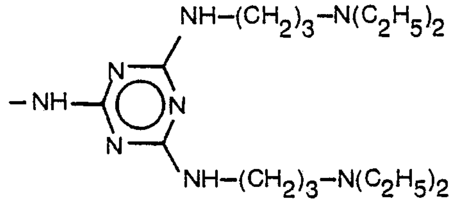 ;

$R_{318}$ is $-SO_2-NH-(CH_2)_3-\overset{\oplus}{N}(C_2H_5)_3\ A^{\ominus}$;

$R_{319}$ is $-CO-NH-(CH_2)_3-\overset{\oplus}{N}(CH_3)_3\ A^{\ominus}$

$R_{320}$ is 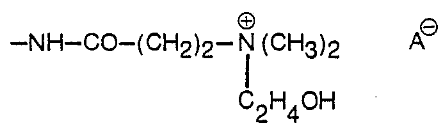

$R_{321}$ is 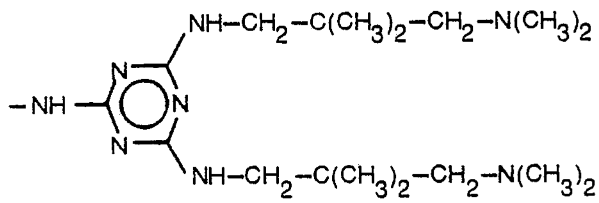 ;

$R_{322}$ is $-CH_2\ N(CH_3)_3\ A^{\ominus}$ ;

$R_{323}$ is $-NH-CO-(CH_2)\ -N(CH_3)_2$ ;

Examples 73 to 83

The following Examples are compounds of the formula III

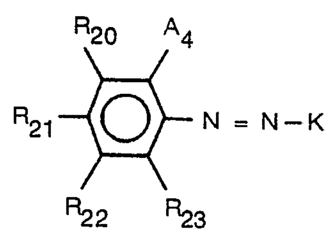

III

| Example No. | $R_{20}$ | $R_{21}$ | $R_{22}$ | $R_{23}$ | K | metal complex | $A_4$ |
|---|---|---|---|---|---|---|---|
| 73 | H | H | H | H | $K_{10}$ | — | OH |
| 74 | $NO_2$ | H | $SO_2NH_2$ | H | $K_{11}$ | 1:1 Cu | OH |
| 75 | H | $R_{317}$ | H | H | $K_{12}$ | 1:2 Co | $OCH_3$ |
| 76 | H | $R_{318}$ | H | H | $K_{13}$ | — | COOH |
| 77 | H | $R_{319}$ | $R_{320}$ | H | $K_{14}$ | 1:1 Cu | OH |
| 78 | H | $R_{320}$ | $R_{319}$ | H | $K_{15}$ | 1:2 Fe | OH |

| Example No. | $R_{20}$ | $R_{21}$ | $R_{22}$ | $R_{23}$ | K | metal complex | $A_4$ |
|---|---|---|---|---|---|---|---|
| 79 | H | $R_{321}$ | H | H | $K_{16}$ | — | OH |
| 80 | H | H | $R_{321}$ | H | $K_{17}$ | 1:1 Cu | OH |
| 81 | H | $R_{322}$ | H | $-CH_3$ | $K_{18}$ | — | OH |
| 82 | H | $R_{329}$ | H | H | $K_{19}$ | 1:1 Cu | OH |
| 83 | H | H | $R_{320}$ | H | $K_{20}$ | 1:2 Cr | OH |

Examples 84 to 104

The following Examples are compounds of the formula

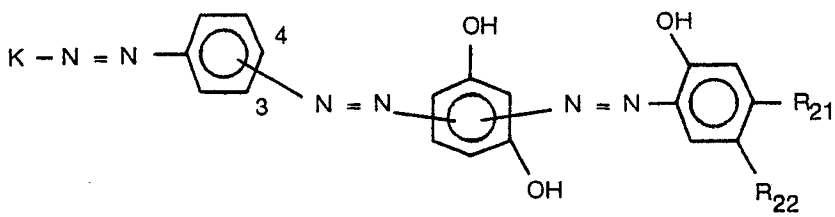

which may be prepared by following the method of Example 1 (and where 1:2 metallisation is carried out Example 5) with suitable choice of starting material.

| Example No. | K | position of N=N bridge in ring C | $R_{21}$ | $R_{22}$ | metal complex |
|---|---|---|---|---|---|
| 84 | $K_{12}$ | 4 | H | $R_{317}$ | — |
| 85 | $K_{12}$ | 4 | H | $R_{317}$ | 1:1 Cu |
| 86 | $K_{12}$ | 4 | H | $R_{318}$ | — |
| 87 | $K_{12}$ | 4 | H | $R_{318}$ | 1:1 Cu |
| 88 | $K_{10}$ | 4 | H | $NO_2$ | 1:2 Cr |
| 89 | $K_{10}$ | 4 | H | $NO_2$ | 1:2 Cr |
| 90 | $K_{10}$ | 4 | $NO_2$ | H | 1:2 Co |
| 91 | $K_{10}$ | 4 | H | $-SO_2NH_2$ | 1:1 Cu |
| 92 | $K_{10}$ | 3 | H | $NO_2$ | 1:2 Fe |
| 93 | $K_{10}$ | 3 | $NO_2$ | H | 1:2 Fe |
| 94 | $K_{12}$ | 4 | $R_{321}$ | H | — |
| 95 | $K_{12}$ | 4 | $R_{323}$ | H | 1:2 Cr |
| 96 | $K_{12}$ | 3 | $R_{318}$ | H | 1:2 Co |
| 97 | $K_{12}$ | 3 | $R_{318}$ | H | 1:1 Cu |
| 98 | $K_{10}$ | 4 | $NO_2$ | H | — |
| 99 | $K_{10}$ | 4 | H | $NO_2$ | 1:2 Fe |
| 100 | $K_{10}$ | 4 | $-SO_2NH_2$ | H | — |

| Example No. | K | position of N=N bridge in ring C | $R_{21}$ | $R_{22}$ | metal complex |
|---|---|---|---|---|---|
| 101 | $K_{12}$ | 3 | $—SO_2NH_2$ | H | — |
| 102 | $K_{10}$ | 3 | $R_{318}$ | H | — |
| 103 | $K_{11}$ | 3 | H | $NO_2$ | — |

Examples 104 to 129

The following Examples are of formula

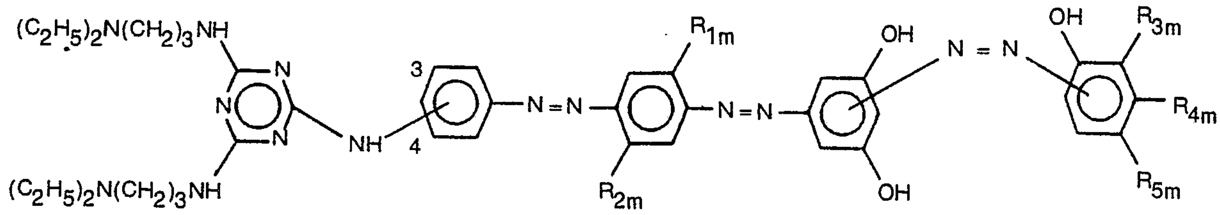

where $Z_1$ is $—N(C_2H_5)_2$ and $Z_2$ is $—N(CH_3)$.

These compounds can be made by following the method of Example 1 (and where 1:2 metallisation is carried out Example 5) using suitable choice of starting materials.

| Example No. | position in ring C | $R_{1m}$ | $R_{2m}$ | $R_{3m}$ | $R_{4m}$ | $R_{5m}$ | metal complex |
|---|---|---|---|---|---|---|---|
| 104 | 3 | $CH_3$ | $CH_3$ | H | H | $NO_2$ | — |
| 105 | 3 | " | " | " | " | $—SO_2NH_2$ | — |
| 106 | 4 | $OCH_3$ | $CH_3$ | " | " | $NO_2$ | 1:1 Cu |
| 107 | 4 | $CH_3$ | " | $NO_2$ | " | " | 1:1 Cu |
| 108 | 4 | $CH_3$ | $CH_3$ | $NO_2$ | " | " | 1:2 Co |
| 109 | 4 | " | " | " | " | " | 1:2 Fe |
| 110 | 3 | " | " | H | " | " | 1:2 Fe |
| 111 | 4 | " | " | " | " | $—SO_2NH_2$ | 1:2 Fe |
| 112 | 3 | " | " | " | " | " | 1:2 Fe |
| 113 | 3 | " | " | " | " | " | 1:2 Co |

The following Examples are of formula

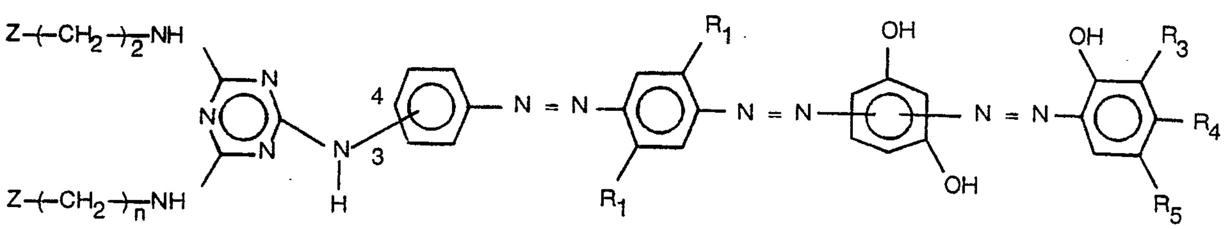

in which $Z_1$ is $—N(C_2H_5)_2$ and $Z_2$ is $—N(CH_3)_2$.

These compounds can be made by following the method of Example 1 (and where 1:2 metallisation occurs Example 5) using suitable choice of starting materials.

| Example No. | Z | n | position | $R_1$ | $R_2$ | $R_3$ | $R_4$ | $R_5$ | metal complex |
|---|---|---|---|---|---|---|---|---|---|
| 114 | $Z_1$ | 2 | 4 | $OCH_3$ | $OCH_3$ | H | H | $NO_2$ | — |
| 115 | $Z_2$ | 3 | 4 | " | " | " | " | " | 1:2 Cu |
| 116 | $Z_1$ | 2 | 4 | " | " | " | " | " | 1:2 Fe |
| 117 | $Z_2$ | 2 | 4 | $CH_3$ | $CH_3$ | " | " | " | 1:2 Fe |
| 118 | $Z_1$<br>$Z_2$ | 2 | 4 | $CH_3$ | $CH_3$ | $NO_2$ | H | $NO_2$ | 1:2 Fe |
| 119 | $Z_1$<br>$Z_2$ | 3 | 4 | " | " | " | " | " | 1:1 Cu |
| 120 | $Z_1$<br>$Z_2$ | 2 | 4 | " | " | " | " | " | 1:2 Cr |
| 121 | $Z_1$<br>$Z_2$ | 3 | 3 | " | " | $NO_2$ | H | $NO_2$ | — |
| 122 | $Z_1$<br>$Z_2$ | 2 | 3 | " | " | " | H | " | 1:1 Cu |
| 123 | $Z_1$<br>$Z_2$ | 3 | 3 | " | " | " | " | " | 1:2 Cr |
| 124 | $Z_1$<br>$Z_2$ | 2 | 3 | " | " | " | " | " | 1:2 Fe |
| 125 | $Z_1$<br>$Z_2$ | 2 | 4 | $OCH_3$ | $OCH_3$ | H | H | $-SO_2NH_2$ | — |
| 126 | $Z_1$<br>$Z_2$ | 3 | 4 | " | " | " | H | " | 1:2 Fe |
| 127 | $Z_1$<br>$Z_2$ | 2 | 4 | $OCH_3$ | $OCH_3$ | H | H | $-SO_2-NH$<br>\|<br>$(CH_2)_3$<br>\|<br>$N(CH_3)_2$ | 1:2 Fe |
| 128 | $Z_1$<br>$Z_2$ | 3 | 4 | " | " | " | " | $-SO_2NH_2$ | 1:2 Fe |
| 129 | $Z_1$<br>$Z_2$ | 2 | 3 | " | " | " | " | $-SO_2-NH$<br>\|<br>$(CH_2)_3$<br>\|<br>$N(CH_3)_2$ | 1:2 Fe |

Examples 130—160

The following Examples are of the formula

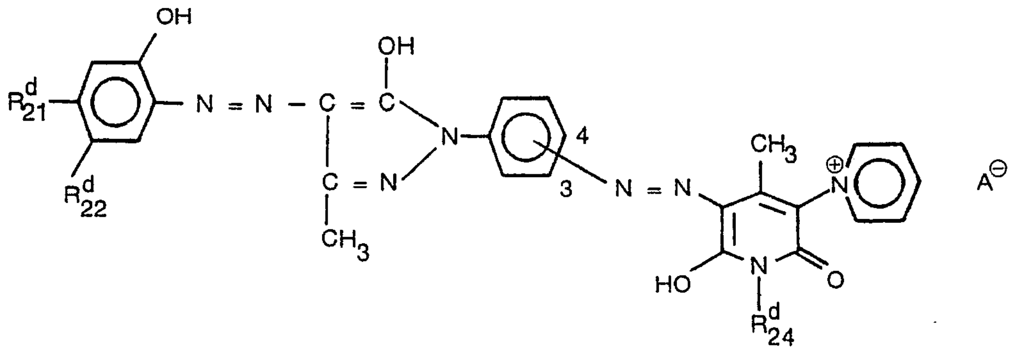

and can be prepared by following the method of Example 1 (and where 1:2 metallisation is carried out of Example 5) using a suitable choice of starting materials.

| Ex. No. | $R^d_{21}$ | $R^d_{22}$ | $R^d_{24}$ | substitution position | metal complex |
|---|---|---|---|---|---|
| 130 | H | H | $-(CH_2)_3-N(CH_3)_2$ | 4 | — |
| 131 | H | H | " | 4 | 1:1 Cu |
| 132 | H | H | " | 4 | 1:2 Fe |
| 133 | H | $-SO_2-N(H)-(CH_2)_3-N(CH_3)_2$ | H | 4 | — |
| 134 | H | " | H | 4 | 1:1 Cu |
| 135 | H | " | H | 4 | 1:2 Fe |
| 136 | H | $NO_2$ | $-(CH_2)_3-N(CH_3)_2$ | 4 | — |
| 137 | H | " | " | 4 | 1:1 Cu |
| 138 | H | " | " | 4 | 1:2 Cr |
| 139 | H | " | " | 4 | 1:2 Fe |
| 140 | $NO_2$ | H | " | 4 | — |
| 141 | " | H | " | 4 | 1:2 Fe |
| 142 | H | $-SO_2-N(H)-(CH_2)_3-N(CH_3)_2$ | " | 3 | — |
| 143 | H | " | " | 3 | 1:1 Cu |
| 144 | H | $-SO_2-N(H)-(CH_2)_3-N(CH_3)_2$ | H | 3 | — |
| 145 | H | " | H | 3 | 1:1 Cu |
| 146 | H | " | H | 3 | 1:2 Fe |

| Ex. No. | $R^d_{21}$ | $R^d_{22}$ | $R^d_{24}$ | substitution position | metal complex |
|---|---|---|---|---|---|
| 147 | H | 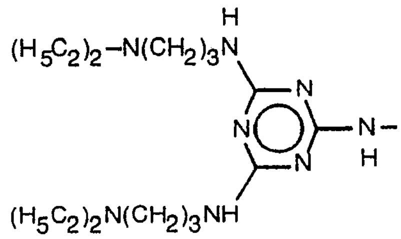 | H | 3 | — |
| 148 | H | " | H | 3 | 1:1 Cu |
| 149 | H | " | H | 3 | 1:2 Cr |
| 150 | H | $NO_2$ | $(CH_2)_3N(CH_3)_2$ | 3 | — |
| 151 | H | " | " | 3 | 1:1 Cu |
| 152 | H | " | " | 3 | 1:2 Co |
| 153 | H | " | " | 3 | 1:2 Fe |
| 154 | H | $—SO_2NH_2$ | " | 3 | 1:2 Fe |
| 155 | $NO_2$ | H | " | 3 | 1:1 Cu |
| 156 | " | H | " | 3 | 1:2 Co |
| 157 | " | H | " | 3 | 1:2 Fe |
| 158 | H | $NO_2$ | " | 4 | 1:1 Co |
| 159 | H | " | " | 4 | 1:1 Cr |

Example 160

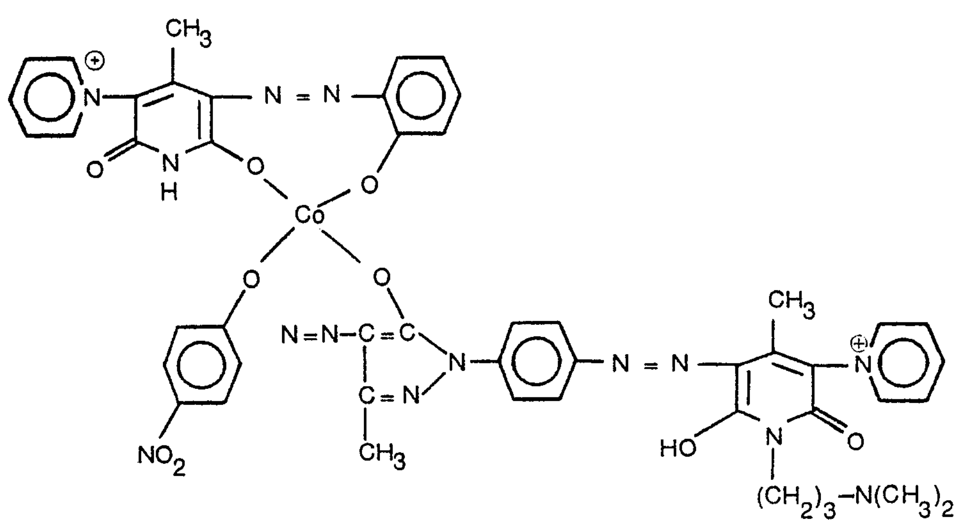

In the following Examples

Ba is a group of the formula 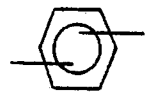 ;

Bb is a group of the formula 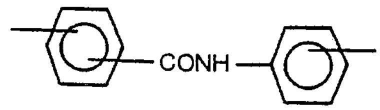 ;

Bc is 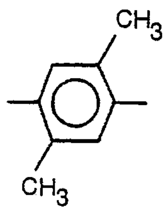 ; Bd is 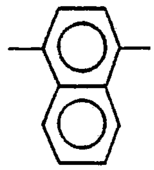 and Be is 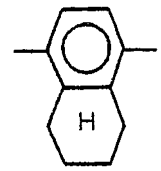 .

Examples 161 — 166

The following Examples of the formula

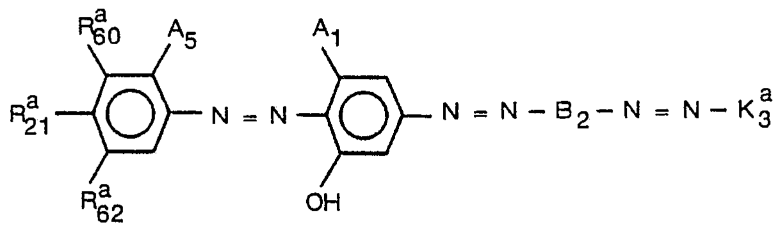

which can be prepared according to Example 1 (or when 1:2 metallisation is carried out Example 5) by the suitable choice of starting materials.

| Example No. | $R^a_{60}$ | $R^a_{61}$ | $R^a_{62}$ | $A_5$ | $A_1$ | $B_2$ | $K^a_3$ |
|---|---|---|---|---|---|---|---|
| 161 | H | $NO_2$ | H | OH | OH | $B_a$ | $K_{12}$ |
| 162 | H | R317 | R318 | COOH | $NH_2$ | $B_b$ | $K_{14}$ |
| 163 | H | R318 | $NO_2$ | $OCH_3$ | OH | $B_a$ | $K_{15}$ |
| 164 | $NO_2$ | R320 | H | OH | $NH_2$ | $B_b$ | $K_{16}$ |
| 165 | H | R323 | $SO_2NH_2$ | COOH | OH | $B_a$ | $K_{17}$ |
| 166 | H | R322 | $CH_2$—$N(CH_3)_2$ | OH | $NH_2$ | $B_b$ | $K_{18}$ |

Examples 167 — 172

The following Examples are of the formula

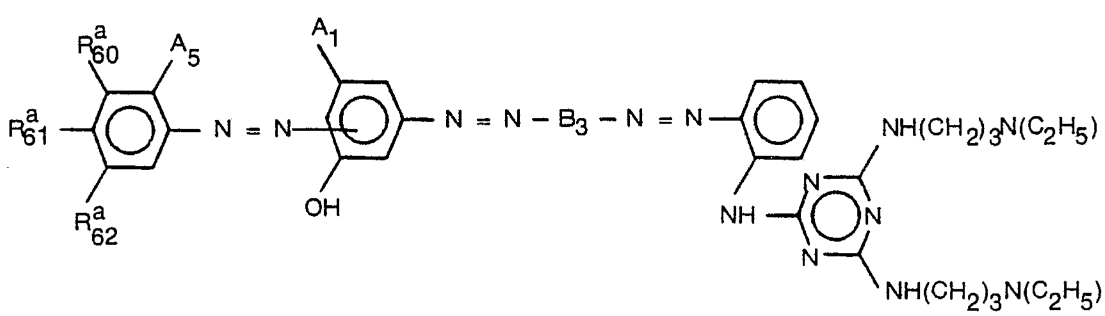

and can be prepared according to Example 1 (or where 1:2 metallisation is carried out Example 5) by the suitable choice of starting materials.

| Example No. | $R^a_{60}$ | $R^a_{61}$ | $R^a_{62}$ | $A_5$ | $A_1$ | $B_3$ | metal complex |
|---|---|---|---|---|---|---|---|
| 167 | H | $NO_2$ | H | OH | OH | $B_c$ | — |
| 168 | H | H | R318 | COOH | $NH_2$ | $B_d$ | 1:1 Cu |
| 169 | $NO_2$ | R323 | H | $OCH_3$ | OH | $B_e$ | 1:2 Fe |
| 170 | $NO_2$ | R322 | $NO_2$ | OH | OH | $B_c$ | — |
| 171 | H | R318 | $SO_2NH_2$ | OH | OH | $B_d$ | 1:1 Cu |
| 172 | $NO_2$ | H | $SO_2NH_2$ | OH | $NH_2$ | $B_e$ | 1:2 Fe |

Examples 173 — 185

The following compounds can be made according to Example 1 (or where 1:2 metallisation is carried out according to Example 5) by suitable choice of starting materials.

Example 173

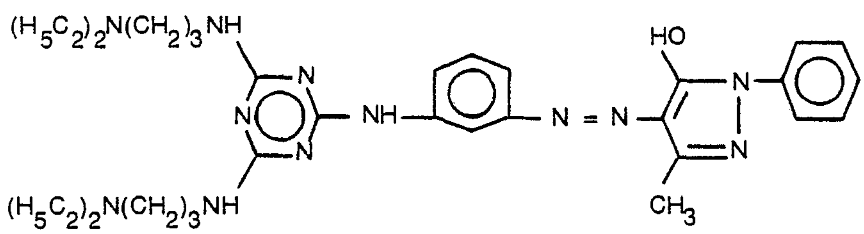

Example 174

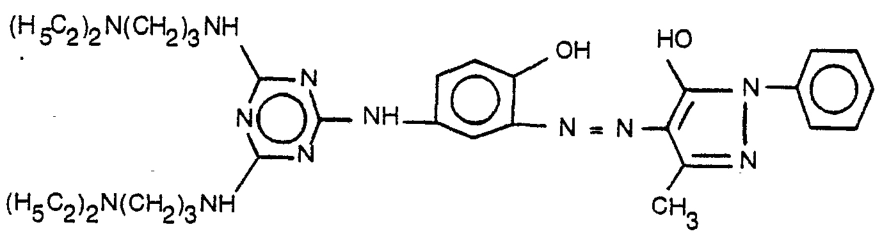

Example 175

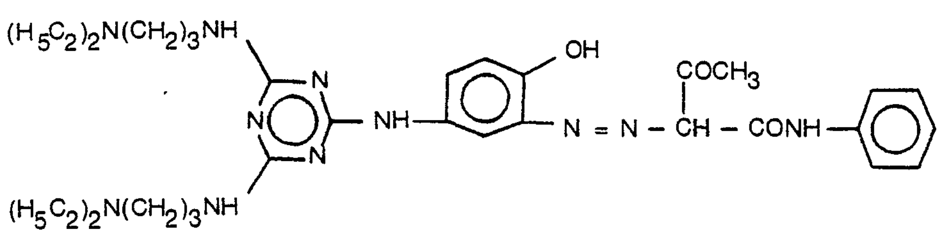

Example 176

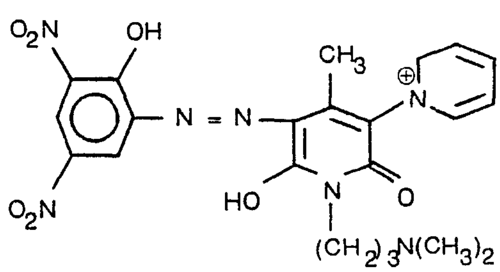

Example 177

1:1 Cu-complex from Example 174.

Example 178

1:1 Cu-complex from Example 175.

Example 179

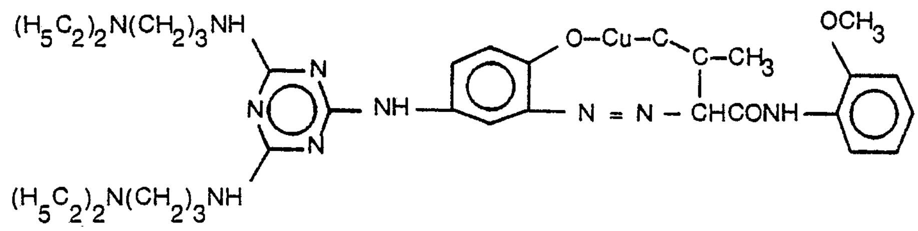

Example 180

1:2 Fe-complex from Example 174.

Example 181

1:2 Fe-complex from Example 175.

Example 182

1:2 Fe-complex from Example 174.

Example 183

1:2 Cr-complex from Example 175.

Example 184

1:2 Co-complex from Example 174.

Example 184

1:2 Co-complex from Example 175.

The dyes of Examples 3 and 6 to 105 dye leather and paper in orange, brown, red-brown, yellow-brown or red shades with good fastness properties.

Application Example A

100 Parts of freshly tanned and neutralised chrome grain leather are soaked in a bath at 55°C of 250 parts water and 0.5 parts of a dyestuff of any one of Example 1 to 5 for 30 minutes, then treated for 30 minutes in the same bath with 2 parts of an anionic fat liquor based on sulphonated train oil and then dried and finished in conventional manner. The colour of the dyed leather is given below.

| Dyestuff | Colour |
|---|---|
| 1:1 copper complex of Example 1 part c) | red/brown |
| 1:1 chromium complex of Example 2 | brown |
| 1:1 cobalt complex of Example 3 | red |
| 1:2 chromium complex of Example 4 | red/brown |
| 1:2 cobalt complex of Example 4 | red/brown |
| 1:2 iron complex of Example 4 | red/brown |
| 1:2 cobalt complex of Example 5 | red/brown |

Calf suede leather, chrome-vegetable tanned sheepskin and box cowhide leather can also be dyed by known methods.

Application Example B

70 Parts of a chemically bleached sulphite cellulose (from conifter wood) and 30 parts of a chemically bleached sulphite cellulose (from birch wood) is ground in a Hollander of 2000 parts water. 0.2 Part of a dyestuff of any one of those listed in Application Example A of Examples 1 to 5 above is added to the mass. After 20 minutes of mixing, paper is produced from the mass. The absorbent paper so produced has the same colour as the leather dyed with the dyestuffs as given in Application Example A above and the backwaters are colorourless.

Application Example C

0.5 Part of a dyestuff of any one of those of Examples 1 to 5 is dissolved in 100 parts of hot water and cooled to room temperature. The solution is added to 100 parts of chemically bleached sulphite cellulose which has been ground in a Hollander with 2000 parts of water. After 15 minutes mixing the mixture is sized. Paper produced from this has the same colour as the leather dyed with th dyestuffs as given in Application Example A and is of medium intensity with good wet fastness properties.

Application Example D

An absorbent paper web of unsized paper is drawn through a dyestuff solution of the following constitution:

0.5 parts of a dyestuff of Example 1 to 5
0.5 parts starch
99.0 parts of water.

Excess dyestuff solution is squeezed out by pressing between two rollers. The dried paper web has the same colour as the leather dyed with the dyestuffs as given in Application Example A.

Similar good paper dyeing can be obtained by using equivalent quantities of a liquid preparation or a granular preparation of the dyestuff for the pure dyestuff in the above Application Examples A to D.

**Claims**

1. An azo compound in metal-free, 1:1 metal complex or 1:2 metal complex form having at least 1.3 water solubilising basic groups, the compound being of the formula IV

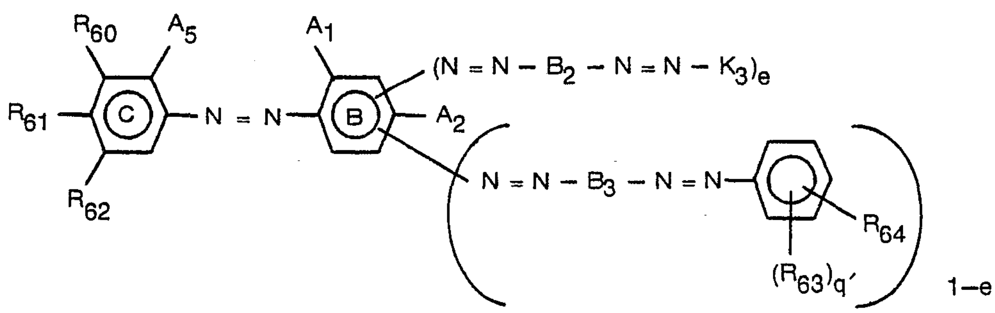

IV

in which

$A_1$ is —OH or —$NH_2$;
$A_2$ is —OH or —$NH_2$; and
$A_5$ is —OH, $(C_{1-4})$alkoxy or —COOH or
$A_1$ and $A_5$ form the group —NH—Me—NH—, —NH—Me—OOC—, —NH—Me—O—, —O—Me—O—, —O—Me—OOC— where Me is a metal capable of either forming a 1:1 metal complex or a 1:2 metal complex or capable of forming both a 1:1 metal complex and a 1:2 metal complex;
e is 0 or 1;
$R_{60}$ is hydrogen or —$NO_2$;
$R_{61}$ and $R_{62}$, independently, are hydrogen, —$NO_2$,

$$—CH_2—Z_2, —O_2—NH_2, —SO_2—NH—(CH_2)_p—Z_2, —SO_2—NH—C_2H_4OH, —SO_2—N—(R'_{62})_2,$$

$$—CO—NH—(CH_2)_p—Z_2, —NH—CO—(CH_2)_p—Z_2$$

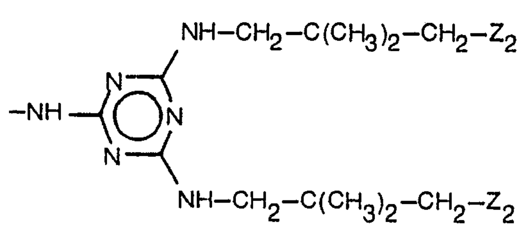

, or

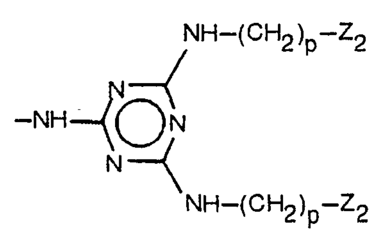

;

where

$R'_{62}$ is $(C_{1-4})$alkyl,

$R_{63}$ is $—SO_2—NH—(CH_2)_p—Z_2$, $—CO—NH—(CH_2)_p—Z_2$,

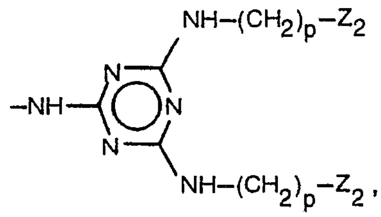

$R_{64}$ is hydrogen or $(C_{1-4})$alkoxy;

each $R_{65}$ independently is hydrogen $(C_{1-4})$alkyl or $C_{1-4}$-alkoxy;

p is 1, 2 or 3;

q' is 1 or 2 with the proviso that when $R_{63}$ is $—CO—NH—(CH_2)_p—Z_2$ q' is 2;

$K_3$ is one of the following groups

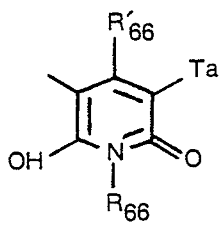

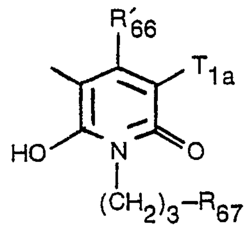

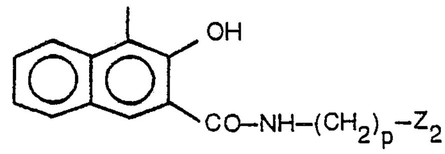

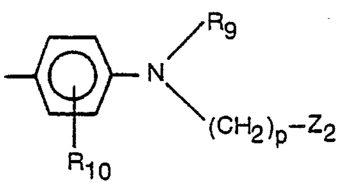

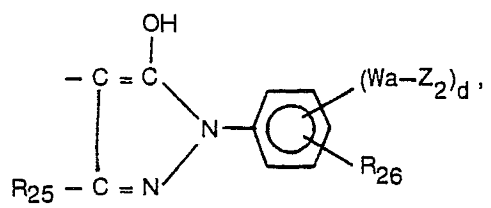

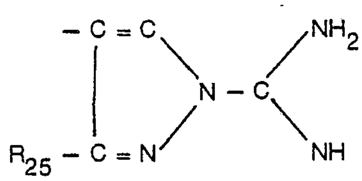

$R_{69}—CO—CH—CO—R_{68}$

$R_9$ is $C_{1-4}$alkyl or $(CH_2)_p—Z_2$;

$R_{10}$ is hydrogen, $C_{1-4}$alkyl, $C_{1-4}$alkoxy, $—NH—COCH_3$ or $—NHCONH_2$;

$R_{25}$ is $C_{1-4}$alkyl, $—COO(R_{25a})$ or $—COOH$, where $R_{25a}$ is $C_{1-4}$alkyl;

$Z_2$ is $-NH_2$, $-N(R_o)_2$, $-\overset{\oplus}{N}(R_o)_3\ A^{\ominus}$, 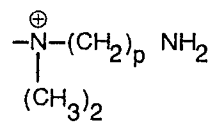

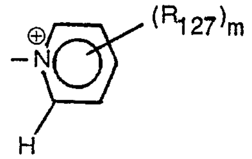 or 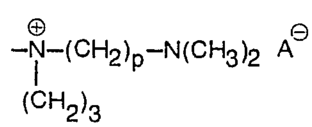

where

m is 0, 1 or 2;

$A^{\ominus}$ is a non-chromophoric anion;

$R_{127}$ is methyl or ethyl;

each $R_o$ independently, is methyl, ethyl, β-hydroxyethyl, benzyl, $-CH_2COCH_3$,

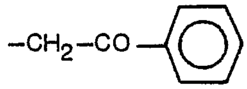

provided that no more than one benzyl, $-CH_2COCH_3$ or

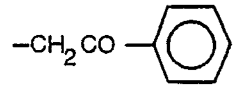

is attached or not more than two β-hydroxyethyl groups are attached to a nitrogen atom.

$R_{66}$ is hydrogen, $(C_{1-4})$alkyl, $-C_2H_4OH$ or $-(CH_2)_p-Z_2$;

$R'_{66}$ is $(C_{1-4})$alkyl,

Ta is a group of the formula

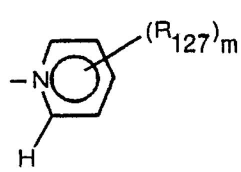

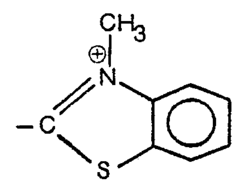

$A^{\ominus}$

$T_{1a}$ is $-CN$ or $-CO-NH_2$;

$R_{67}$ is $-N(CH_3)_2$ or $-N^{\oplus}(CH_3)_3A^{\ominus}$;

$R_{68}$ is $-(CH_2)_p-Z_2$, $-NH-(CH_2)_p-Z_2$ or

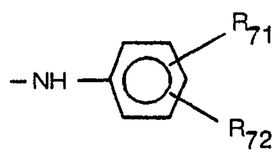

;

where

$R_{71}$ is hydrogen, $-OH$, $(C_{1-4})$alkoxy,

$-NH-CO-(CH_2)_p-Z_2$, $-CO-NH-(CH_2)_p-Z_2$, $-SO_2-NH-(CH_2)_p-Z_2$, $-(CH_2)_p-Z_2$ or

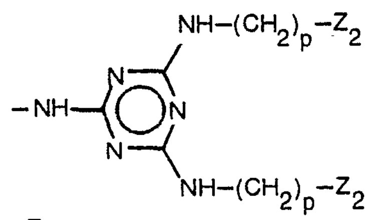

;

and $R_{72}$ is hydrogen or $-(CH_2)_p-Z_2$;

$R_{69}$ is $(C_{1-4})$alkyl or $(CH_2)_p-Z_2$ where p and $Z_2$ are above defined

$B_2$ is 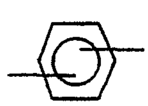 or 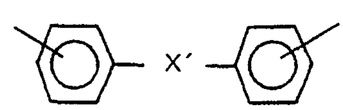

$B_3$ is 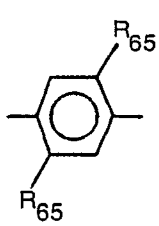 , 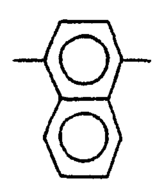 or 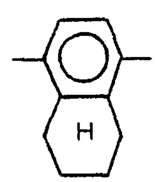

where each $R_{65}$ independently, is hydrogen, $(C_{1-4})$alkyl or $(C_{1-4})$alkoxy; and X' is as defined below

$W_a$ is $-(CH_2)_s$, $-NHCO(C^*H_2)_s-$, $-CONH-(C^*H_2)_s$ or $-SO_2NH(C^*H_2)_s$

in which the starred C— atom is attached to the N-atom of the group $Z_2$ defined above, where s is 1, 2, 3, 4, 5 or 6

d' is 0 or 1;

$R_{26}$ is hydrogen, halogen, $C_{1-4}$alkyl or $C_{1-4}$alkoxy;
X' is a group of $X_1$ to $X_{53}$ below
$X_1$ is a direct bond,
$X_2$ a straight or branched chain alkylene group of $(C_{1-4})$carbon atoms,

$X_3$ $-CO-$, $X_4$ 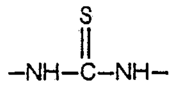, $X_5$ $-S-$, $X_6$ $-O-$, $X_7$ $-CH=CH-$, $X_8$ $-S-S-$,

$X_9$ $-SO_2-$, $X_{10}$ $-NH-$, $X_{11}$ $-NH-CO-$, $X_{12}$ 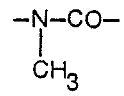, $X_{13}$ 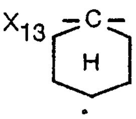.

$X_{14}$ 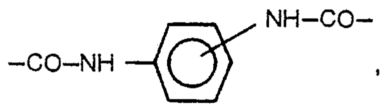, $X_{15}$ 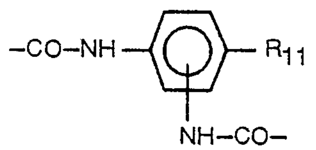,

$X_{16}$ 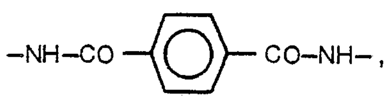, $X_{17}$ $-SO_2-NH-$, $X_{18}$ 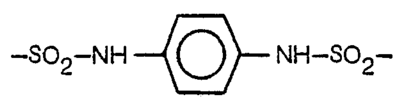,

$X_{19}$ 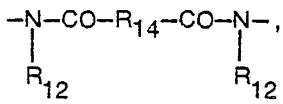, $X_{20}$ 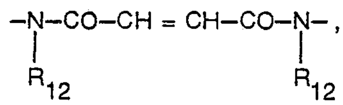, $X_{21}$ 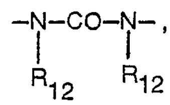,

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 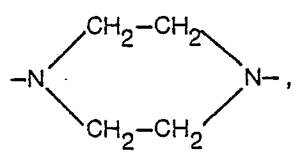,

$X_{26}$ 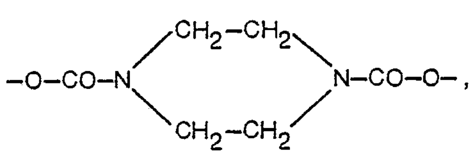, $X_{27}$ 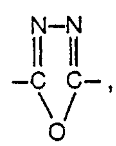, $X_{28}$ 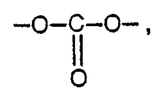,

$X_{29}$ 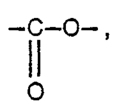, $X_{30}$ 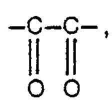, $X_{31}$ $-O-(CH_2)_q-O-$, $X_{32}$ 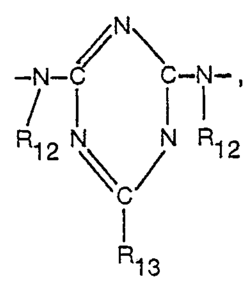

$X_{33}$ 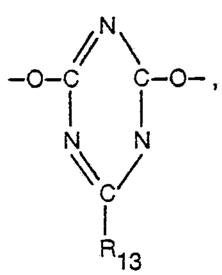, $X_{34}$ 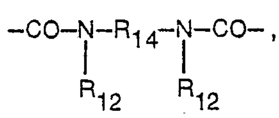, $X_{35}$ 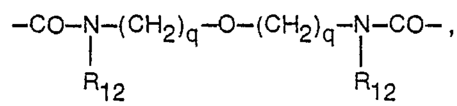

$X_{36}$ 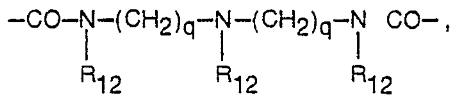

$X_{37}$ 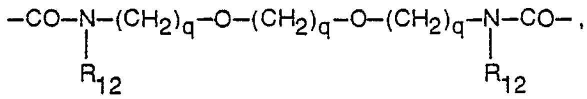, $X_{38}$ 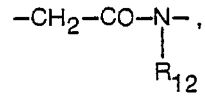,

$X_{39}$ 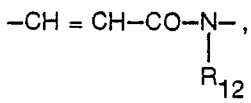, $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-OS-NH-CH_2-$, $X_{47}$ 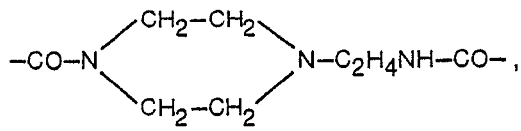,

$X_{48}$ 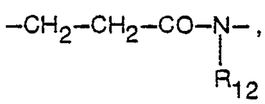, $X_{49}$ $-NH-CO-NH-$, $X_{50}$ $-O-(CH_2)_q-O-$,

$X_{51}$ 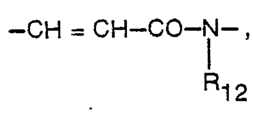, $X_{52}$ 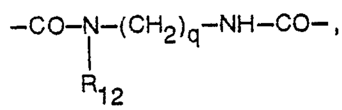, $X_{53}$ 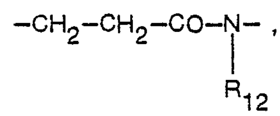,

where

$R_{11}$ is halogen, $(C_{1-4})$alkyl or $(C_{1-4})$alkoxy

$R_{12}$ is hydrogen or $(C_{1-4})$alkyl;

$R_{13}$ is halogen, $-NH-CH_2-CH_2-OH$ or $-N(CH_2-CH_2OH)_2$;

$R_{14}$ is a straight or branched chain $(C_{1-4})$alkylene group and q is 1, 2, 3 or 4

with the provisos

(i) that $R_{60}$ and $R_{61}$ cannot both be $-NO_2$,

(ii) that when $R_{61}$ and $R_{62}$ are both hydrogen, $R_{61}$ cannot be $-NO_2$,

(iii) that $R_{61}$ and $R_{62}$ are not the same group unless both are hydrogen, and

(iv) that each azo bridges in ring B is in an ortho position either to $A_1$ or $A_2$.

2. A compound according to Claim 1 in metal-free form of formula IVa

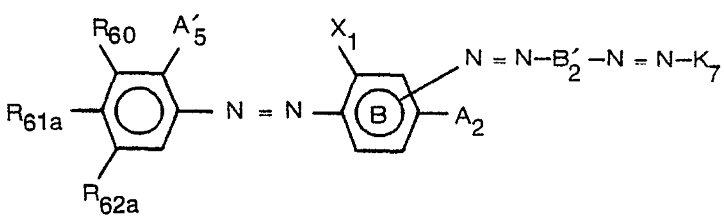

IVa,

in which

$A_5'$ is $-OH$ or $-OCH_3$,

$R_{61a}$ is hydrogen, $-NO_2$, $-CH_2-Z_2$, $-SO_2-NH-(CH_2)_p-Z_2$, $-NH-CO-(CH_2)_p-Z_2$ or

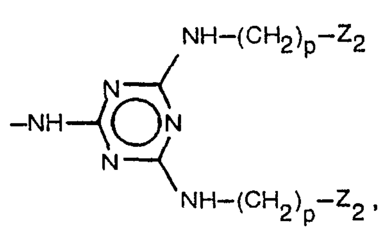,

$R_{62a}$ is hydrogen, $-NO_2$, $-CH_2-Z_2$, $-SO_2-NH_2$, $-SO_2-NH-(CH_2)_p-Z_2$, $-CO-NH-(CH_2)_p-Z_2$, $-NH-CO-(CH_2)_p-Z_2$,

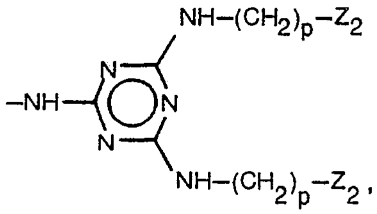

or

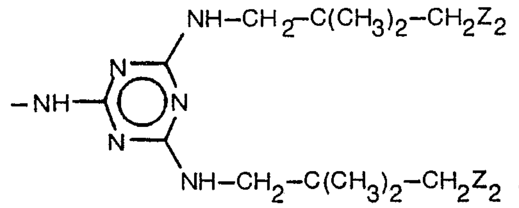

$B_2'$ is 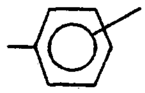 or 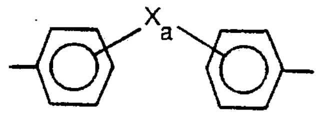 ;

$K_7$ is one of groups IVaa to IVaf below

IVaa 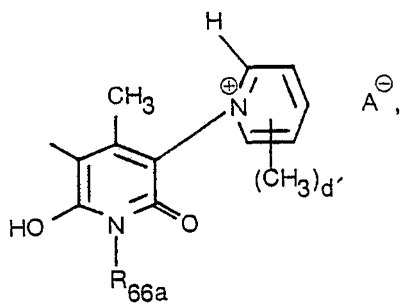

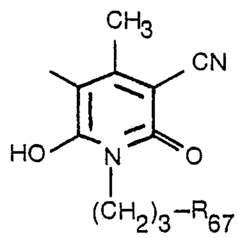 , IVab

IVac 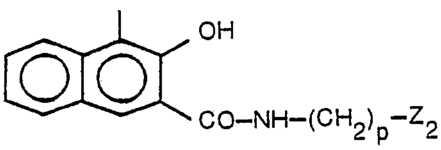

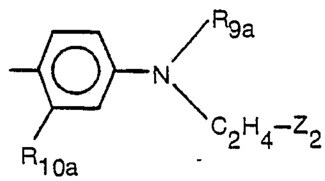 IVad

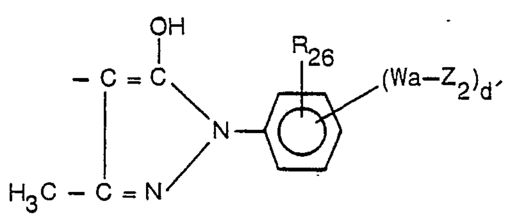 IVae

IVaf 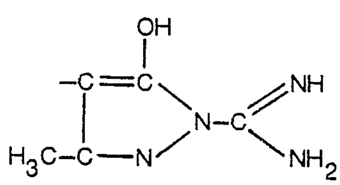 or $R_{69a}-CO-\overset{|}{C}H-CO-R_{68a}$ IVag

in which

$R_{9a}$ is $-CH_3$, $-C_2H_5$ or $-C_2H_4-Z_2$;

Wa is $-(CH_2)_s$, $-NHCO(C^*H_2)_s-$, $-CONH(C^*H_2)_s$ or $-SO_2NH(C^*H_2)_5$ in which the starred C atom is attached to the N-atom of the group $Z_2$ and s is 1, 2, 3, 4, 5 or 6, d is 0 or 1;

$R_{10a}$ is hydrogen, $-CH_3$, $-OCH_3$, $-NH-CO-CH_3$ or $-NH-CO-NH_2$;

$R_{66a}$ is hydrogen, $-CH_3$, $-C_2H_5$, n-$C_3H_7$, n-$C_4H_9$, i-$C_3H_7$, i-$C_4H_9$, $-C_2H_4OH$ or $-(CH_2)_p-Z_2$;

$R_{68a}$ is $-(CH_2)_p-Z_2$, $-NH-(CH_2)_p-Z_2$ or

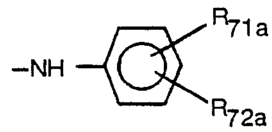

;

$R_{69a}$ is $-CH_3$, $-C_2H_5$ or $-(CH_2)_p-Z_2$;

$R_{71a}$ is hydrogen, $-OH$, $-OCH_3$, $-NH-CO-(CH_2)_p-Z_2$, $-CO-NH-(CH_2)_p-Z_2$, $-SO_2-NH-(CH_2)_p-Z_2$ or

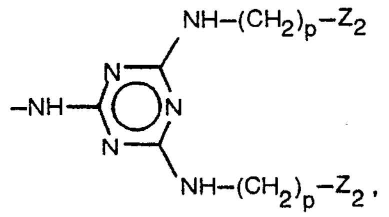

,

$R_{72a}$ is hydrogen or $-(CH_2)_p-Z_2$;

$X_a$ is $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ or the following groups $X'_2-CH_2-$, $X''_2-(CH_2)_2-$, $X'''_2-(CH_2)_3-$,

$X_2^{iv}$ $-(CH_2)_4-$, $X'_{14}$ 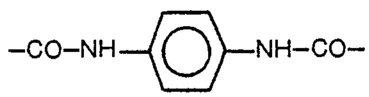 ,

$X'_{15}$ 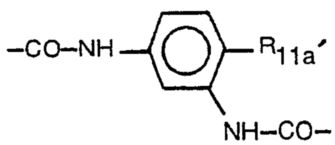 , $X'_{19}$ $-NH-CO-CH_2-CH_2-CO-NH-$,

$X''_{19}$ $-NH-CO-(CH_2)_4-CO-NH-$, $X'''_{19}$ 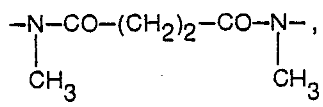 ,

$X'_{20}$ $-NH-CO-CH=CH-CO-NH-$, $X''_{20}$ 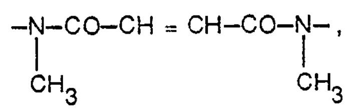 ,

$X'_{21}$ 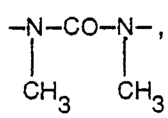 , $X'_{32}$ 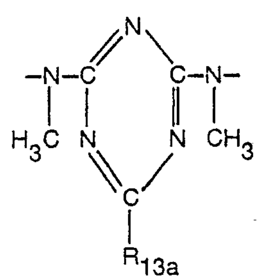

$X''_{32}$ 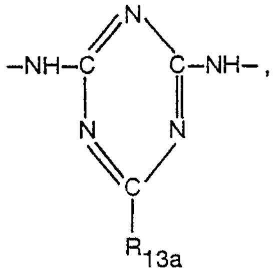 , $X'_{34}$ $-CO-NH-(CH_2)_2-NH-CO-$,

$X''_{34}$ $-CO-NH-(CH_2)_3-NH-CO-$, $X'''_{34}$ $-CO-NH-(CH_2)_4-NH-CO-$,

$X^{iv}_{34}$ 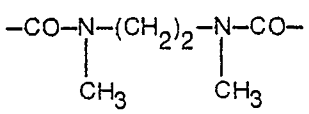, $X^{v}_{34}$ 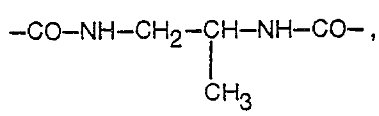,

$X^{vi}_{34}$ 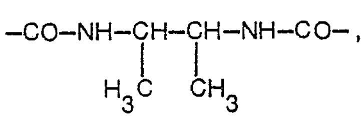, $X''_{14}$ 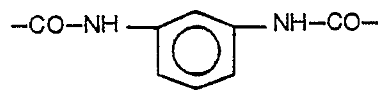,

$X''_{15}$ 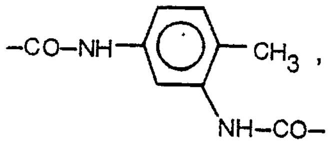, $X'''_{15}$ 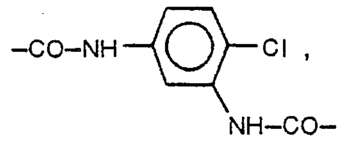,

$X^{iv}_{15}$ 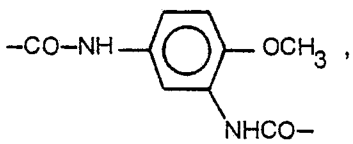, $X'''_{32}$ 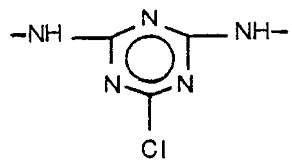,

$X^{iv}_{32}$ 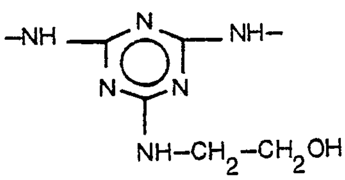, $X^{v}_{32}$ 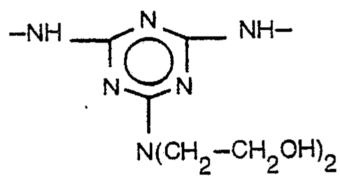,

$X^{vi}_{32}$ 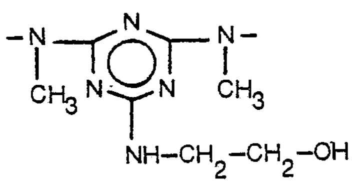, $X'_{33}$ 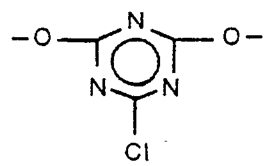,

$X''_{33}$ 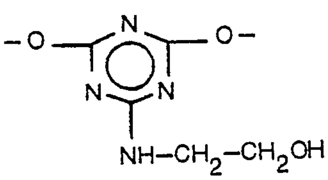, $X'''_{33}$ 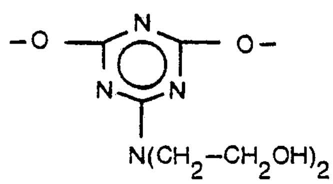,

$X'_{35}$ $-CO-NH-(CH_2)_2-O-(CH_2)_2-NH-CO-$,

$X''_{35}$ $-CO-NH-(CH_2)_2-O-(CH_2)_2-O-(CH_2)_2-NH-CO-$,

$X'_{36}$ $-CO-NH-(CH_2)_2-NH-(CH_2)_2-NH-CO-$,

$X''_{36}$ 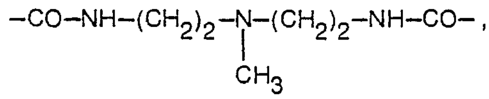

$X'_{48}$ 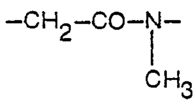 , $X'_{50}$ $-O-CH_2-CH_2-O-$, $X''_{50}$ $-O-(CH_2)-O-$,

$X'_{51}$ $-CH=CH-CO-NH-$, $X''_{51}$ 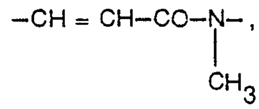 ,

$X'_{52}$ 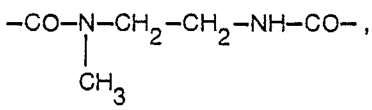 , $X'_{53}$ $-CH_2-CH_2-CO-NH-$,

$X''_{53}$ 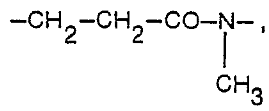 ,

where

$R_{11a}$ is hydrogen, —Cl, —$CH_3$ or —$OCH_3$;

$R_{13a}$ is —Cl, —NH—$CH_2$—$CH_2$—OH or —N($CH_2$—$CH_2$—$OH)_2$; and with the provisos

(i) that each azo bridge in B is in an ortho position to $A_1$ or $A_2$ or to both $A_1$ and $A_2$;

(ii) that $R_{61a}$ and $R_{62a}$ cannot both be the same group, unless both are hydrogen;

(iii) that $R_{60}$ and $R_{61a}$ are not both —$NO_2$; and

(iv) that $R_{60}$ cannot be —$NO_2$ when $R_{61a}$ and $R_{62a}$ are hydrogen,

or a compound of formula IVc

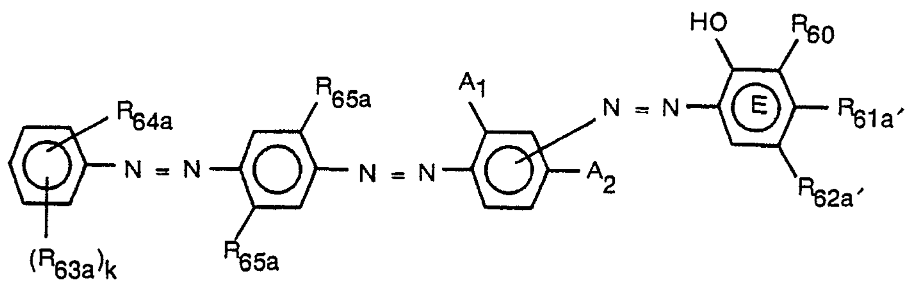

IVc

in which

$R_{63a}$ is —$SO_2$—NH—$(CH_2)_{m'}$—$Z_2$, —CO—NH—$(CH_2)_{m'}$—$Z_2$, —NH—CO—$(CH_2)_a$—$Z_2$, —$CH_2$—$Z_2$ or

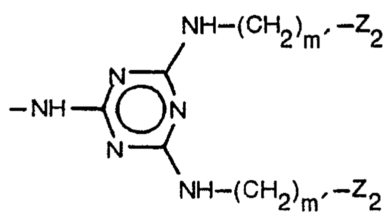

;

each

$R_{65a}$ independently, is —$CH_3$, —$C_2C_5$, —$OCH_3$ or —$OC_2H_5$;

$R_{64a}$ is hydrogen, or —$OCH_3$;

k is 1 or 2, but only 2 when $R_{63a}$ is the group —CO—NH—$(CH_2)_{m'}$—$Z_2$;

$R'_{61a}$ is hydrogen, —$NO_2$, —NH—CO—$(CH_2)_a$—$Z_2$ or

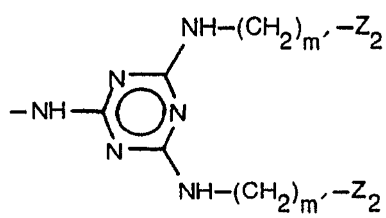

;

$R'_{62a}$ is hydrogen, —$NO_2$, —$SO_2$—$NH_2$, —$SO_2$—N$(CH_3)_2$,

$-SO_2-N(C_2H_5)_2$, $-SO_2-NH-C_2H_4OH$, $-SO_2-NH-(CH_2)_{m'}-Z_2$, or when $R_{61}$ and $R_{61a}'$ are hydrogen additionally $-CO-NH-(CH_2)_a-Z_2$, $-NH-CO-(CH_2)_a-Z_2$ or

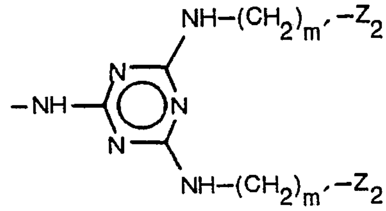

; and

a is 1 or 2;
with the provisos

(i) that $R_{60}$ and $R_{61a}'$ are not both $-NO_2$;
(ii) that $R_{61a}'$ and $R_{62a}'$ cannot both be the same group unless both are hydrogen; and
(iii) that $R_{60}$ is not $-NO_2$ when $R_{61a}'$ and $R_{62a}'$ are both hydrogen.

3. A compound according to Claim 1 in 1:1 metal complex form of formula IVe

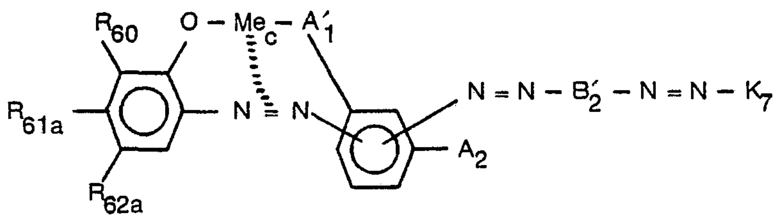

IVe

in which

$R_{60}$ and $A_2$ are defined in Claim 1;
$A_1'$ is $-NH-$, $-OOC-$ or $-O-$;
$Me_c$ is copper, cobalt or chromium;
$R_{61a}$ is hydrogen, $-NO_2$, $-CH_2-Z_2$, $-SO_2-NH-(CH_2)_p-Z_2$, $-NH-CO-(CH_2)_p-Z_2$ or

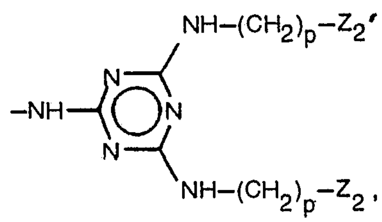

$R_{62a}$ is hydrogen, $-NO_2$, $-CH_2-Z_2$, $-SO_2-NH_2$, $-SO_2-NH-(CH_2)_p-Z_2$,

$-CO-NH-(CH_2)_p-Z_2$, $-NH-CO-(CH_2)_p-Z_2$,

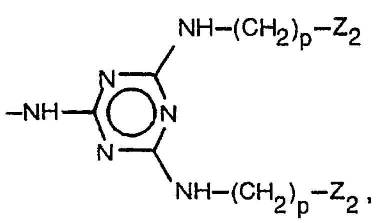

or

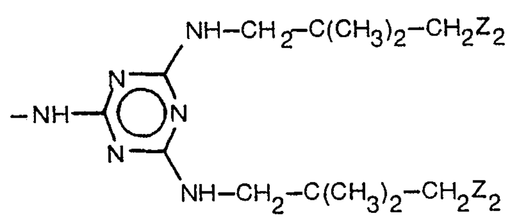

$B_2'$ is 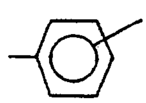 or 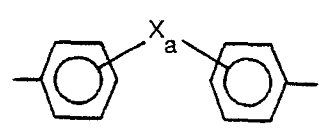 ;

$K_7$ is one of groups IVaa to IVaf below

IVaa 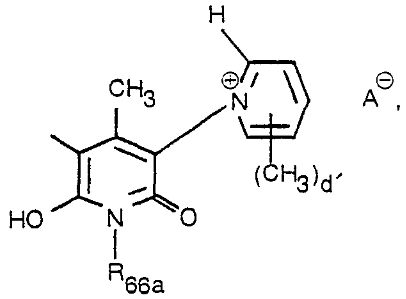 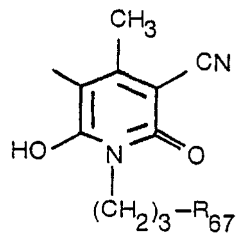 , IVab

IVac 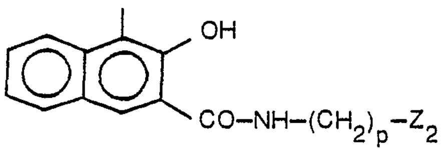 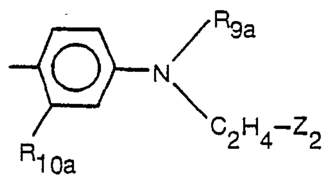 IVad

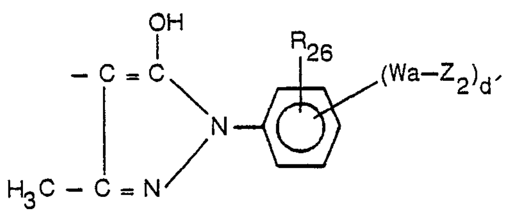 IVae

IVaf 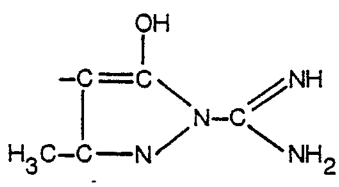 or $R_{69a}-CO-CH-CO-R_{68a}$ IVag

a compound of formula IVg

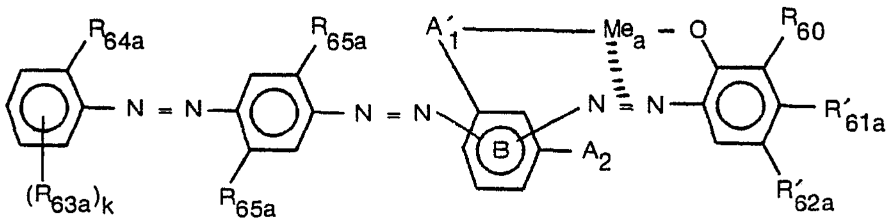 IVg

where

$R_{61a}'$ is hydrogen, $-NO_2$, $-NH-CO-(CH_2)_a-Z_2$ or

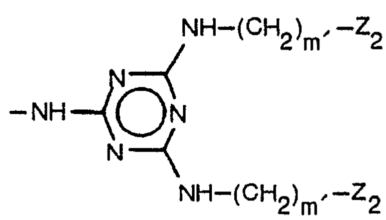 ;

$R_{62a}'$ is hydrogen, $-NO_2$, $-SO_2-NH_2$, $-SO_2-N(CH_3)_2$, $-SO_2-N(C_2H_5)_2$, $-SO_2-NH-C_2H_4OH$, $-SO_2-NH-(CH_2)_m-Z_2$, or when $R_{61}$ and $R_{61a}'$ are hydrogen additionally $-CO-NH-(CH_2)_a-Z_2$, $-NH-CO-(CH_2)_a-Z_2$ or

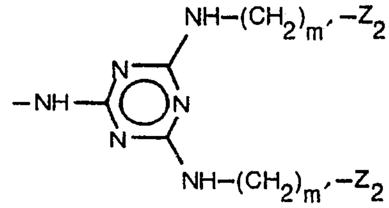

; and

$R_{63a}$ is $—SO_2—NH—(CH_2)_{m'}—Z_2$, $—CO—NH—(CH_2)_{m'}—Z_2$, $—NH—CO—(CH_2)_a—Z_2$, $—CH_2—Z_2$ or

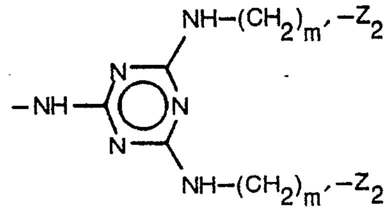

;

$R_{64a}$ is hydrogen or $—OCH_3$;
k is 1 or 2, but only 2 when $R_{63a}$ is the group $—CO—NH—(CH_2)_{m'}—Z_2$;
each
$R_{65a}$ independently, is $—CH_3$, $—C_2H_5$, $—OCH_3$ or $—OC_2H_5$ the symbols $R_{9a}$, Wa, $R_{10a}$, m', $R_{66a}'$ $R_{68a}$ and $R_{69a}$ are defined in Claim 2;
with the provisos
(i) that $R_{60}$ and $R_{61a}'$ are not both $—NO_2$;
(ii) that $R_{61a}'$ and $R_{62a}'$ cannot both be the same group unless both are hydrogen; and
(iii) that $R_{60}$ is not $—NO_2$ when $R_{61a}'$ and $R_{62a}'$ are both hydrogen.

4. A compound according to Claim 1 in 1:2 metal complex form of formula IVi

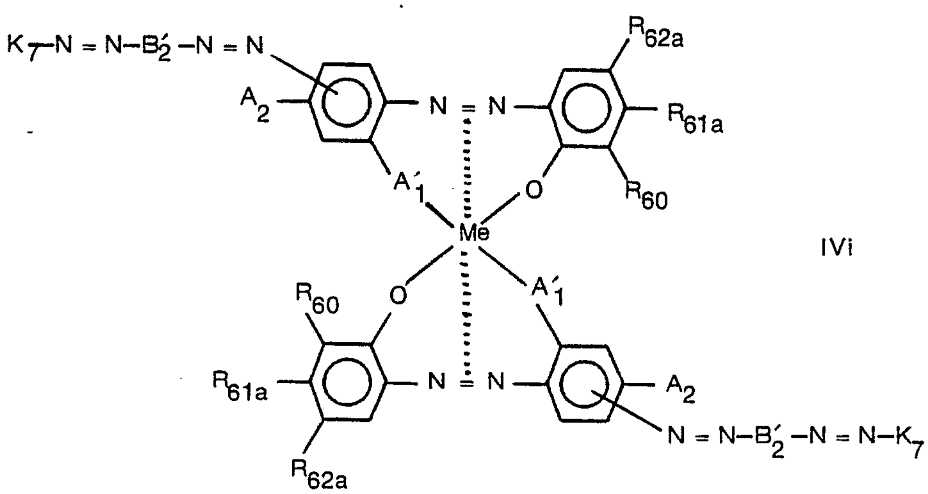

IVi

Me is chromium, iron or cobalt;
A' is $—O—$, $—NH—$ or $—COO—$;
$R_{60}$ and $A_2$ are defined in Claim 1;
$R_{61a}$ is hydrogen, $—NO_2$, $—CH_2—Z_2$, $—SO_2—NH—(CH_2)_p—Z_2$, $—NH—CO—(CH_2)_p—Z_2$ or

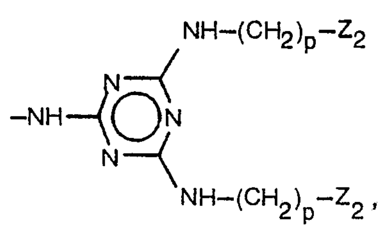

,

$R_{62a}$ is hydrogen, $-NO_2$, $-CH_2-Z_2$, $-SO_2-NH_2$, $-SO_2-NH-(CH_2)_p-Z_2$, $-CO-NH-(CH_2)_p-Z_2$, $-NH-CO-(CH_2)_p-Z_2$,

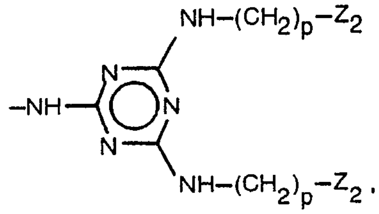

or

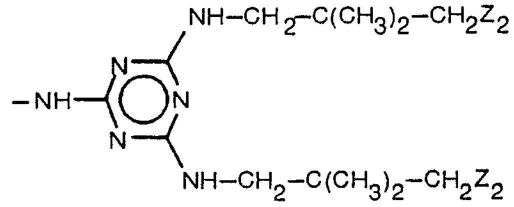

$B_2'$ is

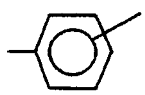

or

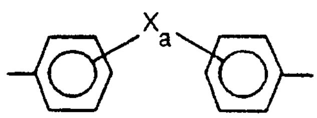

;

$K_7$ is one of groups IVaa to IVaf below

IVaa

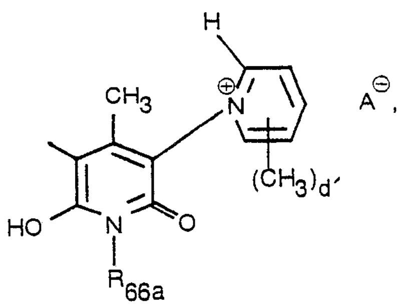

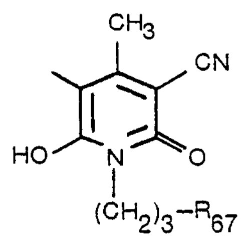

, IVab

IVac

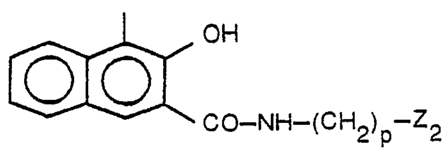

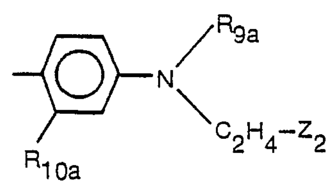

IVad

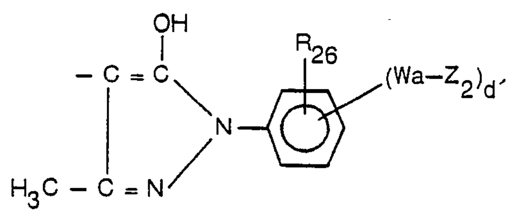

IVae

IVaf

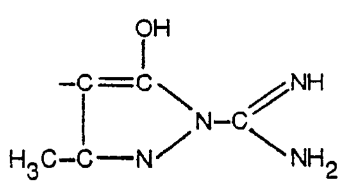

or

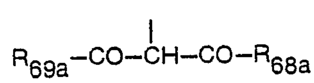

IVag

in which the symbols $R_{9a}$, Wa, $R_{10a}$, $R_{66a}$, $R_{68a}$, $R_{69a}$ and m are defined in Claim 2, with the provisos i) that $R_{60}$ and $R'_{61a}$ are not both $-NO_2$; ii) that $R'_{61a}$ and $R'_{62a}$ are not both the same and iii) that $R_{60}$ is not $-NO_2$ when $R'_{61a}$ and $R'_{62a}$ are both hydrogen, or a compound of the formula IVI

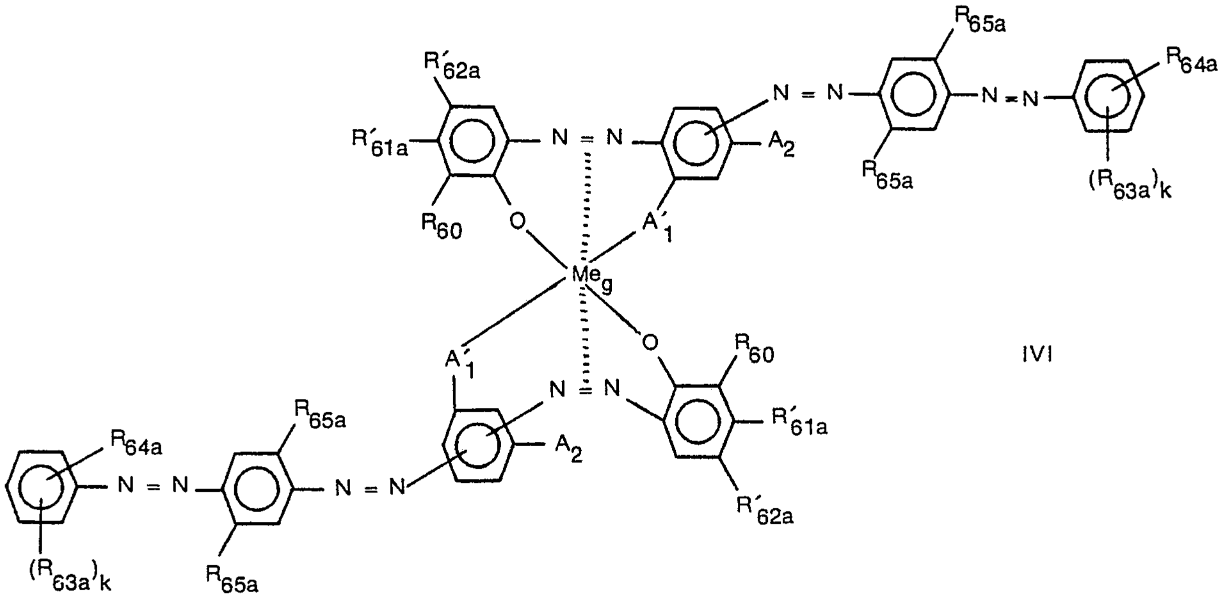

IVI

in which

$R_{60}$, and $A_2$ are defined in Claim 1;
$Me_g$ is cobalt, iron or chromium;
$R_{61a}'$ is hydrogen, $-NO_2$, $-NH-CO-(CH_2)_a-Z_2$ or

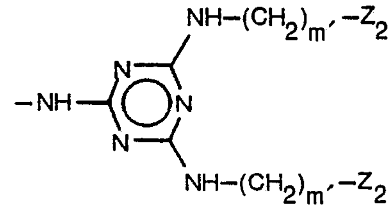
;

where a is 1 or 2;

$R_{62a}'$ is hydrogen, $-NO_2$, $-SO_2-NH_2$, $-SO_2-N(CH_3)_2$, $-SO_2-N(C_2H_5)_2$, $-SO_2-NH-C_2H_4OH$, $-SO_2-NH-(CH_2)_{m'}-Z_2$, or when $R_{60}$ and $R_{61a}'$ are hydrogen additionally $-CO-NH-(CH_2)_a-Z_2$, $-NH-CO-(CH_2)_a-Z_2$ or

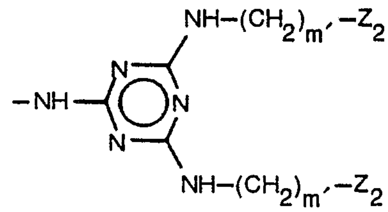
; and

$R_{63a}$ is $-SO_2-NH-(CH_2)_{m'}-Z_2$, $-CO-NH-(CH_2)_{m'}-Z_2$, $-NH-CO-(CH_2)_a-Z_2$, $-CH_2-Z_2$ or

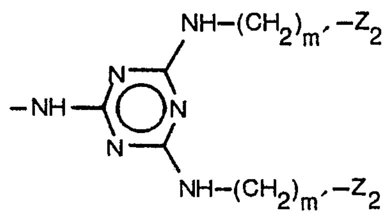
;

each

$R_{65a}$ independently, is $-CH_3$, $-C_2H_5$, $-OCH_3$ or $-OC_2H_5$;
$R_{64a}$ is hydrogen or $-OCH_3$;
k is 1 or 2, but only 2 when $R_{63a}$ is the group $-CO-NH-(CH_2)_{m'}-Z_2$;

with the provisos

(i) that $R_{60}$ and $R_{61a}'$ are not both $-NO_2$;
(ii) that $R_{61a}'$ and $R_{62a}'$ cannot both be the same group unless both are hydrogen; and
(iii) that $R_{60}$ is not $-NO_2$ when $_{61a}'$ and $R_{62a}'$ are both hydrogen.

5. A compound according to Claim 1 of formula IVb

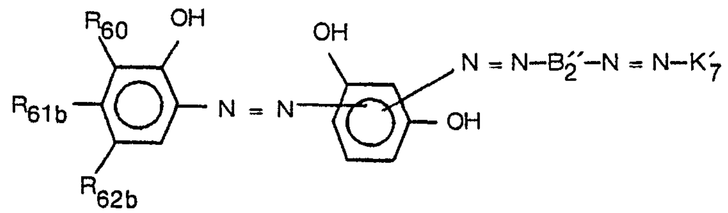

IVb

in which

$R_{60}$ is as defined in Claim 1;

$R_{61b}$ is hydrogen, $—NO_2$, $—CH_2—Z_3$, $—SO_2—NH—(CH_2)_{m'}—Z_3$, $—NH—CO—(CH_2)_a—Z_3$ or

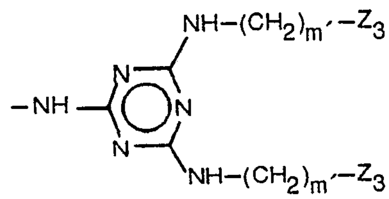

;

$R_{62b}$ is hydrogen, $—NO_2$, $—CH_2—Z_3$, $—SO_2—NH_2$, $—SO_2—NH—(CH_2)_{m'}—Z_3$, $—CO—NH—(CH_2)_{m'}—Z_3$; $—NH—CO—(CH_2)_a—Z_3$ or

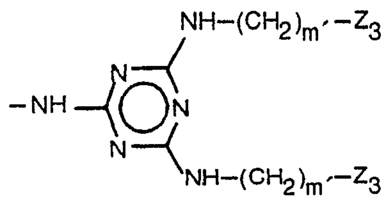

; $B_2''$ is 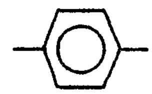 or 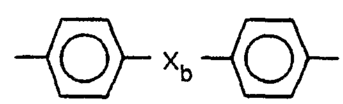

in which Xb is $X_1$, $X_{11}$, $X_{12}$, $X_{17}$, $X_{27}$, $X_{49}$, $X_2''$, $X_{14}'$, $X_{19}'$, $X_{19}''$, $X_{19}'''$, $X_{20}'$ $X_{20}''$, $X_{32}'$, $X_{34}'$, $X_{34}^{iv}$, $X_{34}^{v}$ or $X_{34}^{vi}$, where $X_1$ to $X_{49}$ are defined in Claim 1, and the remaining symbols X are defined in Claim 2;

$Z_3$ is $-N(CH_3)_2$, $-\overset{\oplus}{N}(CH_3)_3\ A^{\ominus}$, 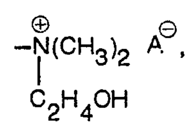, 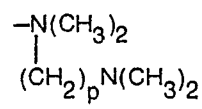

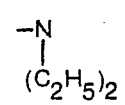 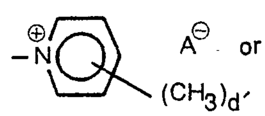 or 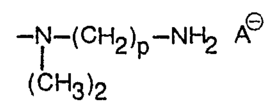

m' is 2 or 3; a is 1 or 2;

d' is 0 or 1;

$K_7'$ is one of the groups IVba to IVbf

IVba 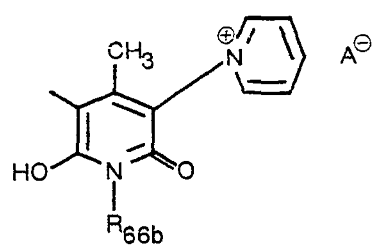

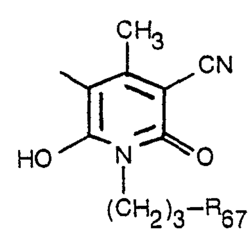 IVbb

IVbc 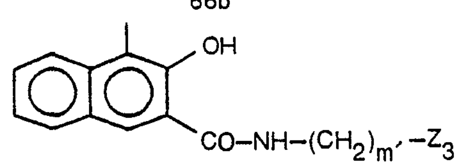

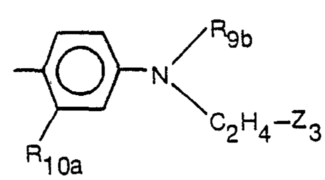 IVbd

IVbe 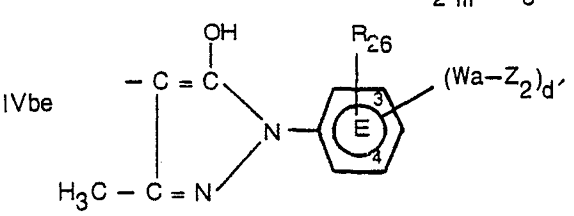

or 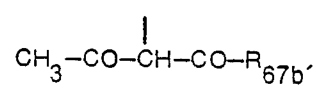 IVbf

where

$R_{9b}$ is $-CH_3$, $-C_2H_5$ or $-C_2H_4-Z_3$;

$R_{66b}$ is hydrogen, $-CH_3$, $-C_2H_5$, $-C_2H_4OH$ or $-(CH_2)_{m'}-Z_3$;

$R_{67b}$ is $-(CH_2)_{m'}-Z_3$, $-NH-(CH_2)_{m'}-Z_3$ or

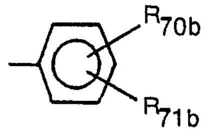

$R_{70b}$ is hydrogen, $-OH$, $-OCH_3$, $-NH-CO-(CH_2)_a-Z_3$, $-CO-NH-(CH_2)_{m'}-Z_3$, $-SO_2-NH-(CH_2)_{m'}-Z_3$ or

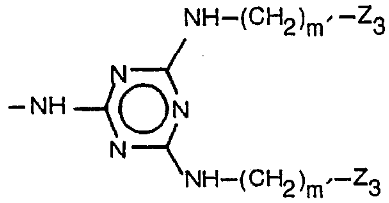 ;

$R_{71b}$ is hydrogen or $-(CH_2)_{m'}-Z_3$;

d′, $R_{26}$ and p is as defined in Claim 1; and

$R_{10a}$ is defined in Claim 2 and Wa—$Z_2$ is defined in Claim 1;

with the provisos that

(i) $R_{61b}$ and $R_{62b}$ cannot both be the same group unless both are hydrogen;

ii) $R_{60}$ and $R_{61b}$ are not both $NO_2$; and

iii) $R_{60}$ is not $-NO_2$ when $_{61b}$ and $R_{62b}$ are both hydrogen.

6. A compound according to Claim 1 of formula IVf

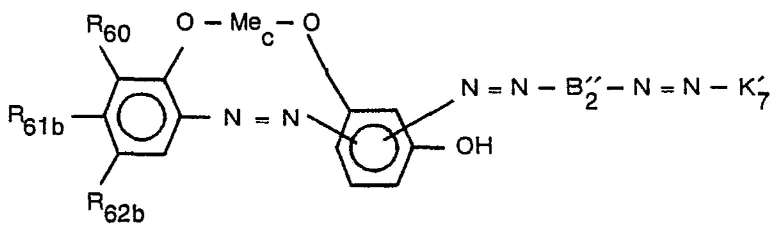

IVf

in which

$R_{60}$ is defined in Claim 1;

$R_{61b}$, $B_2''$, $K_7'$ and $R_{62b}$ are defined in Claim 5; and

$Me_c$ is defined in Claim 3;

with the provisos:

i) that $R_{61b}$ and $R_{62b}$ cannot be the same group unless both are hydrogen;

ii) that $R_{60}$ and $R_{61b}$ are not both $-NO_2$; and

iii) that $R_{60}$ is not $-NO_2$ when $R_{61b}$ and $R_{62b}$ are both hydrogen.

7. A compound according to Claim 1 of formula IVm

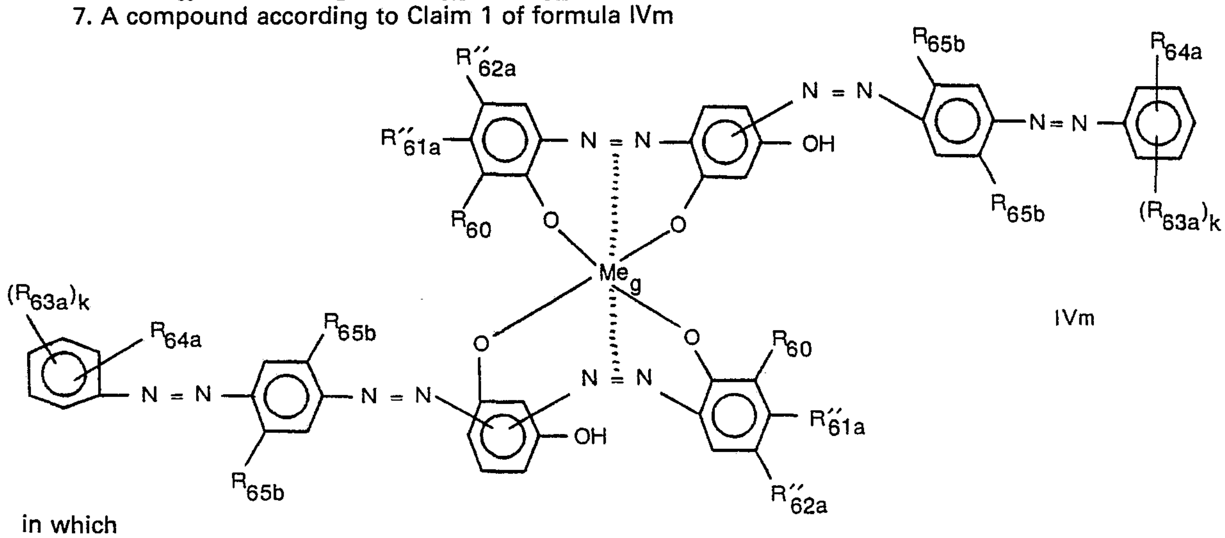

IVm

in which

$R_{60}$ is defined in Claim 1;

$R_{63a}$, k and $R_{64a}$ are defined in Claim 2;
each $R_{65b}$ independently is $—CH_3$ or $—OCH_3$;
$R_{61a}''$ is hydrogen, $—NO_2$, $—NH—CO—CH_2—Z_3$ or

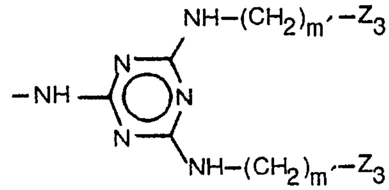

;

$R_{62a}''$ is hydrogen, $—NO_2$, $—SO_2—NH_2$, $—SO_2—N(CH_3)_2$, $—SO_2—NH—(CH_2)_{m'}—Z_3$, $—SO_2—NH—C_2H_4OH$, or when $R_{60}$ and $R_{61a}''$ are both hydrogen, $—CO—NH—(CH_2)_{m'}—Z_3$, $—NH—CO—CH_2—Z_3$ or

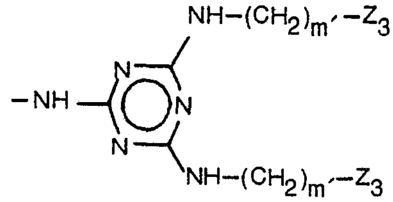

;

m' and $Z_3$ are defined in Claim 5.

8. A method for dyeing a substrate comprising applying to that substrate a compound of formula IV as defined in Claim 1.

9. A substrate to which a compound of formula IV defined in Claim 1 has been applied.

**Patentansprüche**

1. Eine Azoverbindung in metallfreier 1:1- oder 1:2-Metallkomplexform, welche wenigstens, 1,3 wasserlöslich-machende basische Gruppen aufweist un der Formel

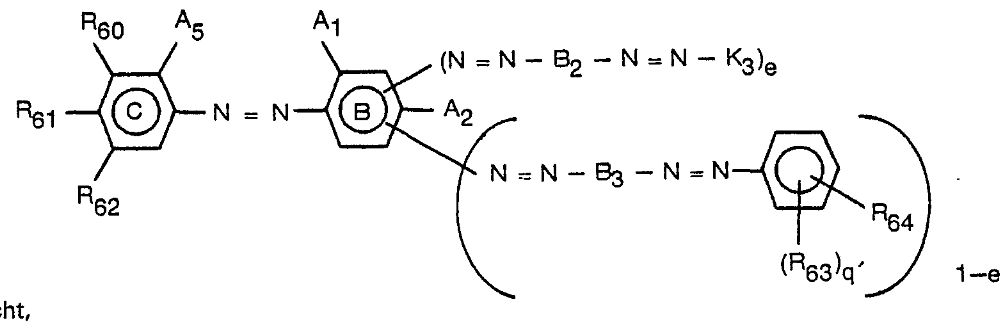

IV

entspricht,
worin
$A_1$ —OH oder $—NH_2$;
$A_2$ —OH oder $—NH_2$;
$A_5$ —OH, $C_{1-4}$ Alkoxy oder —COOH, oder
$A_1$ und $A_5$ zusammen eine Gruppe —NH—Me—NH—, NH—Me—OOC—, —NH—Me—O, —O—Me—O—, —O—Me—OOC— bilden, worin Me für ein Metall steht, das ein 1:1 oder ein 1:2 Metallkomplex oder sowohl ein 1:1- als auch ein 1:2-Metallkomplex bilden kann;
e 0 oder 1;
$R_{60}$ Wasserstoff oder $—NO_2$;
$R_{61}$ und $R_{62}$ unabahängig voneinander Wasserstoff,

$NO_2$, $—CH_2—Z_2$, $—SO_2—NH_2$, $SO_2—NH—(CH_2)_p—Z_2$, $—SO_2—NH—C_2H_4OH$,
$—SO_2—N—(R'_{62})_2$, $—CO—NH—(CH_2)_p—Z_2$, $—NH—CO(CH_2)_p—Z_2$,

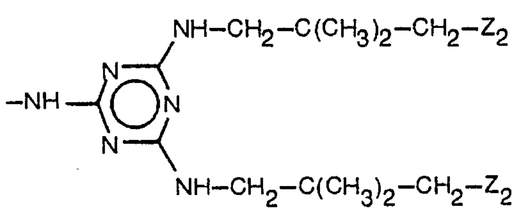

, oder

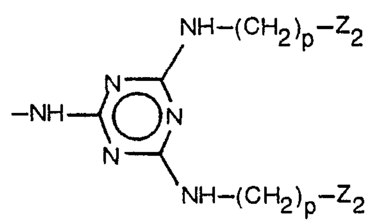

;

worin $R'_{62}$ für $C_{1-4}$Alkyl steht,

$R_{63}$ $-SO_2-NH-(CH_2)_p-Z_2$, $-CO-NH-(CH_2)_p-Z_2$, $-NH-CO-(CH_2)_p-Z_2$ oder

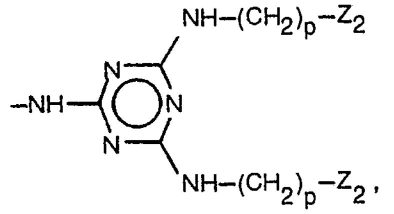

$R_{64}$ Wasserstoff oder $C_{1-4}$Alkoxy; jeder Rest $R_{65}$ unabhangig voneinander $C_{1-4}$Alkyl oder $C_{1-4}$Alkoxy;
p 1, 2 oder 3;
q' 1 oder 2 bedeuten, mit der Bedingung dass, wenn $R_{63}$ für $-CO-NH-(CH_2)_p-Z_2$ steht, q' 2 ist;
worin $K_3$ für eine der nachstehenden Gruppen steht

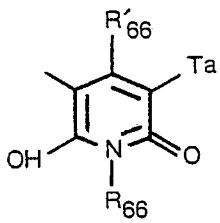

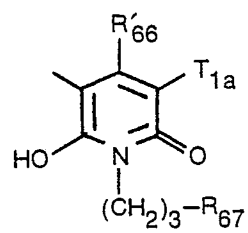

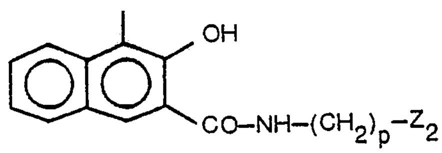

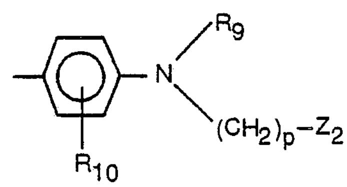

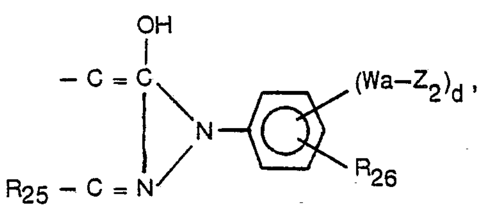

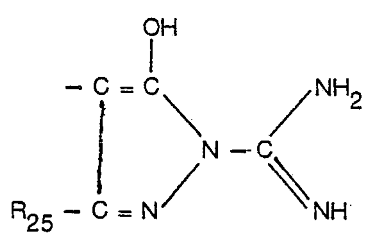

$R_{69}$ $-CO-CH_2-CO-R_{68}$
$R_9$ $C_{1-4}$Alkyl oder $(CH_2)_p-Z_2$;
$R_{10}$ Wasserstoff, $C_{1-4}$Alkyl, $C_{1-4}$Alkoxy, $-NH-COCH_3$ oder $-NHCONH_2$;
$R_{25}$ $C_{1-4}$Alkyl, $-COO(R_{25a})$ oder $-COOH$, worin $R_{25a}$ für $C_{1-4}$Alkyl steht,

$Z_2$ is $-NH_2$, $-N(R_0)_2$, $-\overset{\oplus}{N}(R_0)_3\ A^{\ominus}$, $-\overset{\oplus}{N}(CH_3)_2-(CH_2)_p\ NH_2$

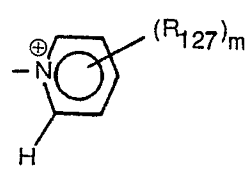 oder $-\overset{\oplus}{N}(CH_2)_3-(CH_2)_p-N(CH_3)_2\ A^{\ominus}$

worin
m 0, 1 oder 2;
$A^{\ominus}$ ein nicht-chromophores Anion,
$R_{127}$ Methyl oder Aethyl; jeder der Rest $R_0$ unabhängig voneinander Methyl, Aethyl, β-Hydroxyäthyl, Benzyl, $-CH_2COCH_3$,

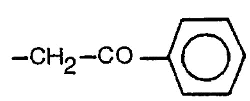

mit der Bedingung, dass nicht mehr als ein Benzylrest, $-CH_2COCH_3$ oder

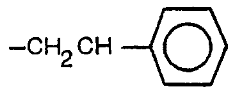

un nicht mehr als zwei β-Hydroxyäthyl-Gruppen am N-Atom gebunden sind,

$R_{66}$ Wasserstoff, $C_{1-4}$Alkyl, $-C_2H_4OH$ oder $-(CH_2)_pZ_2$;

$R'_{66}$ $C_{1-4}$Alkyl,

Ta eine Gruppe der Formel

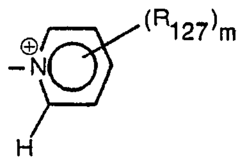

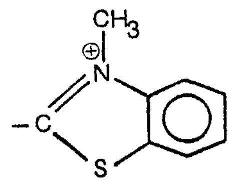 $A^{\ominus}$

$T_{1a}$ —CN oder —CO—$NH_2$;

$R_{67}$ $-N(CH_3)_2$ oder $-N^{\oplus}(CH_3)_3$ $A^{\ominus}$

$R_{66}$ $-(CH_2)_p-Z_2$, $-NH-(CH_2)_p-Z_2$ oder

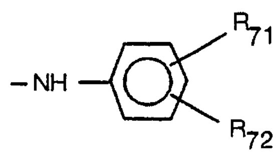 ;

worin $R_{71}$ für Wasserstoff, —OH, $C_{1-4}$Alkoxy,

$-NH-CO-(CH_2)_p-Z_2$, $-CO-NH(CH_2)_pZ_2$, $-SO_2-NH-(CH_2)_p-Z_2$, $-(CH_2)_p-Z_2$ oder

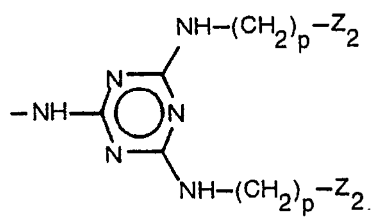 ;

und

$R_{72}$ für Wasserstoff oder $-(CH_2)_p-Z_2$ steht;

$R_{69}$ $C_{1-4}$Alkyl oder $(CH_2)_p-Z_2$, worin p und $Z_2$ die obigen Bedeutungen besitzen,

$B_2$ is 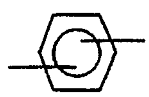 oder 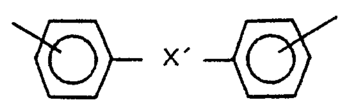

$B_3$ 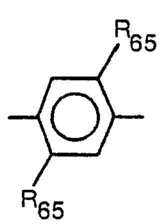 , 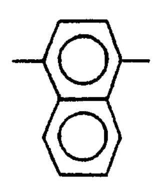 oder 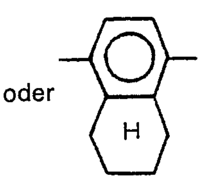

worin jeder der Reste $R_{65}$ unabhängig voneinander Wasserstoff, $C_{1-4}$Alkyl oder $C_{1-4}$Alkoxy bedeuten und X' die obige Bedeutung hat,

Wa $-(CH_2)_s$, $-NHCO(C^*H_2)_s-$, $-CONH-(C^*H_2)_s$ oder $-SO_2NH(C^*H_2)_s$; worin für 1, 2, 3, 4, 5 oder 6 steht und das mit * bezeichnete C-Atom an das N-Atom der Gruppe $Z_2$ bebunden ist,

d' 0 der 1;

$R_{26}$ Wasserstoff, Halogen, $C_{1-4}$Alkyl oder $C_{1-4}$Alkoxy;

X' ein de Gruppen von $X_1$ bis $X_{53}$ bedeuten,

$X_1$ die direkte Bindung,

$X_2$ eine geradkettige oder verzweigte Alkylengruppe mit $_{1-4}$C-Atomen,

$X_3$ $-CO-$, $X_4$ 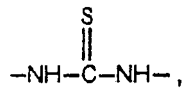, $X_5$ $-S-$, $X_6$ $-O-$, $X_7$ $-CH=CH-$, $X_8$ $-S-S-$,

$X_9$ $-SO_2-$, $X_{10}$ $-NH-$, $X_{11}$ $-NH-CO-$, $X_{12}$ 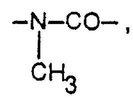, $X_{13}$ 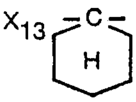

$X_{14}$ 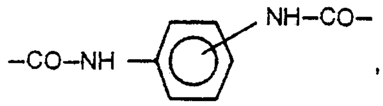, $X_{15}$ 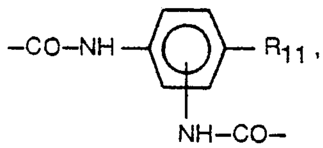,

$X_{16}$ 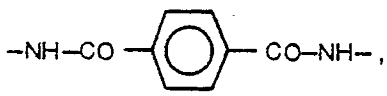, $X_{17}$ $-SO_2-NH-$, $X_{18}$ 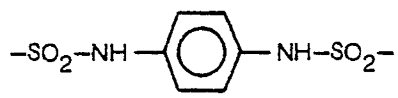,

$X_{19}$ 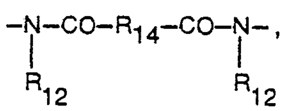, $X_{20}$ 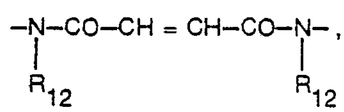, $X_{21}$ 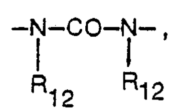,

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 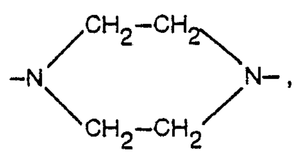,

$X_{26}$ 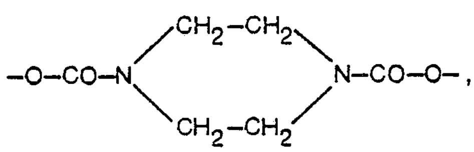, $X_{27}$ 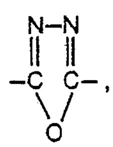, $X_{28}$ 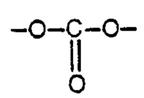,

$X_{29}$ 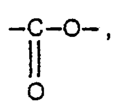, $X_{30}$ 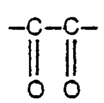, $X_{31}$ $-O-(CH_2)_q-O-$, $X_{32}$ 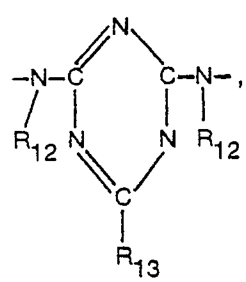

$X_{33}$ 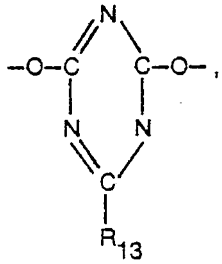, $X_{34}$ 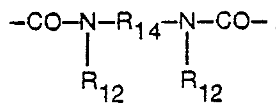, $X_{35}$ 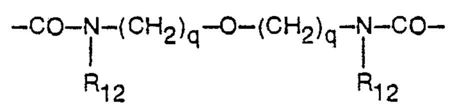

$X_{36}$ 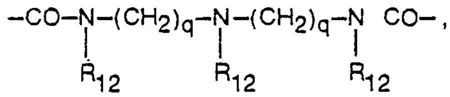

$X_{37}$ 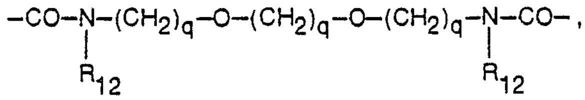, $X_{38}$ 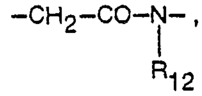,

$X_{39}$ 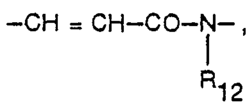, $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-OS-NH-CH_2-$, $X_{47}$ 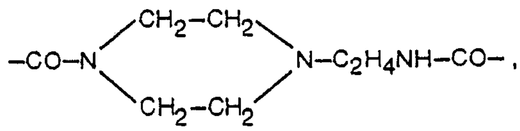,

$X_{48}$ 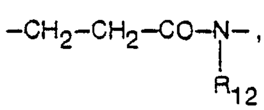, $X_{49}$ $-NH-CO-NH-$, $X_{50}$ $-O-(CH_2)_q-O-$,

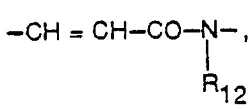, $X_{52}$ 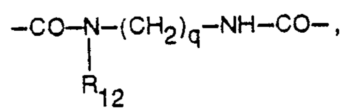, $X_{53}$ 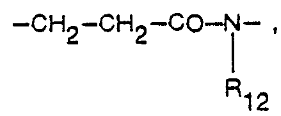,

worin

$R_{11}$ Halogen, $C_{1-4}$Alkyl oder $C_{1-4}$Alkoxy,

$R_{12}$ Wasserstoff oder $C_{1-4}$ oder $C_{1-4}$Alkyl;

$R_{13}$ Halogen, $-NH-CH_2-CH_2-OH$ oder $-N(CH_2-CH_2OH)_2$;

$R_{14}$ eine geradkettige oder verzweigte $C_{1-4}$-Alylengruppe und q 1, 2, 3 oder 4 bedeuten, mit den Bedingungen

(i) dass $R_{60}$ und $R_{61}$ nich gleichzeitig für $-NO_2$ stehen,

(ii) dass, falls $R_{61}$ und $R_{62}$ Wasserstoff bedeuten, $R_{60}$ nicht $-NO_2$ sein darf,

(iii) dass $R_{61}$ und $R_{62}$ nicht die gleiche Gruppe bedeuten mit Ausnahme von Wasserstoff und

(iv) dass jede Azobrücke im Ring B in ortho-Stellung zu $A_1$ oder $A_2$ steht.

2. Eine Verbindung gemäss Anspruch 1 in der metallfreien Form der Formel

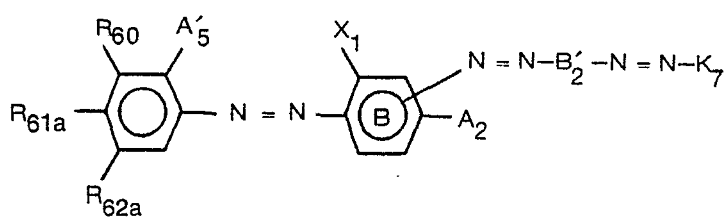

IVa,

worin

$A'_5$ $-OH$ oder $-OCH_3$,

$R_{61a}$ Wasserstoff,

$-NO_2$, $CH_2-Z_2$, $-SO_2-NH-(CH_2)_p-Z_2$, $-NH-CO-(CH_2)_p-Z_2$ oder

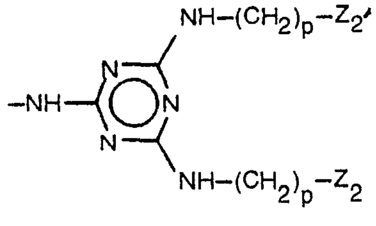

$R_{62a}$ Wasserstoff,

$—NO_2$, $—CH_2—Z_2$, $—SO_2—NH_2$, $—SO_2—NH—(CH_2)_pZ_2$,

$—CO—NH(CH_2)_p—Z_2$, $—NH—CO(CH_2)_p—Z_2$,

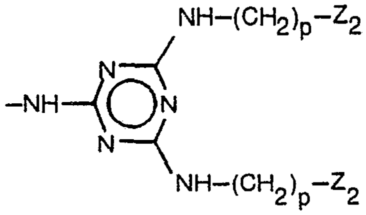

oder

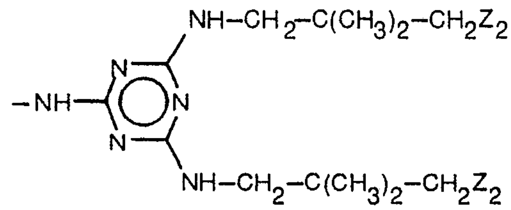

.

$B_2'$ is 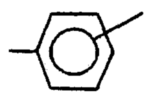 oder 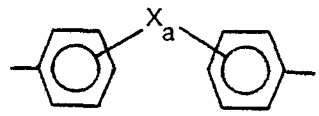 ;

$K_7$ für eine der nachstehenden Gruppen IVaa bis IVaf steht

IVaa

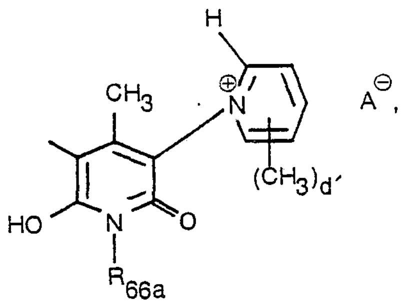

,

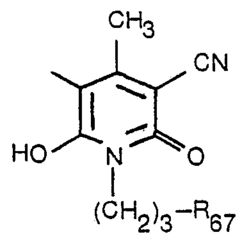

IVab

IVac

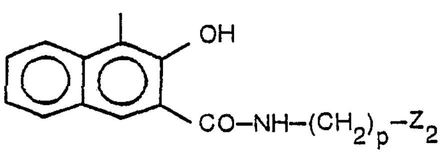

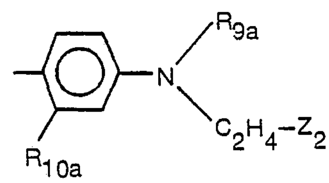

IVad

IVae

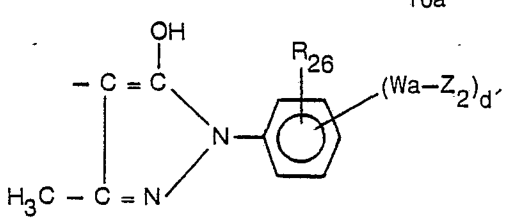

IVaf

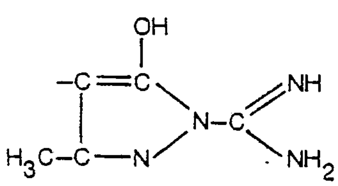

oder

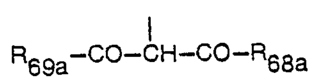

IVag

worin

$R_{9a}$ $—CH_3$, $—C_2H_5$ oder $—C_2H_4Z_2$;

Wa $—(CH_2)_s$, $—NHCO(C^*H_2)_s—$, $—CONH(C^*H_2)_s$ oder $—SO_2NH(C^*H_2)_s$, worin das mit * bezeichnete C-Atom am N-Atom der Gruppe $Z_2$ gebunden ist und s 1, 2, 3, 4, 5 oder 6, d 0 oder 1;

$R_{10a}$ Wasserstoff, $—CH_3$, $OCH_3$, $—NH—CO—CH_3$ oder $—NH—CO—NH_2$;

$R_{66a}$ Wasserstoff, $—CH_3$, $—CH_2H_5$, n-$C_3H_7$, n-$C_4H_9$, i-$C_3H_7$, i-$C_4H_9$, $—C_2H_4OH$ oder $—(CH_2)_p—Z_2$;

$R_{68a}$ $—(CH_2)_p—Z_2$, $—NHU—(CH_2)_p—Z_2$ oder

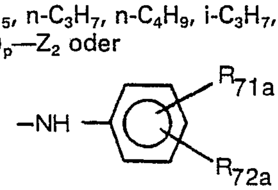

;

$R_{69a}$ $—CH_3$, $—C_2H_5$ oder $—(CH_2)_p—Z_2$;

$R_{71a}$ Wasserstoff, OH, $-OCH_3$, $-NH-CO-(CH_2)_p-Z_2$, $-CO-NH-(CH_2)_p-Z_2$, $-SO_2-NH-(CH_2)_p-Z_2$ oder

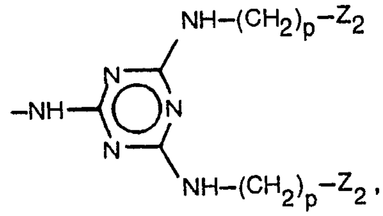

$R_{72a}$ Wasserstoff oder $-(CH_2)_p-Z_2$;

$X_a$ für $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ steht oder für eine der folgenden Gruppen

$X'_2-CH_2-$, $X''_2-(CH_2)_2-$, $X'''_2-(CH_2)_3-$,

$X^{iv}_2$ $-(CH_2)_4-$, $X'_{14}$ 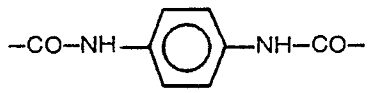

$X'_{15}$ 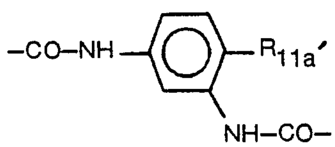 $X'_{19}$ $-NH-CO-CH_2-CH_2-CO-NH-$,

$X''_{19}$ $-NH-CO-(CH_2)_4-CO-NH-$, $X'''_{19}$ 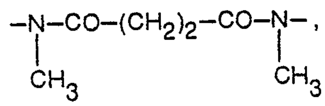

$X'_{20}$ $-NH-CO-CH=CH-CO-NH-$, $X''_{20}$ 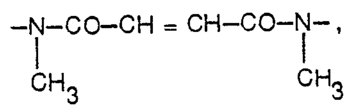

$X'_{21}$ 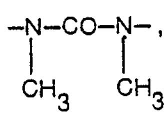 $X'_{32}$ 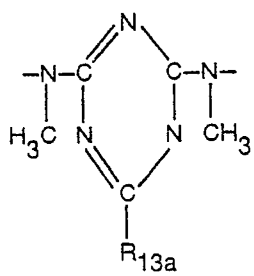

$X''_{32}$ 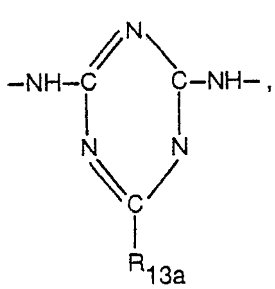 $X'_{34}$ $-CO-NH-(CH_2)_2-NH-CO-$,

$X''_{34}$ $-CO-NH-(CH_2)_3-NH-CO-$, $X'''_{34}$ $-CO-NH-(CH_2)_4-NH-CO-$,

$X_{34}^{iv}$ 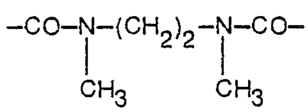 , $X_{34}^{v}$ 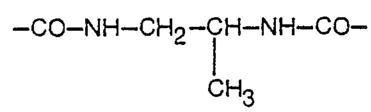 ,

$X_{34}^{vi}$ 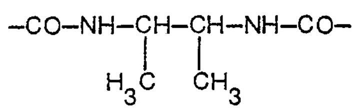 , $X_{14}''$ 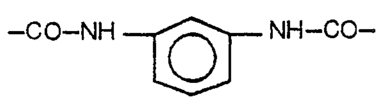 ,

$X_{15}''$ 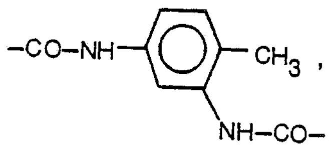 , $X_{15}'''$ 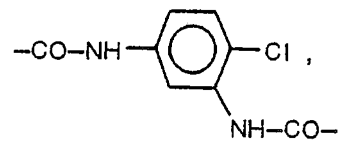 ,

$X_{15}^{iv}$ 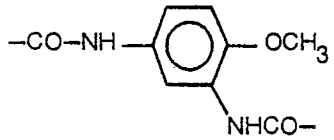 , $X_{32}'''$ 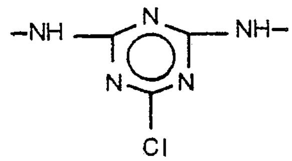 ,

$X_{32}^{iv}$ 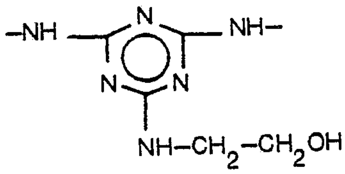 , $X_{32}^{v}$ 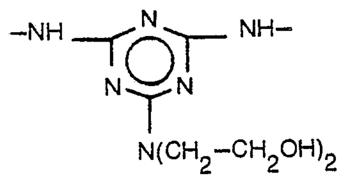 ,

$X_{32}^{vi}$ 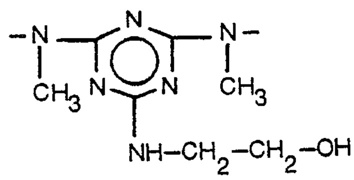 , $X_{33}'$ 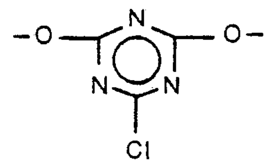 ,

$X_{33}''$ 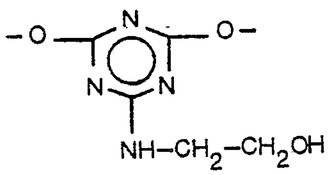 , $X_{33}'''$ 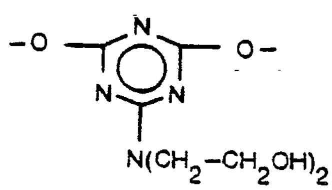 ,

$X_{35}'$ $-CO-NH-(CH_2)_2-O-(CH_2)_2-NH-CO-$,

$X_{35}''$ $-CO-NH-(CH_2)_2-O-(CH_2)_2-O-(CH_2)_2-NH-CO-$,

$X_{36}'$ $-CO-NH-(CH_2)_2-NH-(CH_2)_2-NH-CO-$,

$X_{36}''$ 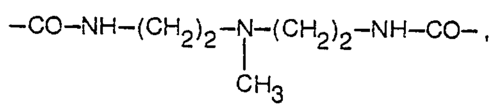 , $X_{48}'$ 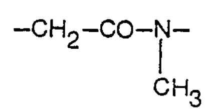 ,

$X_{50}'$ $-O-CH_2-CH_2-O-$, $X_{50}''$ $-O-(CH_2)-O-$, $X_{51}'$ $-CH=CH-CO-NH-$,

$X_{51}''$ 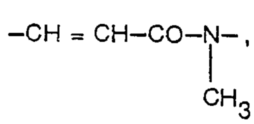 , $X_{52}'$ 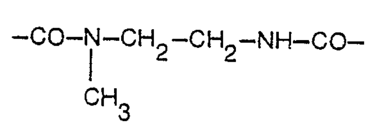 ,

$X_{53}'$ $-CH_2-CH_2-CO-NH-$, $X_{53}''$ 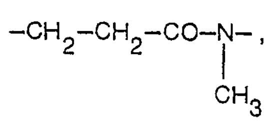 , steht.

worin

$R_{11a}$ Wasserstoff, $—Cl$, $—CH_3$ oder $—OCH_3$ und

$R_{13a}$ $—Cl$, $—NH—CH_2—OH$ oder $—N(CH_2—CH_2—OH)_2$ bedeuten, mit den Bedingungen,

(i) dass jede Azobrücke in B in ortho-Stellung zu $A_1$ oder $A_2$ oder zu $A_1$ und $A_2$ steht,

(ii) dass $R_{61a}$ und $R_{62a}$ nicht für die gleiche Gruppe stehen mit Ausnahme von Wasserstoff,

(iii) dass $R_{60}$ und $R_{61a}$ nich gleichzeitig $—NO_2$ bedeuten und

(iv) dass $R_{60}$ nich für $—NO_2$ steht, wenn $R_{61a}$ und $R_{62a}$ Wasserstoff bedeuten, oder eine Verbindung der Formel IVc,

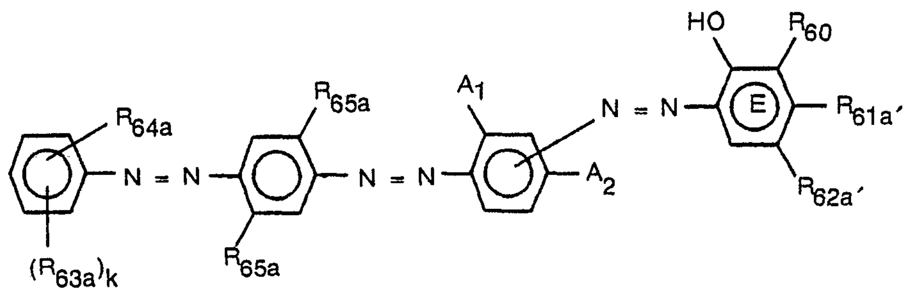

IVc

worin

$R_{63a}$

$$—SO_2—NH—(CH_2)_{m'}—Z_2,\ —CO—NH—(CH_2)_{m'}—Z_2,$$

$$—NH—CO(CH_2)_a—Z_2,\ —CH_2—Z_2 \text{ oder}$$

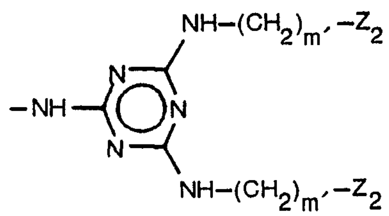

;

jeder der Reste

$R_{65a}$ unabhängig voneidander $—CH_3$, $—C_2H_5$, $—OCH_3$ oder $—OC_2H_5$;

$R_{64a}$ Wasserstoff oder $—OCH_3$;

k 1 oder 2, aber nur 2 wenn $R_{63a}$ für die Gruppe $—CO—NH—(CH_2)_{m'}—Z_2$ steht,

$R_{61}'_a$ Wasserstoff, $—NO_2$, $—NH—CO—(CH_2)_a—Z_2$ oder

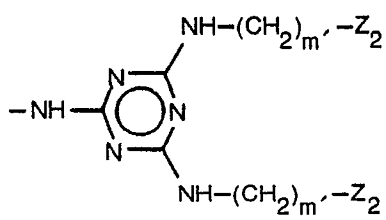

;

$R_{62}'_a$ Wasserstoff $—NO_2$, $—SO_2—NH_2$, $—SO_2—N(CH_3)_2$, $—SO_2—N(C_2H_5)_2$, $—SO_2—NH—C_2H_4OH$, $—SO_2—NH—(CH_2)_{m'}—Z_2$ bedeuten oder, falls $R_{60}$ und $R_{61}'_a$ Wasserstoff bedeuten, zusätzlich für $—CO—NH—(CH_2)_a—Z_2$, $—NH—CO—(CH_2)_a—Z_2$ oder

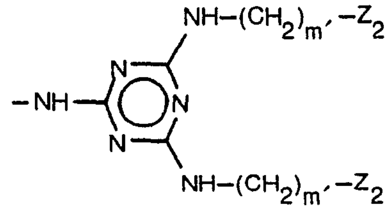

;

stehen, und

a 1 oder 2 is; unter den Bedingungen

(i) dass $R_{60}$ und $R_{61}'_a$ nicht gleichzeitig $—NO_2$ sind,

(ii) dass $R_{61}'_a$ und $R_{62}'_a$ nich für die gleiche Gruppe stehen, mit Ausnahme von Wasserstoff und

(iii) dass $R_{60}$ nicht $—NO_2$ ist, falls $R_{61}'_a$ und $R_{62}'_a$ nich gleichzeitig Wasserstoff bedeuten.

3. Eine Verbindung gemäss Anspruch 1 in der 1:1 Metallkomplexform der Formel

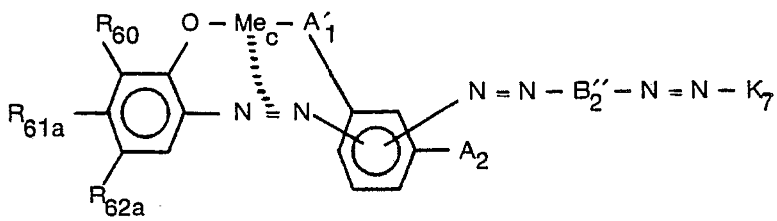

IVe

worin

$R_{60}$ und $A_2$ im Anspruch 1 definiert sind,

$A_1'$ —NH—, —OOC— oder —O—;

$Me_c$ Kupfer, Kobalt oder Chrom,

$R_{61a}$ Wasserstoff, $—NO_2$, $—CH_2—Z_2$, $—SO_2—NH(CH_2)_p—Z_2$, $—NH—CO(CH_2)_p—Z_2$ oder

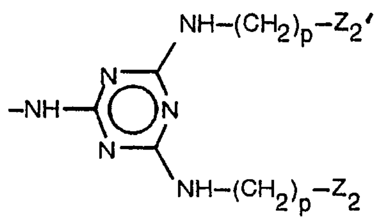

$—NO_2$, $—CH_2—Z_2$, $—SO_2—NH_2$, $—SO_2—NH—(CH_2)_p—Z_2$,

$—CO—NH—(CH_2)_p—Z_2$, $—NH—CO(CH_2)_p—Z_2$,

$R_{62a}$ Wasserstoff,

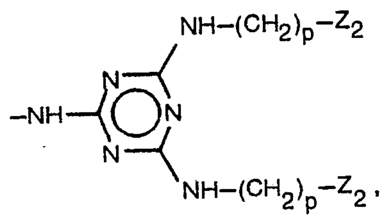

oder

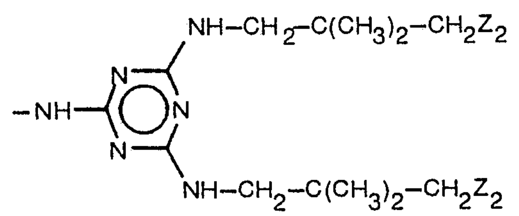

$B_2'$

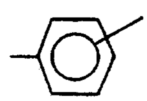

oder

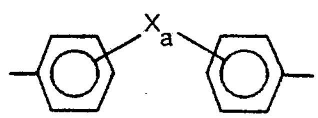

;

$K_7$ eine der Gruppen IVaa bis IVaf

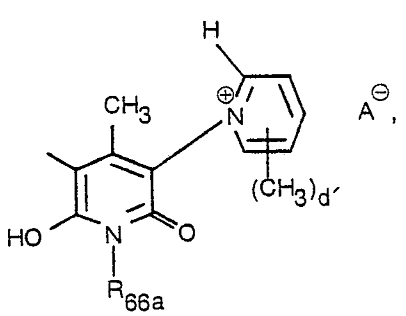

IVaa

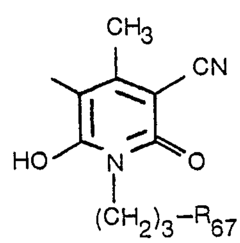

, IVab

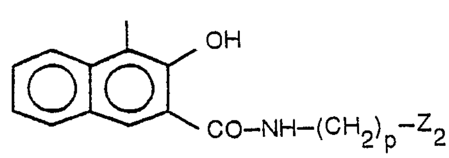

IVac

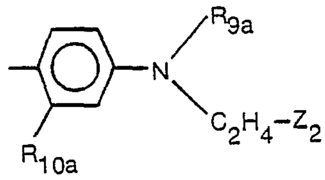

IVad

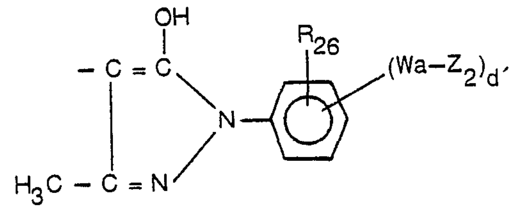

IVae

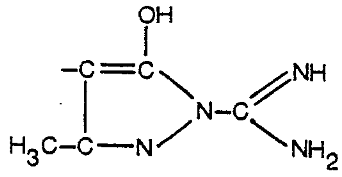

IVaf oder $R_{69a}-CO-CH-CO-R_{68a}$ IVag

oder eine Verbindung der Formel IVg

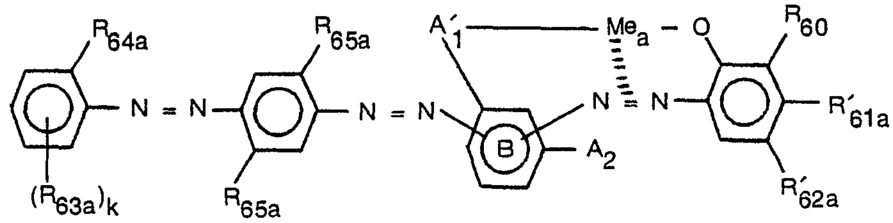

IVg

bedeuten, worin

$R'_{61a}$ Wasserstoff, $—NO_2$, $—NH—CO(CH_2)_a—Z_2$ oder

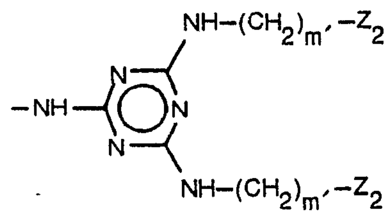

;

$R'_{62a}$ Wasserstoff, $—NO_2$, $—SO_2—NH_2$, $—SO_2—N(CH_3)_2$, $—SO_2—N(C_2H_5)_2$, $—SO_2—NH—C_2H_4OH$, $—SO_2—NH—(CH_2)_m—Z_2$, oder, falls $R_{60}$ und $R_{61a}'$ für Wasserstoff stehen, zusätzlich $—CO—NH—(CH_2)_a—Z_2$, $—NH—CO—(CH_2)_a—Z_2$ oder

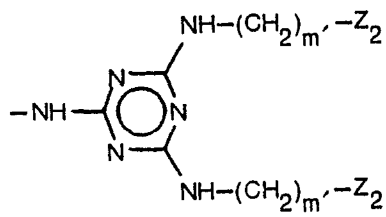

; und

$R_{63a}$ $—SO_2—NH—(CH_2)_{m'}—Z_2$, $—CO—NH(CH_2)$ 48'$—Z_2$, $—NH—CO—(CH_2)_a—Z_2$, $—CH_2—Z_2$ oder

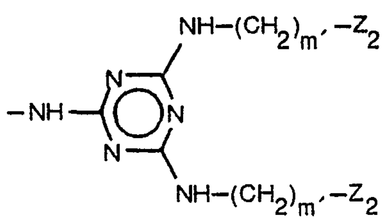

;

$R_{64a}$ Wasserstoff oder $—OCH_3$;

k 1 oder 2, aber nur 2 fall $R_{63a}$ für eine Gruppe $—CO—NH—(CH_2)_{m'}—Z_2$ steht, jeder der Reste $R_{65a}$ unbhängig voneinander $—CH_3$, $—CH_2H_5$, $—OCH_3$ oder $—OC_2H_5$, und die Symbole $R_{9a}$, Wa, $R_{10a}$, m', $R_{66a}$, $R_{69a}$ und

$R_{69a}$ in Anspruch 2 definiert sind; mit den Bedingungen
(i) dass $R_{60}$ und $R'_{61a}$ nicht gleichzeitig $—NO_2$ sind,
(ii) dass $R'_{61a}$ und $R'_{62a}$ nicht die gleiche Gruppe bedeuten mit Ausnahme von Wasserstoff und
(iii) dass $R_{60}$ nicht $—NO_2$ ist, falls $R'_{61a}$ und $R'_{62a}$ für Wasserstoff stehen.

4. Eine Verbindung gemäss Anspruch 1 in der 1:2-Metallkomplexform der Formel IVi

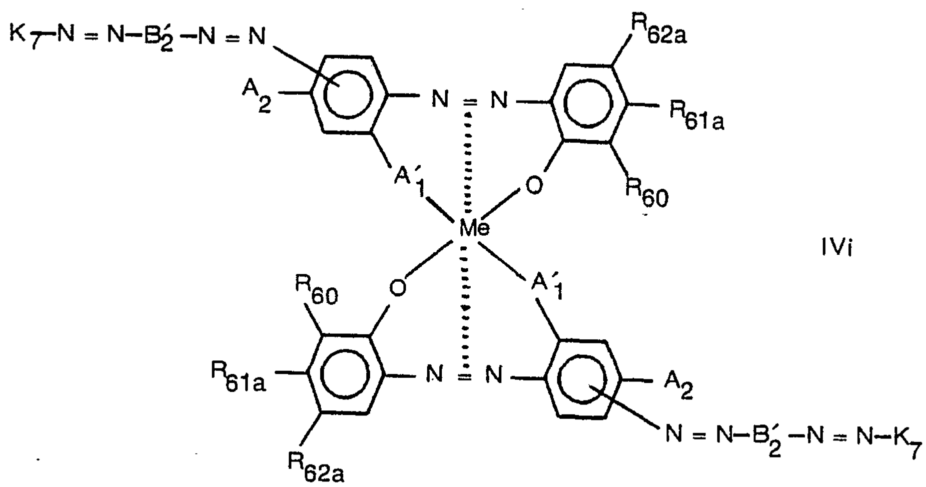

IVi

worin
Me Chrom, Eisen oder Kobalt,
A' —O—, —NH— oder —COO— bedeuten
$R_{60}$ und $A_2$ gemäss Anspruch 1 definiert sind,
$R_{61a}$ Wasserstoff, $—NO_2$, $—CH_2—Z_2$, $—SO_2—NH—(CH_2)_p—Z_2$, $—NH—CO(CH_2)_p—Z_2$ oder

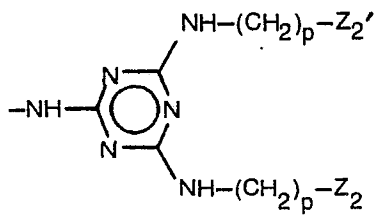

$R_{62a}$ Wasserstoff,

$$—NO_2, —CH_2—Z_2, —SO_2—NH_2, —SO_2—NH—(CH_2)_p—Z_2,$$

$$—CO—NH—(CH_2)_p—Z_2, —NH—CO—(CH_2)_p—Z_2,$$

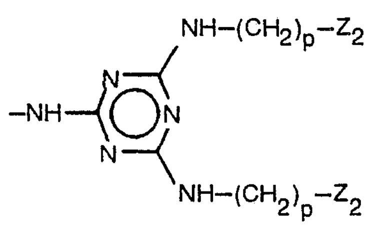

oder 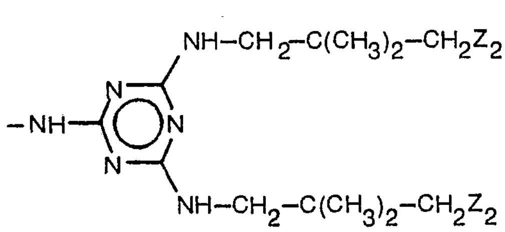 ,

$B'_2$ is 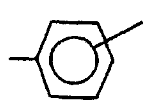 oder 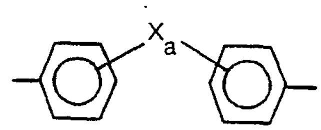 ;

$K_7$ für eine der Gruppen IVaa bis IVaf

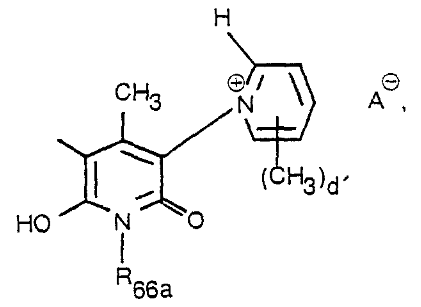

IVaa

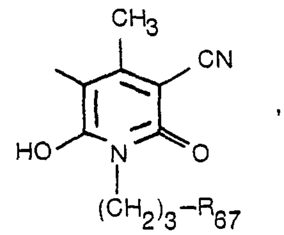

, IVab

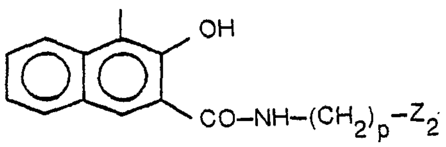

IVac

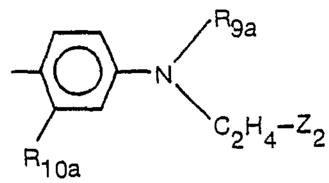

IVad

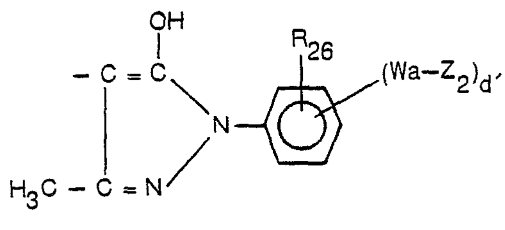

IVae

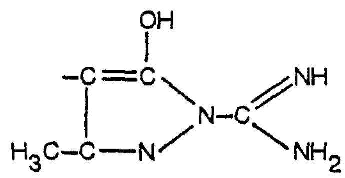

IVaf

oder 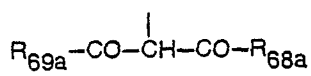

IVag stehen, worin die Symbole $R_{9a}$, Wa, $R_{10a}$, $R_{68a}$, $R_{69a}$ und m in Anspruch 2 definiert sind, mit der Bedingung

i) dass $R_{60}$ und $R'_{61a}$ nicht gleichzeitig $-NO_2$ sind;

ii) dass $R'_{61a}$ und $R'_{62a}$ nicht die gleichen Gruppen sind

iii) dass $R_{60}$ nich $-NO_2$ ist, wenn $R'_{61a}$ und $R'_{62a}$ Wasserstoff bedeuten, oder eine Verbindung der Formel IVI

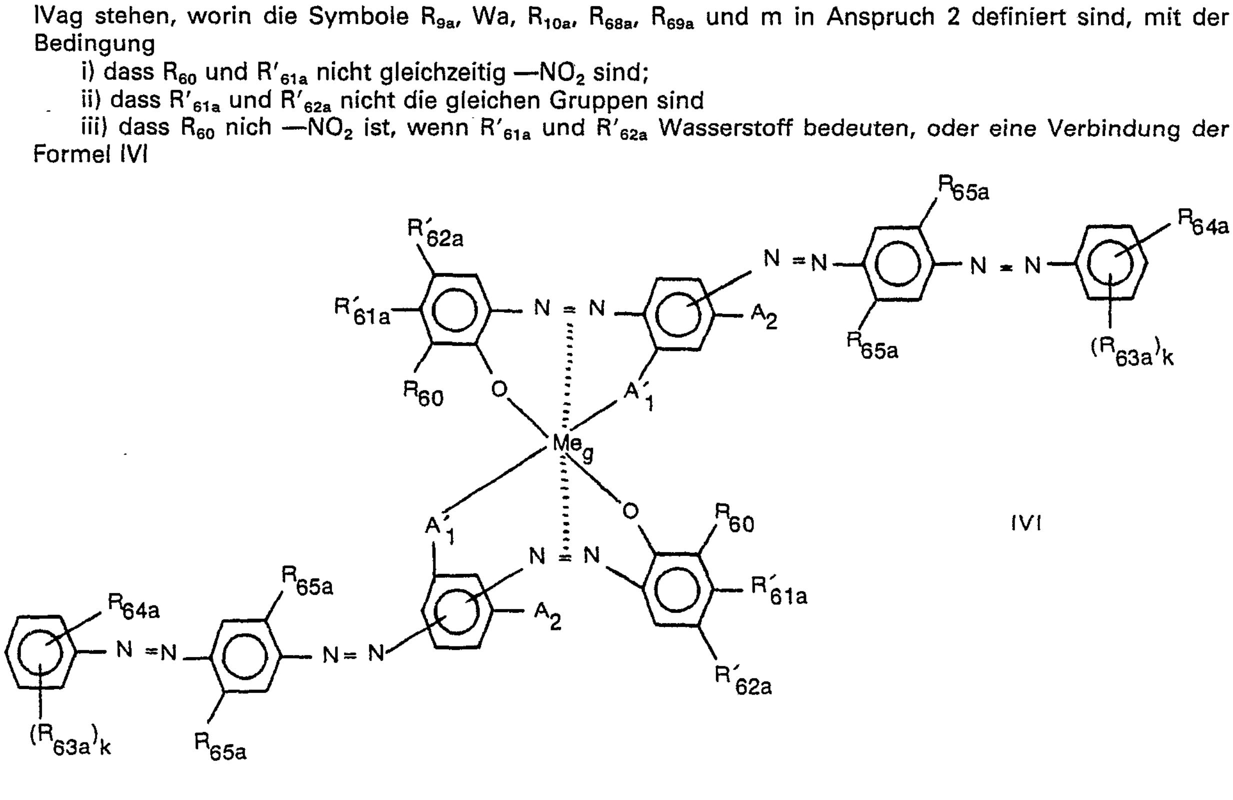

IVI

worin

$R_{60}$ und $A_2$ in Anspurch 1 definiert sind,
$Me_g$ Kobalt, Eisen oder Chrom,
$R'_{61a}$ Wasserstoff, $-NO_2$, $-NH-CO-(CH_2)_a-Z_2$ oder

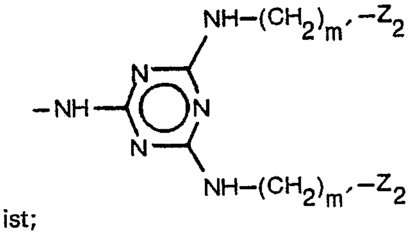

;

bedeuten, worin a 1 oder 2 ist;

$R'_{62a}$ Wasserstoff,

$$-NO_2,\ -SO_2-NH_2,\ -SO_2-N(CH_3)_2, -SO_2-N(C_2H_5)_2,$$

$$-SO_2-NH-C_2H_4OH,\ -SO_2-NH-(CH_2)_{m}'Z_2,$$

oder falls $R'_{60}$ und $R'_{61a}$ Wasserstoff bedeuten, zusätzlich für $-CO-NH-(CH_2)_a-Z_2$, $-NH-CO(CH_2)_a-Z_2$ oder

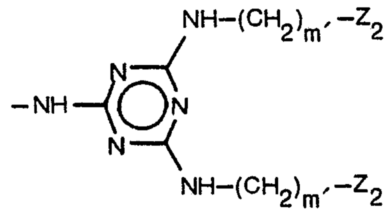

stehen, und

$R_{63a}$ $-SO_2-NH-(CH_2)_{m'}-Z_2$, $-CO-NH-(CH_2)_{m'}-Z_2$, $-NH-CO-(CH_2)_a-Z_2$, $-CH_2-Z_2$ oder

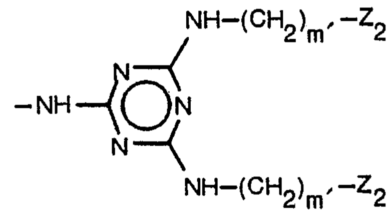

bedeuten,

jeder der Reste $R_{65a}$ unabhängig voneinander $-CH_3$, $-C_2H_5$ oder $-OC_2H_5$;

$R_{64a}$ Wasserstoff oder $-OCH_3$; k 1 oder 2, aber nur 2, falls $R_{63a}$ für eine Gruppe $-CO-NH-(CH_2)_{m'}-Z_2$ steht, mit den Bedingungen,

(i) dass $R_{60}$ und $R'_{61a}$ nicht gleichzeitig $NO_2$ sind,
(ii) dass $R'_{61a}$ und $R'_{62a}$ nicht die gleiche Gruppe bedeuten mit Ausnahme von Wasserstoff und
(iii) dass $R_{60}$ nicht $-NO_2$ ist, falls $R'_{61a}$ und $R'_{62a}$ gleichzeitig Wasserstoff bedeuten.

5. Eine Verbindung gemäss Anspruch 1 der Formel IVb

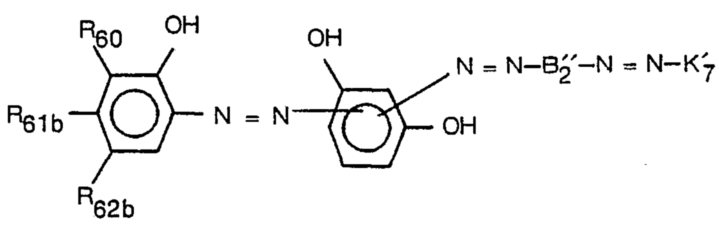

IVb

worin

$R_{60}$ die in Anspruch 1 genannte Bedeutung besitzt,
$R_{61b}$ Wasserstoff, $-NO_2$, $-CH_2-Z_3$, $-SO_2-NH-(CH_2)_{m'}-Z_3$, $-NH-CO-(CH_2)_a-Z_3$ oder

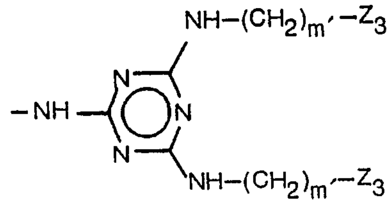

;

$R_{62b}$ Wasserstoff,

$NO_2$, $—CH_2—Z_3$, $—SO_2—NH_2$, $—SO_2—NH—(CH_2)_{m'}—Z_3$, $—CO—NH—(CH_2)_{m'}—Z_3$;

$—NH—CO—(CH_2)_a—Z_3$ oder

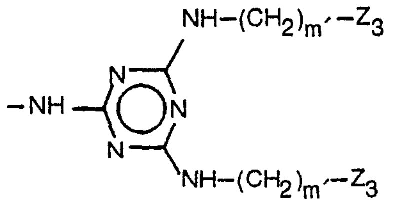

; $B_2''$ 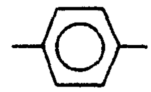 oder 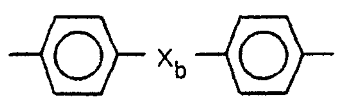

bedeuten, worin

$X_b$ für $X_1$, $X_{11}$, $X_{12}$, $X_{17}$, $X_{27}$, $X_{49}$, $X_2''$, $X_{14}'$, $X_{19}'$, $X_{19}''$, $X_{19}'''$, X20', X20'', $X_{32}'$, $X_{34}'$, $X_{34}^{iv}$, $X_{34}^{v}$ oder $X_{34}^{vi}$ steht, worin $X_1$ bis $X_{49}$ in Anspruch 1 definiert sind und die übrigen Symbole in Anspruch 2 definiert sind;

$Z_3$ is $-N(CH_3)_2$, $-\overset{\oplus}{N}(CH_3)_3$ $A^{\ominus}$, 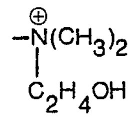 $A^{\ominus}$, 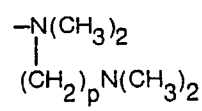

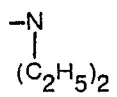 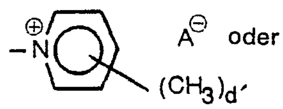 $A^{\ominus}$ oder 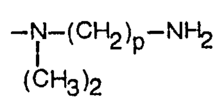 $A^{\ominus}$

m' 2 oder 3; a 1 oder 2;
d' 0 oder 1;
$K_7$ eine der Gruppen der Formel IVba bis IVbf

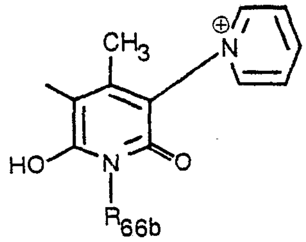 $A^{\ominus}$ IVba

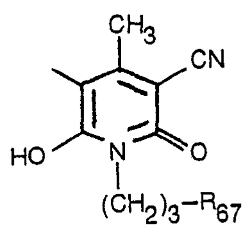 IVbb

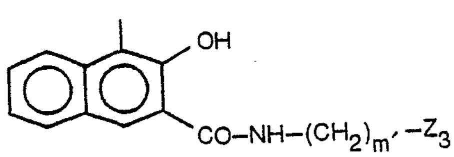 IVbc

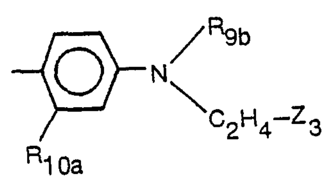 IVbd

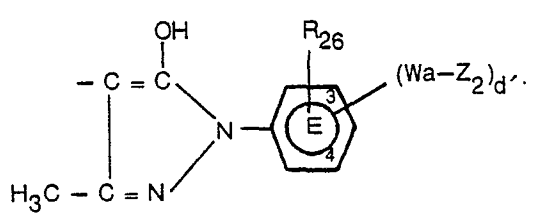 IVbe

oder 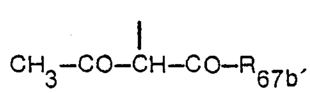 IVbf

worin

$R_{9b}$ $-CH_3$, $C_2H_5$ oder $-C_2H_4-Z_3$;
$R_{66b}$ Wasserstoff, $-CH_3$, $C_2H_5$, $-C_2H_4OH$ oder $-(CH_2)_{m'}-Z_3$ ;
$R_{67}$ $-(CH_2)_{m'}-Z_3$, $-NH-(CH_2)_{m'}-Z_3$ oder

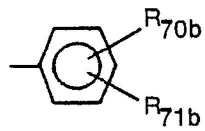

$R_{70b}$ Wasserstoff, $-OH$, $-OCH_3$, $-NH-CO-(CH_2)_a-Z_3-$, $-CO-NH-(CH_2)_{m'}-Z_3$, $-SO_2-NH-(CH_2)_{m'}-Z_3$ oder

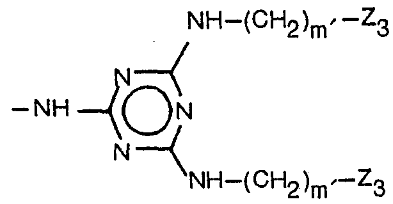

;

$R_{71b}$ Wasserstoff oder $-(CH_2)_{m'}-Z_3$ bedeuten, und
d', $R_{26}$ und $_p$ und Wa—Z die in Anspruch 1 angegebenen Bedeutungen besitzen und $R_{10a}$ die in Anspruch 2 angegeben Bedeutung besitzt, mit den Bedingungen, dass
(i) $R_{61b}$ und $R_{61b}$ nicht die gleiche Gruppe bedeuten mit Ausnahme von Wasserstoff, dass
(ii) $R_{60}$ und $R_{61b}$ nicht gleichzeitig für $NO_2$ stehen und dass
(iii) $R_{60}$ nicht $NO_2$ ist, falls $R_{61b}$ und $R_{62b}$ Wasserstoff bedeuten.

6. Eine Verbindung gemäss Anspruch 1 der Formel IVf

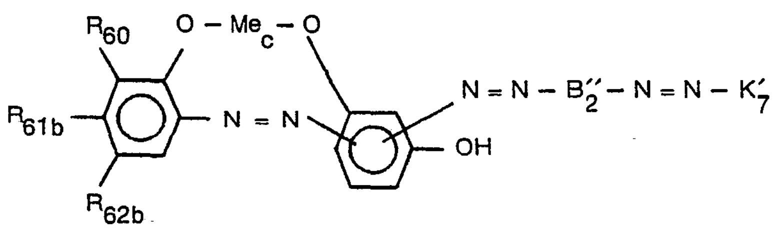

IVf

worin
$R_{60}$ die in Anspruch 1 angegebene Bedeutung besitzt,
$R_{61b}$, $B_2''$, $K_7'$ und $R_{62b}$ die in Anspruch 5 angegebenen Bedeutungen besitzt, und
$Me_c$ die in Anspruch 3 angegebene Bedeutung besitzt, mit den Bedingungen, dass
(i) $R_{61b}$ und $R_{62b}$ nicht die gleiche Gruppe bedeuten mit Ausnahme von Wasserstoff,
(ii) dass $R_{60}$ und $R_{61b}$ nicht gleichzeitig für $-NO_2$ stehen und dass
(iii) $R_{60}$ nicht $-NO_2$ ist, falls $R_{61b}$ und $R_{62b}$ gleichzeitig Wasserstoff bedeuten.

7. Eine Verbindung gemäss Anspruch 1 der Formel IVm

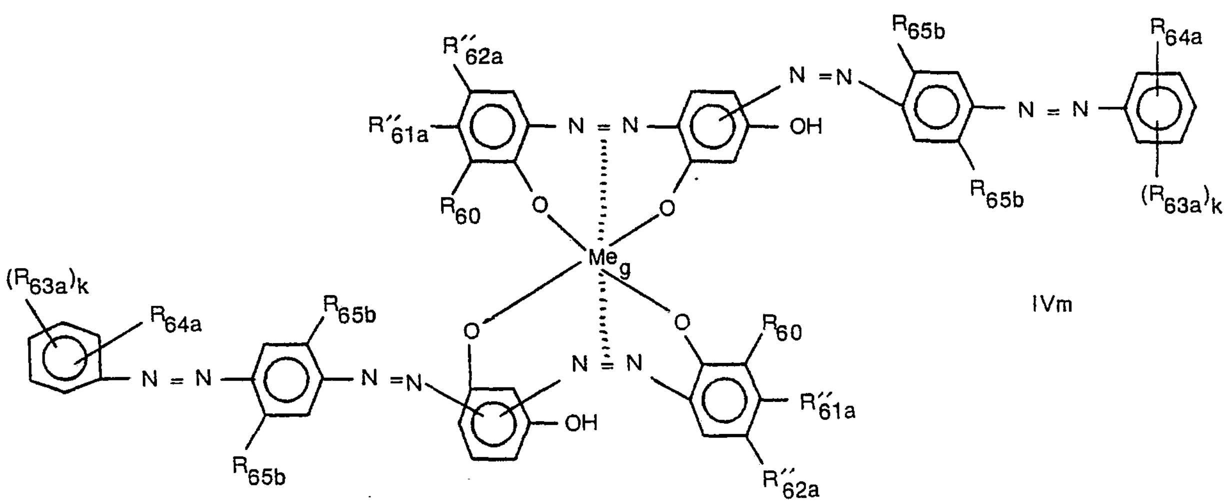

IVm

worin

$R_{60}$ die im Anspruch 1 angegebene Bedeutung besitzt,

$R_{63a}$, k und $R_{64a}$ die in Anspruch 2 angegebenen Bedeutungen besitzen, jeder der Reste $R_{65b}$ unabhängig voneinander $-CH_3$ oder $-OCH_3$ bedeuten;

$R_{61a}''$ Wasserstoff, $-NO_2$, $-NH-CO-CH_2-Z_3$ oder

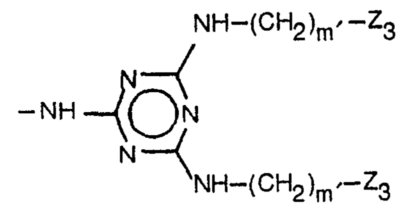

;

$R_{62a}''$ Wasserstoff

$-NO_2$, $-SO_2-NH_2$, $-SO_2-N(CH_3)_2$, $-SO_2-NH-(CH_2)_{m}'-Z_3$, $-SO_2-NH-C_2H_4OH$,

oder falls $R_{60}$ und $R_{61a}''$ gleichzeitig Wasserstoff bedeuten, für $-CO-NH-(CH_2)_{m}'-Z_3$, $-NH-CO-CH_2-Z_3$ oder

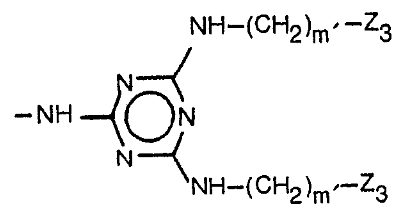

;

stehen und m' und $Z_3$ die in Anspruch 5 angegebenen Bedeutungen besitzen.

8. Verfahren zum Färben von Substraten, dadurch gekennzeichnet, dass man hierzu eine Verbindung der Formel IV gemäss Anspruch 1 verwendet.

9. Ein Substrat, welches mit einer Verbindung der Formel IV gemäss Anspruch 1 behandelt wurde.

**Revendications**

1. Un composé azoïque sous forme non métallisée, sous forme de complexe métallifère 1:1 ou sous forme de complexe métallifère 1:2, ayant au moins 1,3 groupe basique hydrosolubilisant, ledit composé correspondant à la formule IV

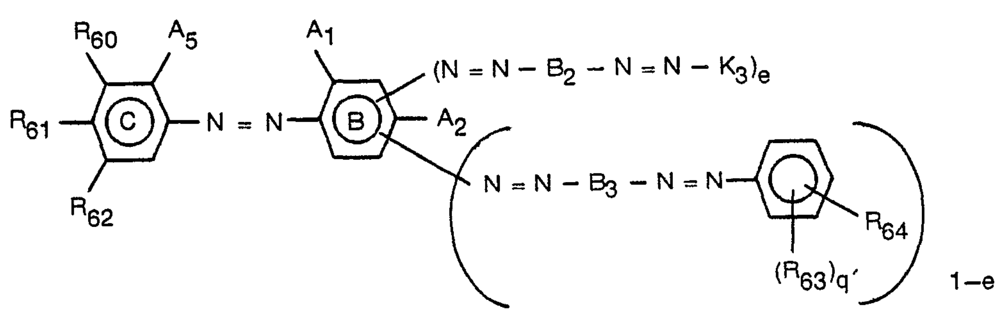

IV

dans laquelle

$A_1$ représente $-OH$ ou $-NH_2$,

$A_2$ représente $-OH$ ou $-NH_2$, et

$A_5$ représente un groupe $-OH$, alcoxy en $C_1-C_4$ ou $-COOH$, ou bien $A_1$ et $A_5$ forment le gorupe $-NH-Me-NH-$, $NH-Me-OOC$, $-NH-Me-O-$, $-O-Me-O-$ ou $-O-Me-OOC-$, où Me est un métal capable de former soit un complexe métallifère 1:1, soit un complexe métallifère 1:2, ou capable de former aussi bien un complexe métallifère 1:1 qu'un complexe métallifère 1:2,

e signifie 0 ou 1,

$R_{60}$ représente l'hydrogène ou $-NO_2$,

$R_{61}$ et $R_{62}$, indépendamment l'un de l'autre, représentent l'hydrogène,

$$-NO_2,\ -CH_2-Z_2,\ SO_2-NH_2,\ -SO_2-NH-(CH_2)_p-Z_2,\ -SO_2-NH-C_2H_4OH,$$

$$-SO_2-N-(R'_{62})_2,\ -CO-NH-(CH_2)_p-Z_2,\ -NH-CO-(CH_2)_p-Z_2,$$

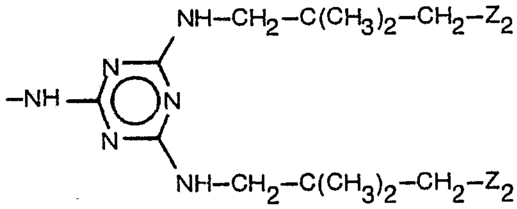 , ou 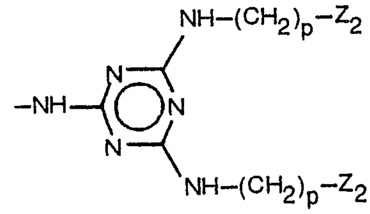 ;

où $R_{62}'$ représente un groupe alkyle en $C_1$—$C_4$,

$R_{63}$ représente $-SO_2-NH-(CH_2)_p-Z_2$, $-CO-NH-(CH_2)_p-Z_2$, $-NH-CO-(CH_2)_p-Z_2$ ou

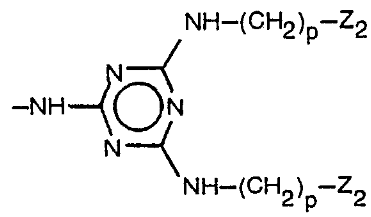

$R_{64}$ représente l'hydrogène ou un groupe alcoxy en $C_1$—$C_4$, chaque $R_{65}$ représente indépendamment l'hydrogène ou un groupe alkyle en $C_1$—$C_4$ ou alcoxy en $C_1$—$C_4$,

p signifie 1, 2 ou 3,

q' signifie 1 ou 2, avec la condition que q' signifie 2 lorsque $R_{63}$ représente $-CO-NH-(CH_2)_p-Z_2$,

$K_3$ représente l'un des groupes suivants

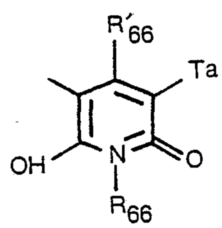

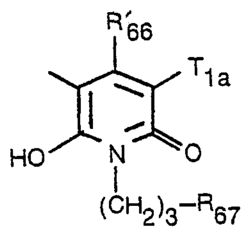

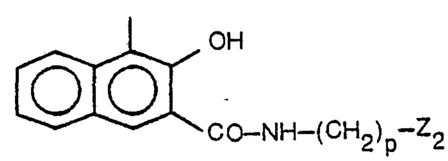

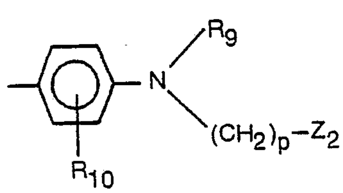

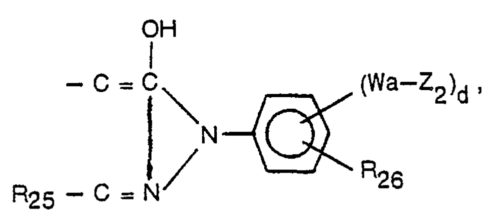

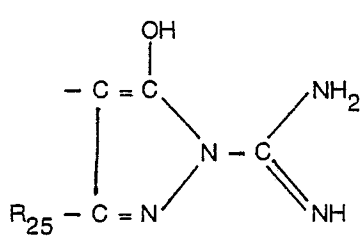

$R_{69}$ représente $-CO-CH-CO-R_{68}$,

$R_9$ représente un groupe alkyle en $C_1$—$C_4$ ou $(CH_2)_p-Z_2$,

$R_{10}$ représente l'hydrogène ou un groupe alkyle en $C_1$—$C_4$, alcoxy en $C_1$—$C_4$, $-NH-COCH_3$ ou $-NHCONH_2$,

$R_{25}$ représente un groupe alkyle en $C_1$—$C_4$ —$COO(R_{25a})$ ou —COOH, où $R_{25a}$ représente un groupe alkyle en $C_1$—$C_4$,

$Z_2$ représente $-NH_2$, $-N(R_0)_2$, $-\overset{\oplus}{N}(R_0)_3\ A^{\ominus}$, $-\overset{\oplus}{N}(CH_3)_2-(CH_2)_p\ NH_2$

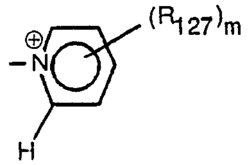

ou $-\overset{\oplus}{N}(CH_2)_3-(CH_2)_p-N(CH_3)_2\ A^{\ominus}$

où m signifie 0, 1 ou 2,

$A^{\ominus}$ représente un anion non chromophore,

$R_{127}$ représente un groupe méthyle ou éthyle, chaque $R_0$ représente indépendamment un groupe méthyle, éthyle, β-hydroxyéthyle, benzyle, $—CH_2COCH_3$,

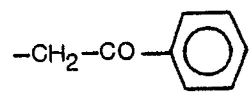

avec la condition que pas plus d'un groupe benzyle, $—CH_2COCH_3$ ou

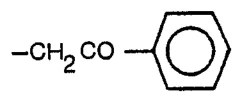

ou pas plus de deux groupes β-hydroxyéthyle soient fixés à l'atome d'azote,

$R_{66}$ représente l'hydrogène ou un groupe alkyle en $C_1$—$C_4$, $—C_2H_4OH$ ou $—(CH_2)_p—Z_2$,

$R_{66}'$ représente un groupe alkyle en $C_4$—$C_4$,

Ta représente un groupe de formule

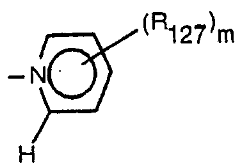

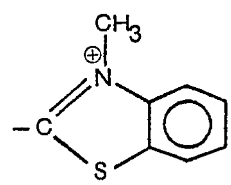

$A^{\ominus}$

$T_{1a}$ représente —CN ou —CO—$NH_2$,

$R_{67}$ représente $—N(CH_3)_2$ ou $—N^{\oplus}(CH_3)_3\ A^{\ominus}$ ,

$R_{68}$ représente $+CH_2)_p—Z_2$, $—NH—(CH_2)_p—Z_2$ ou

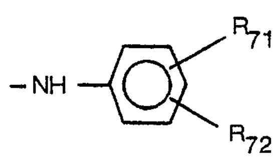

;

où $R_{71}$ représente l'hydrogène ou un groupe —OH, alcoxy en

$C_1$—$C_4$, —NH—CO—$(CH_2)_p$—$Z_2$, —CO—NH—$(CH_2)_p$—$Z_2$,

—$SO_2$—$NH(CH_2)_p$—$Z_2$, —$(CH_2)_p$—$Z_2$ ou

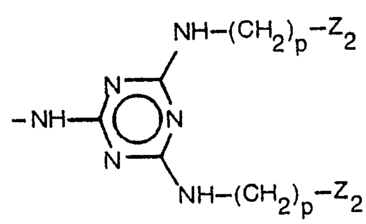

;

et

$R_{72}$ représente l'hydrogène ou $—(CH_2)_p—Z_2$,
$R_{69}$ représente un groupe alkyle en $C_1—C_4$ ou $(CH_2)_p—Z_2$, où p et $Z_2$ sont tels que définis ci-dessus,

$B_2$ représente 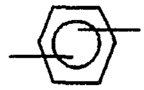 ou 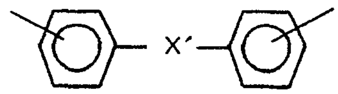

$B_3$ représente 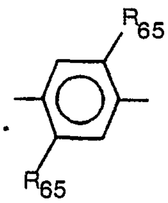 , 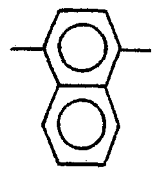 ou 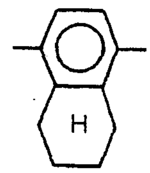

où chaque $R_{65}$ représente indépendamment l'hydrogène ou un groupe alkyl en $C_1—C_4$ ou alcoxy en $C_1—C_4$, et X' est tel que défini ci-après,

$W_a$ représente $—(CH_2)_s$, $—NHCO(*CH_2)_s—$, $—CONH(*CH_2)_s$ ou $—SO_2NH(*CH_2)_s$, dans lesquels l'atome de carbone marqué d'un astérisque est fixé à l'atome d'azote du groupe $Z_2$ et s signifie 1, 2, 3, 4, 5 ou 6,

d' signifie 0 ou 1,

$R_{26}$ représente l'hydrogène, un halogène ou un groupe alkyle en $C_1—C_4$ ou alcoxy en $C_1—C_4$,

X' représente un des groupes $X_1$ à $X_{53}$ ci-dessous,

$X_1$ est une liaison directe,

$X_2$ un groupe alkylène à chaîne droite ou ramifiée ayant de 1 à 4 atomes de carbone,

$X_3$ $-CO-$, $X_4$ 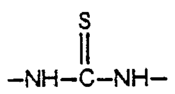, $X_5$ $-S-$, $X_6$ $-O-$, $X_7$ $-CH=CH-$, $X_8$ $-S-S-$,

$X_9$ $-SO_2-$, $X_{10}$ $-NH-$, $X_{11}$ $-NH-CO-$, $X_{12}$ 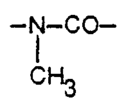, $X_{13}$ 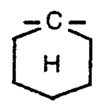

$X_{14}$ 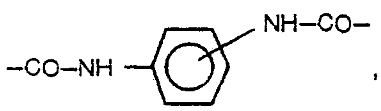, $X_{15}$ 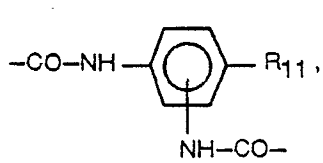,

$X_{16}$ 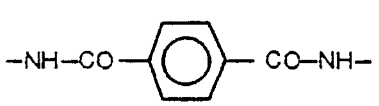, $X_{17}$ $-SO_2-NH-$, $X_{18}$ 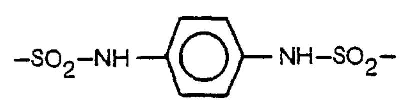,

$X_{19}$ 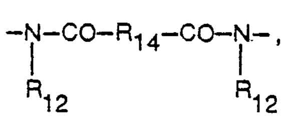, $X_{20}$ 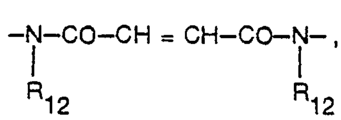, $X_{21}$ 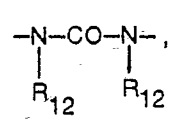,

$X_{22}$ $-CO-NH-NH-CO-$, $X_{23}$ $-CH_2-CO-NH-NH-CO-CH_2-$,

$X_{24}$ $-CH=CH-CO-NH-NH-CO-CH=CH-$, $X_{25}$ 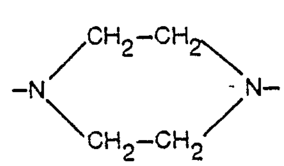,

$X_{26}$ 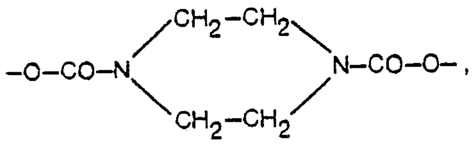, $X_{27}$ 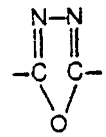, $X_{28}$ 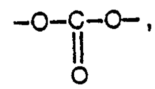,

$X_{29}$ 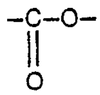, $X_{30}$ 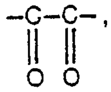, $X_{31}$ $-O-(CH_2)_q-O-$, $X_{32}$ 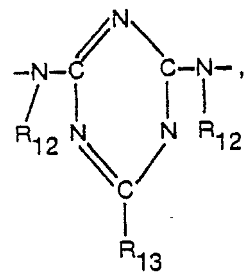,

$X_{33}$ 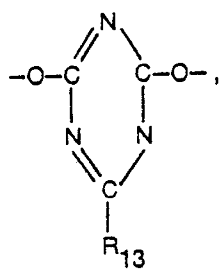, $X_{34}$ 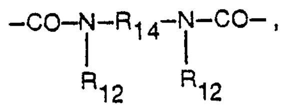, $X_{35}$ 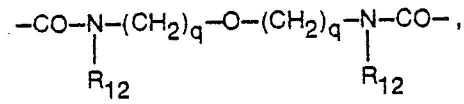,

$X_{36}$ 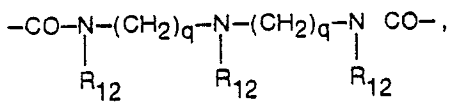,

$X_{37}$ 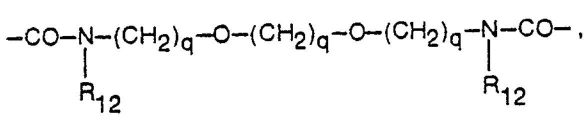, $X_{38}$ 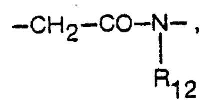,

$X_{39}$ 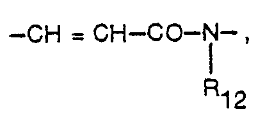, $X_{40}$ $-N=N-$, $X_{41}$ $-CH_2-S-CH_2-$, $X_{42}$ $-SO-$,

$X_{43}$ $-CH_2-SO-CH_2-$, $X_{44}$ $-CH_2-SO_2-CH_2-$, $X_{45}$ $-CH_2-NH-CO-NH-CH_2-$,

$X_{46}$ $-CH_2-NH-OS-NH-CH_2-$, $X_{47}$ 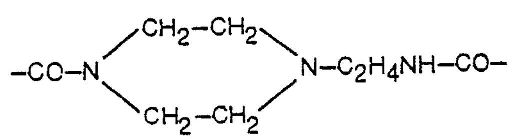,

$X_{48}$ 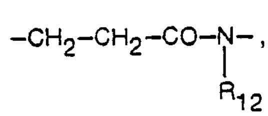, $X_{49}$ $-NH-CO-NH-$, $X_{50}$ $-O-(CH_2)_q-O-$,

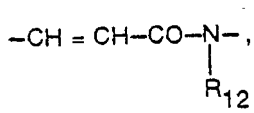, $X_{52}$ 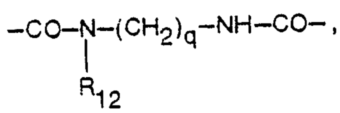, $X_{53}$ 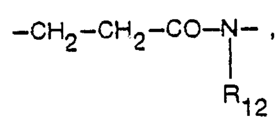,

où

$R_{11}$ représente un halogène ou un groupe alkyle en $C_1$—$C_4$ ou alcoxy en $C_1$—$C_4$,

$R_{12}$ représente l'hydrogène ou un groupe alkyle en $C_1$—$C_4$,

$R_{13}$ représente un halogène ou —NH—$CH_2$—$CH_2$—OH ou —N($CH_2$—$CH_2OH)_2$,

$R_{14}$ représente un groupe alkylène en $C_1$—$C_4$ à chaîne droite ou ramifiée et q signifie 1, 2, 3 ou 4,

avec les conditions que

i) $R_{60}$ et $R_{61}$ ne représentent pas tous les deux —$NO_2$

ii) $R_{20}$ ne représente pas —$NO_2$ lorsque $R_{61}$ et $R_{62}$ signifient tous les deux l'hydrogène,

iii) $R_{61}$ et $R_{62}$ ne représentent pas le même groupe, sauf s'îls signifient tous les deux l'hydrogène, et

iv) chaque pont azo dans le cycle B soit en position ortho de $A_1$ ou de $A_2$.

2. Un composé selon la revendication 1 sous forme non métallisée de formula IVa

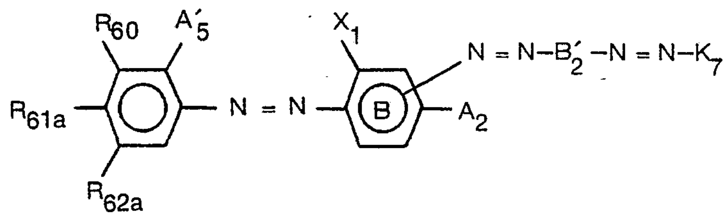

IVa ,

dans laquelle

$A_5'$ représente —OH ou —$OCH_3$,

$R_{61a}$ représente l'hydrogène, —$NO_2$, —$CH_2$—$Z_2$, —$SO_2$—NH—$(CH_2)_p$—$Z_2$, —NH—CO—$(CH_2)_p$—$Z_2$ ou

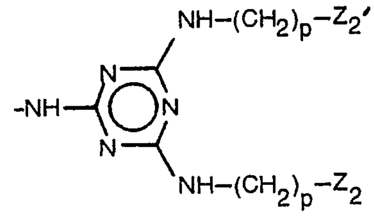

$R_{62a}$ représente l'hydrogène,

—$NO_2$, —$CH_2$—$Z_2$, —$SO_2$—$NH_2$, —$SO_2$—NH—$(CH_2)_p$—$Z_2$,

—CO—NH—$(CH_2)_p$—$Z_2$, —NH—CO—$(CH_2)_p$—$Z_2$,

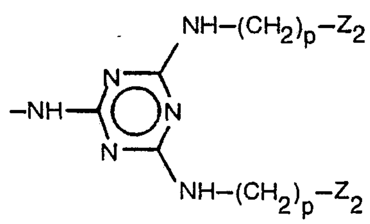

ou

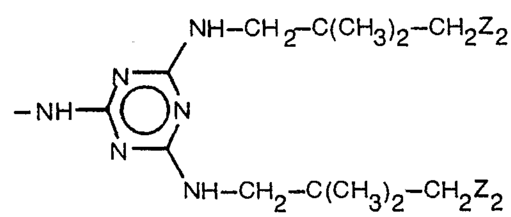

,

$B_2'$ représente

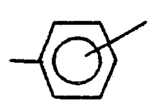

ou

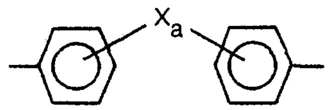

;

$K_7$ représente l'un des groupes IVaa à Ivaf ci-dessous,

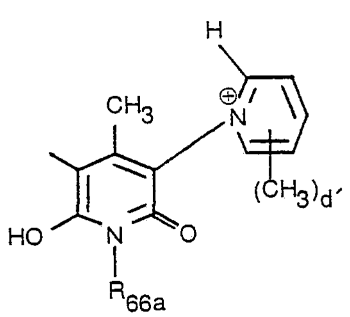

IVaa

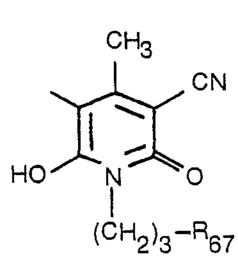

, IVab

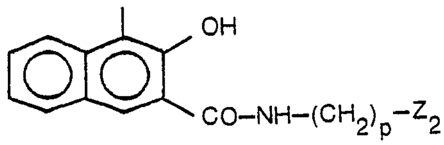 IVac

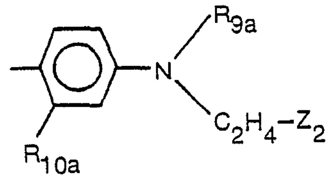 IVad

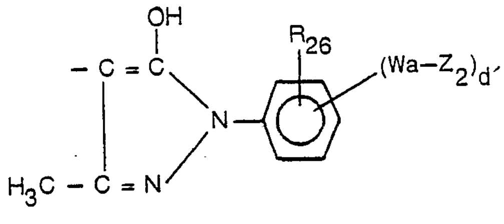 IVae

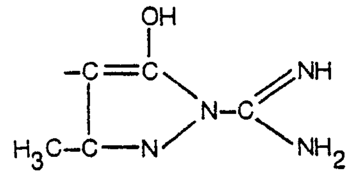 IVaf

ou 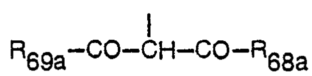 IVag

dans lesquels

$R_{9a}$ représente —$CH_3$, —$C_2H_5$ ou —$C_2H_4$—$Z_2$,

$W_a$ représente —$(CH_2)_s$, —NHCO(*$CH_2$)$_s$—, —CONH$(CH_2)_s$ ou —$SO_2$NH(*$CH_2$)$_s$, dans lesquels l'atome de carbone marqué d'un astérisque est fixé à l'atome d'azote du groupe $Z_2$ et s signifie 1, 2, 3, 4, 5 ou 6, d signifie 0 ou 1,

$R_{10a}$ représente l'hydrogène, —$CH_3$, —$OCH_3$, —NH—CO—$CH_3$ ou —NH—CO—$NH_2$,

$R_{66a}$ représente l'hydrogène, —$CH_3$, —$C_2H_5$, n-$C_3H_7$, n-$C_4H_9$, i-$C_3H_7$, i-$C_4H_9$, —$C_2H_4$OH ou —$(CH_2)_p$—$Z_2$;

$R_{68p}$ représente —$(CH_2)_p$—$Z_2$, —NH—$(CH_2)_p$—$Z_2$ ou

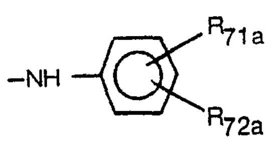 ;

$R_{69a}$ représente —$CH_3$, —$C_2H_5$ ou —$(CH_2)_p$—$Z_2$;

$R_{71a}$ représente l'hydrogène,

—OH, —$OCH_3$, —NH—CO—$(CH_2)_p$—$Z_2$,

—CO—NH—$(CH_2)_p$—$Z_2$, —$SO_2$—NH—$(CH_2)_p$—$Z_2$ ou

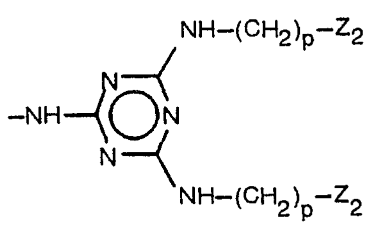

$R_{72a}$ représente l'hydrogène ou —$(CH_2)_p$—$Z_2$,

$X_a$ signifie $X_1$, $X_5$, $X_6$, $X_7$, $X_{10}$, $X_{11}$, $X_{12}$, $X_{16}$, $X_{17}$, $X_{22}$, $X_{25}$, $X_{26}$, $X_{27}$, $X_{30}$, $X_{31}$, $X_{49}$ ou les groupes suivants

$X_2'$ —$CH_2$—, $X_2''$ —$(CH_2)_2$—, $X_2'''$ —$(CH_2)_3$—,

$X_2^{iv}$ —$(CH_2)_4$—, $X'_{14}$ 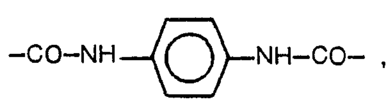

$X'_{15}$ 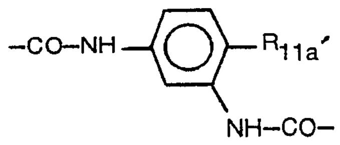, $X'_{19}$ $-NH-CO-CH_2-CH_2-CO-NH-$,

$X''_{19}$ $-NH-CO-(CH_2)_4-CO-NH-$, $X'''_{19}$ 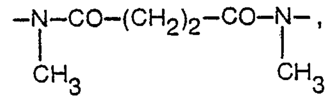,

$X'_{20}$ $-NH-CO-CH=CH-CO-NH-$, $X''_{20}$ 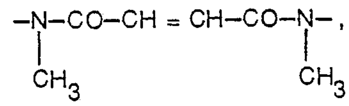,

$X'_{21}$ 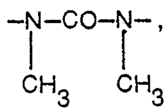, $X'_{32}$ 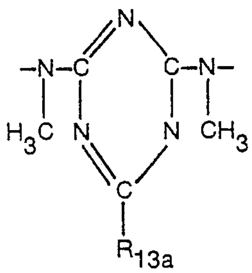

$X''_{32}$ 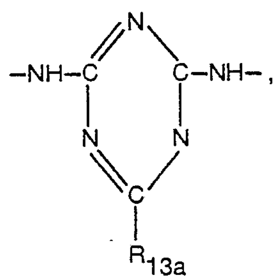, $X'_{34}$ $-CO-NH-(CH_2)_2-NH-CO-$,

$X''_{34}$ $-CO-NH-(CH_2)_3-NH-CO-$, $X'''_{34}$ $-CO-NH-(CH_2)_4-NH-CO-$,

$X^{iv}_{34}$ 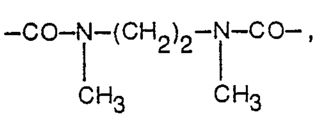, $X^{v}_{34}$ 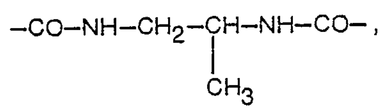,

$X^{vi}_{34}$ 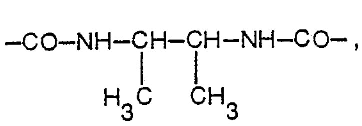, $X''_{14}$ 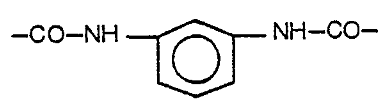,

$X''_{15}$ 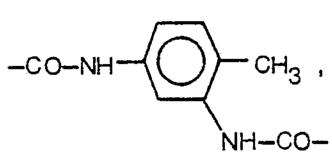, $X'''_{15}$ 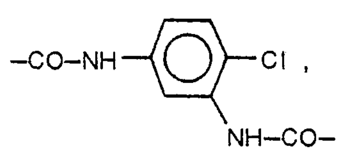,

$X_{15}^{iv}$ 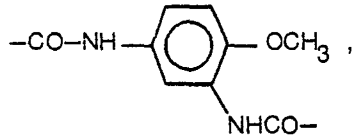 ,  $X_{32}'''$ 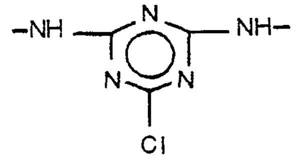 ,

$X_{32}^{iv}$ 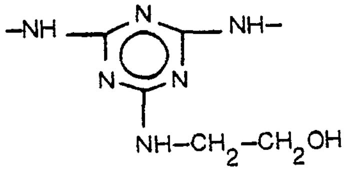 ,  $X_{32}^{v}$ 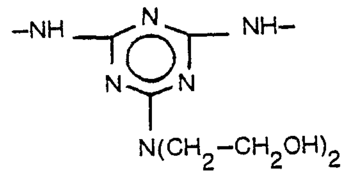 ,

$X_{32}^{vi}$ 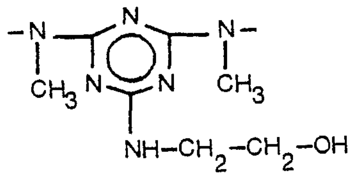 ,  $X_{33}'$ 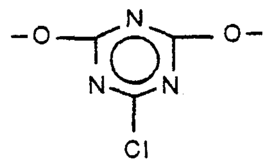 ,

$X_{33}''$ 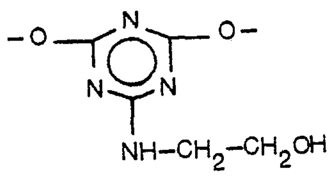 ,  $X_{33}'''$ 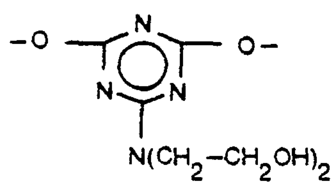 ,

$X_{35}'$ $-CO-NH-(CH_2)_2-O-(CH_2)_2-NH-CO-$ ,

$X_{35}''$ $-CO-NH-(CH_2)_2-O-(CH_2)_2-O-(CH_2)_2-NH-CO-$ ,

$X_{36}'$ $-CO-NH-(CH_2)_2-NH-(CH_2)_2-NH-CO-$ ,

$X_{36}''$ $-CO-NH-(CH_2)_2-\underset{\substack{|\\ CH_3}}{N}-(CH_2)_2-NH-CO-$ ,  $X_{48}'$ $-CH_2-CO-\underset{\substack{|\\ CH_3}}{N}-$ ,

$X_{50}'$ $-O-CH_2-CH_2-O-$ ,  $X_{50}''$ $-O-(CH_2)-O-$ ,  $X_{51}'$ $-CH=CH-CO-NH-$ ,

$X_{51}''$ $-CH=CH-CO-\underset{\substack{|\\ CH_3}}{N}-$ ,  $X_{52}'$ $-CO-\underset{\substack{|\\ CH_3}}{N}-CH_2-CH_2-NH-CO-$ ,

$X_{53}'$ $-CH_2-CH_2-CO-NH-$ ,  $X_{53}''$ $-CH_2-CH_2-CO-\underset{\substack{|\\ CH_3}}{N}-$ ,

où

$R_{11a}$ représente l'hydrogène, $-Cl$, $-CH_3$ ou $-OCH_3$,

$R_{13a}$ représente $-Cl$, $-NH-CH_2-CH_2-OH$ ou $-N(CH_2-CH_2-OH)_2$; et

avec les conditions que

i) chaque pont azo dans B soit en position ortho de $A_1$ ou $A_2$ ou à la fois de $A_1$ et de $A_2$,

ii) $R_{61a}$ et $R_{62a}$ et $R_{62a}$ ne représentent pas tous les deux le même groupe, sauf s'ils signifient tous les deux l'hydrogène,

iii) $R_{60}$ et $R_{61a}$ ne représentent pas tous les deux $—NO_2$, et

iv) $R_{60}$ ne représente pas un groupe $—NO_2$ lorsque $R_{61a}$ et $R_{62a}$ signifient l'hydrogène, ou un composé de formule IVc

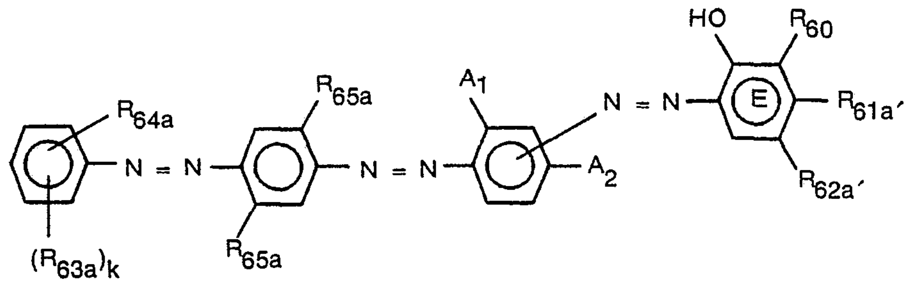

IVc

dans laquelle

$R_{63a}$ représente

$$—SO_2—NH—(CH_2)_{m'}—Z_2,\ —CO—NH—(CH_2)_{m'}—Z_2,$$

$$—NH—CO—(CH_2)_a—Z_2,\ —CH_2—Z_2 \text{ ou}$$

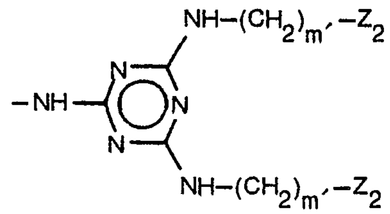

;

chaque $R_{65a}$ représente indépendamment $—CH_3$, $—C_2H_5$, $—OCH_3$ ou $—OC_2H_5$,

$R_{64a}$ représente l'hydrogène ou $—OCH_3$,

k signifie 1 ou 2, mais seulement 2 lorsque $R_{63a}$ représente le groupe $—CO—NH—(CH_2)_{m'}—Z_2$,

$R_{61a}'$ représente l'hydrogène, $—NO_2$, $—NH—CO—(CH_2)_a—Z_2$ ou

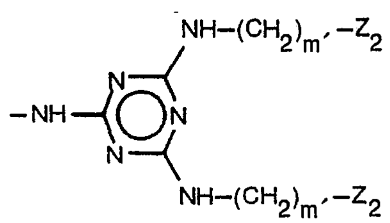

;

$R_{62a}'$ représente l'hydrogène,

$$—NO_2,\ —SO_2—NH_2,\ —SO_2—N(CH_3)_2,\ —SO_2—N(C_2H_5)_2,$$

$$—SO_2—NH—C_2H_4OH,\ —SO_2—NH—(CH_2)_{m'}—Z_2$$

ou, lorsque $R_{60}$ et $R_{61}530'$ représentent l'hydrogène, également

$$—CO—NH(CH_2)_a—Z_2,\ —NH—CO—(CH_2)_a—Z_2 \text{ ou}$$

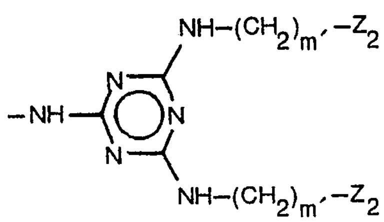

; et

a signifie 1 ou 2,

avec les conditions que

i) $R_{60}$ et $R_{61a}'$ ne représentent pas tous les deux $—NO_2$,

ii) $R_{61a}'$ et $R_{62a}'$ ne représentent pas tous les deux le même groupe, sauf s'ils signifient tous les deux l'hydrogène, et

iii) $R_{60}$ ne représente pas $—NO_2$ lorsque $R_{61a}'$ et $R_{62a}'$ signifient tous les deux l'hydrogène.

3. Un composé selon la revendication 1 sous forme de complexe métallifère 1:1 de formule IVe

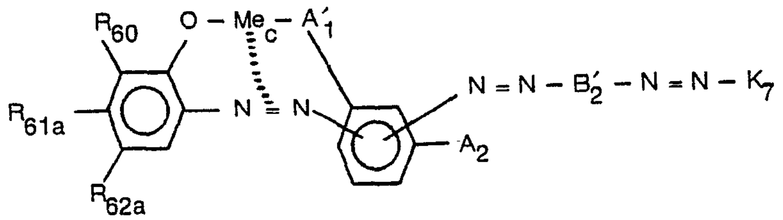 IVe

dans laquelle

$R_{60}$ et $A_2$ sont définis à la revendication 1,

$A_1'$ représente —NH—, —OOC— ou —O—,

$Me_c$ représente le cuivre, le cobalt ou le chrome,

$R_{61a}$ représente l'hydrogène, $—NO_2$, $—CH_2—Z_2$, $—SO_2—NH—(CH_2)_p—Z_2$, $—NH—CO—(CH_2)_p—Z_2$ ou

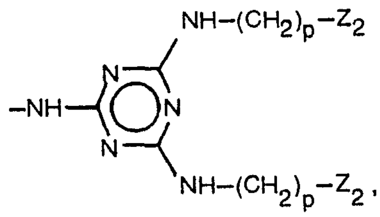 ,

$R_{62a}$ représente l'hydrogène,

$—NO_2$, $—CH_2—Z_2$, $—SO_2—NH_2$, $—SO_2—NH—(CH_2)_p—Z_2$,

$—CO—NH—(CH_2)_p—Z_2$, $—NH—CO—(CH_2)_p—Z_2$,

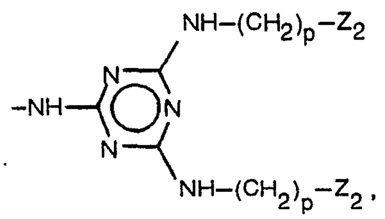 ou 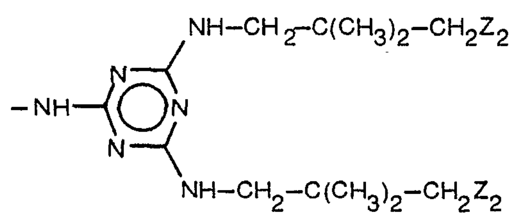 ,

$B_2'$ représente 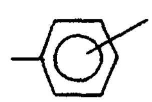 ou 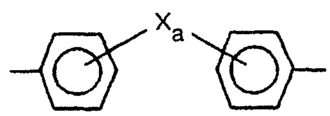 ;

$K_7$ représente un des groupes IVaa à IVaf ci-dessous

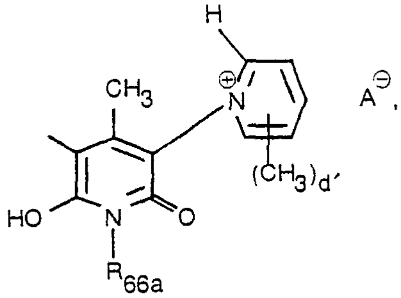 IVaa

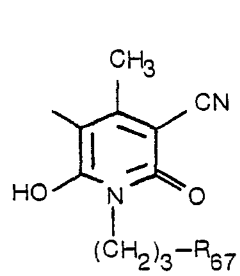 , IVab

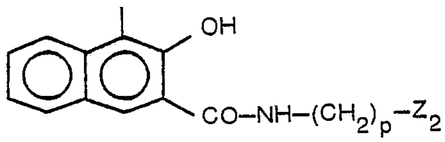 IVac

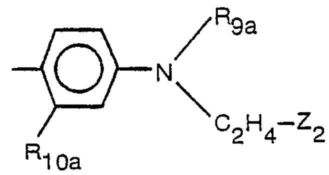 IVad .

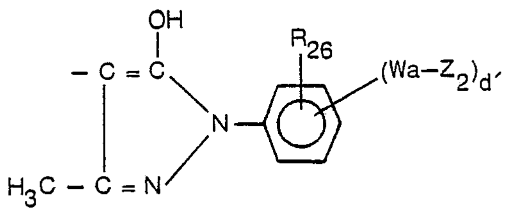 IVae

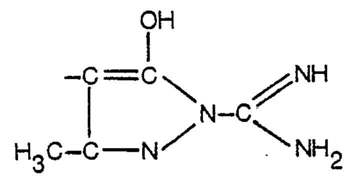 IVaf

ou 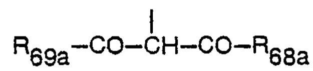 IVag ou

un composé de formule IVg

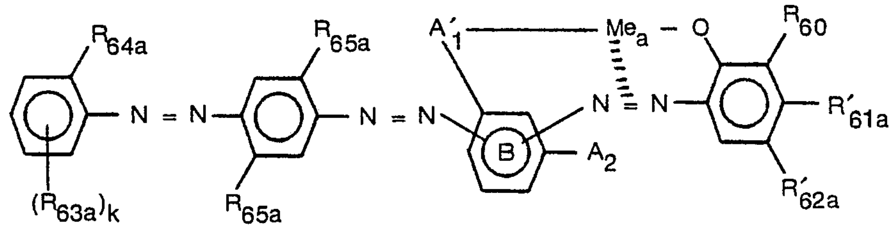 IVg

où

$R_{16a}'$ représente l'hydrogène, $—NO_2$, $—NH—CO—(CH_2)_a—Z_2$ ou

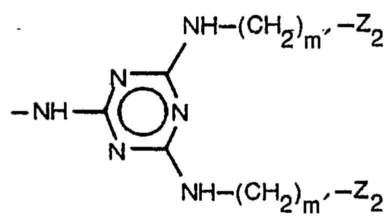 ;

$R_{62a}'$ représente l'hydrogène,

$—NO_2$, $—SO_2—NH_2$, $—SO_2—N(CH_3)_2$, $—SO_2—N(C_2H_5)_2$,

$—SO_2—NH—C_2H_4OH$, $—SO_2—NH—(CH_2)_{m'}—Z_2$,

ou, lorsque $R_{60}$ et $R_{61a'}$ représentent l'hydrogène, également $—CO—NH—(CH_2)_a—Z_2$, $—NH—CO(CH_2)_a—Z_2$ ou

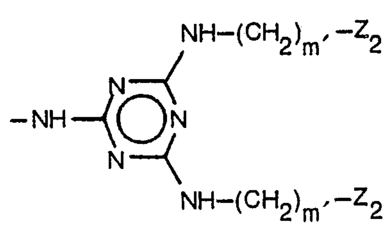 et

$R_{63a}$ représente

$-SO_2-NH-(CH_2)_{m'}-Z_2$, $-CO-NH-(CH_2)_{m'}-Z_2$, $-NH-CO(CH_2)_a-Z_2$, $-CH_2-Z_2$ ou

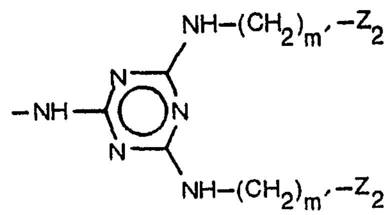

;

$R_{64a}$ représente l'hydrogène ou $-OCH_3$,

k signifie 1 ou 2, mais seulement 2 lorsque $R_{63a}$ représente le groupe $-CO-NH-(CH_2)_{m'}-Z_2$, chaque $R_{65a}$ représente indépendamment $-CH_3$, $-C_2H_5$, $-OCH_3$ ou $-OC_2H_5$, les symboles $R_{9a}$, Wa, $R_{10a}'$, m', $R_{66a}$, $R_{68a}$ et $R_{69a}$ sont tels que définis à la revendication 2, avec les conditions que

i) $R_{60}$ et $R_{61a'}$ ne représentent pas tous les deux $-NO_2$,

ii) $R_{61a'}$ et $R_{62a'}$ ne représentent pas tous les deux le même groupe, sauf s'ils signifient tous les deux l'hydrogène, et

iii) $R_{60}$ ne représente pas $-NO_2$ lorsque $R_{61a'}$ et $R_{62a'}$ signifient tous les deux l'hydrogène.

4. Un composé selon la revendication 1 sous forme de complex métallifère 1:2 de formule IVi

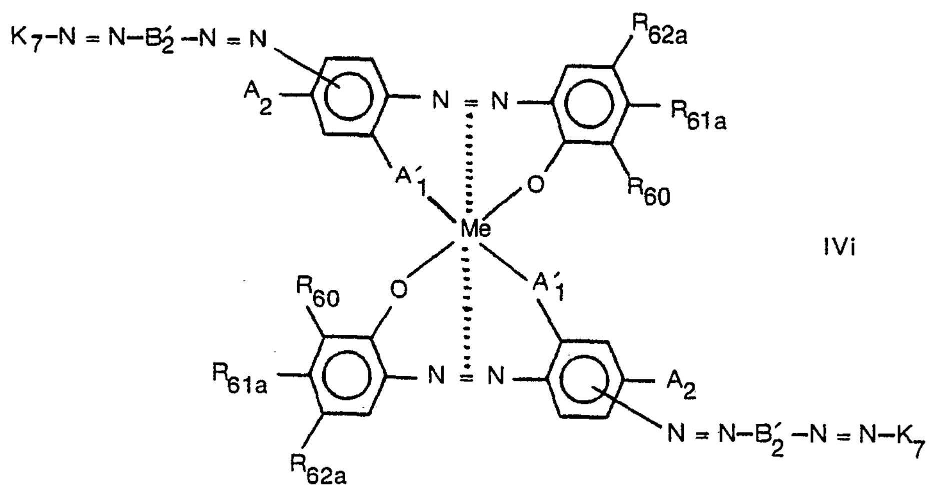

IVi

dans laquelle

Me représente le chrome, le fer ou le cobalt,

A' représente $-O-$, $-NH-$ ou $-COO-$,

$R_{60}$ et $A_2$ sont tels que définis à la revendication 1,

$R_{61a}$ représente

l'hydrogène, $-NO_2$, $-CH_2-Z_2$, $-SO_2-NH-(CH_2)_p-Z_2$, $-NH-CO(CH_2)_p-Z_2$ ou

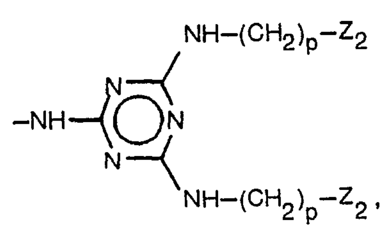

$R_{62a}$ représente l'hydrogène,

$$—NO_2, —CH_2—Z_2, —SO_2—NH_2, —SO_2—NH—(CH_2)_p—Z_2,$$

$$—CO—NH—(CH_2)_p—Z_2, —NH—CO—(CH_2)_p—Z_2,$$

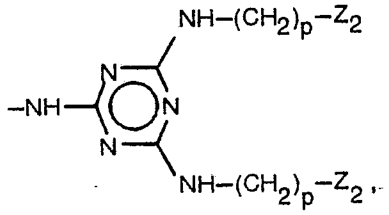

ou

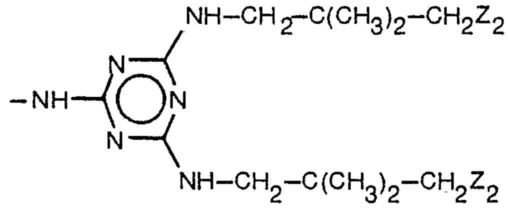

,

$B_2'$ représente 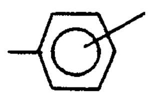 ou 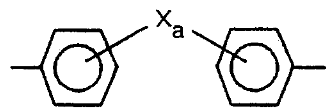 ;

$K_7$ représente un des groupes IVaa àd IVaf ci-dessous

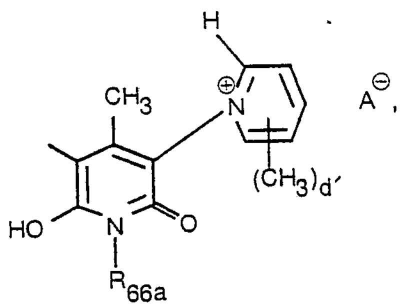

IVaa

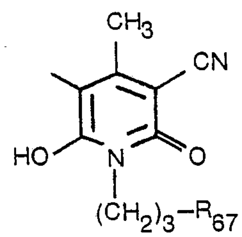

, IVab

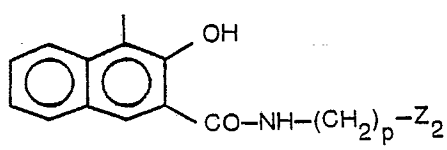

IVac

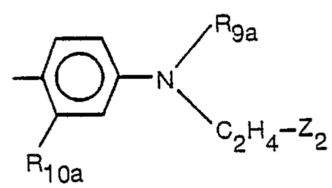

IVad

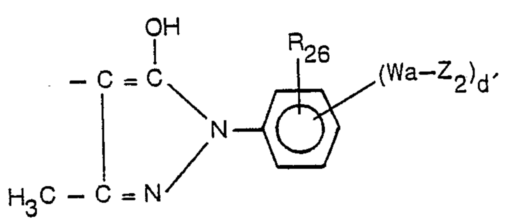

IVae

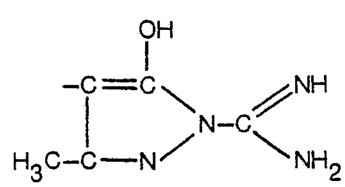

IVaf

ou $R_{69a}-CO-\overset{|}{C}H-CO-R_{68a}$ IVag

dans lesquels les symboles $R_{9a}$, Wa, $R_{10a}$, $R_{66a}$, $R_{68a}$, $R_{69a}$ et m sont tels que définis à la revendication 2, avec les conditions que

i) $R_{60}$ et $R_{61a}'$ ne représentent pas tous les deux $—NO_2$,

ii) $R_{61a}$ et $R_{62}'$ ne soient pas tous les deux identiques, et

iii) $R_{60}$ représente pas —$NO_2$ lorsque $R_{61a'}$ et $R_{62a'}$ signifient tous les deux l'hydrogène, ou un composé de formule IVI

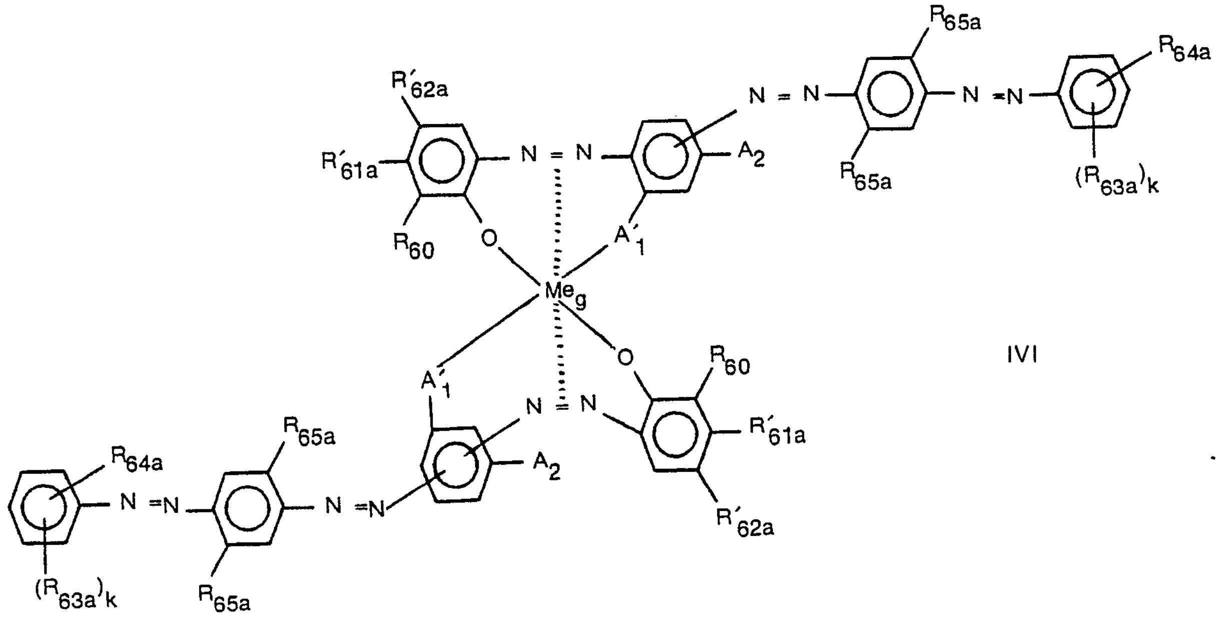

IVI

dans laquelle

$R_{60'}$ et $A_2$ sont tels que définis à la revendication 1,

$Me_g$ représente le cobalt, le fer ou le chrome,

$R_{61a'}$ représente l'hydrogène, —$NO_2$, —NH—CO—$(CH_2)_a$—$Z_2$ ou

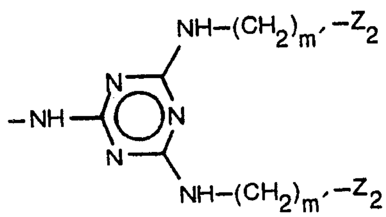

;

où a signifie 1 ou 2,

$R_{62a'}$ représente l'hydrogène,

—$NO_2$, —$SO_2$—$NH_2$, —$SO_2$—$N(CH_3)_2$, —$SO_2$—$N(C_2H_5)_2$,

—$SO_2$—NH—$C_2H_4OH$, —$SO_2$—NH—$(CH_2)_{m'}$—$Z_2$,

ou, lorsque $R_{60}$ et $R_{61'}$ représentent l'hydrogène, également —CO—NH—$(CH_2)_a$ —$Z_2$, —NH—CO—$(CH_2)_a$—$Z_2$ ou

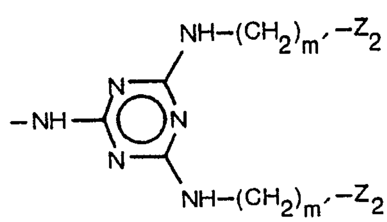

;

et

$R_{63a}$ représente

$$-SO_2-NH-(CH_2)_{m'}-Z_2,\ -CO-NH-(CH_2)_{m'}-Z_2,\ -NH-CO-(CH_2)_a-Z_2,\ -CH_2-Z_2 \text{ ou}$$

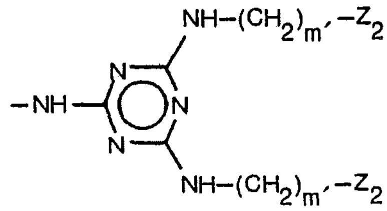

;

chaque $R_{65a}$ représente indépendamment $-CH_3$, $-C_2H_5$, $-OCH_3$ ou $-OC_2H_5$,

$R_{64}$ représente l'hydrogène ou $-OCH_3$,

k signifie 1 ou 2, mais uniquement 2 lorsque $R_{63a}$ représente le groupe $-CO-NH-(CH_2)_{m'}-Z_2$, avec les conditions que

i) $R_{60}$ et $R_{61a}'$ ne représentent pas tous les deux $-NO_2$,

ii) $R_{61a}'$ et $R_{62a'}$ ne représentent pas tous les deux le même groupe, sauf s'ils signifient tous les deux l'hydrogène, et

iii) $R_{60}$ ne représente pas $-NO_2$ lorsque $R_{61a'}$ et $R_{62a'}$ signifient tous les deux l'hydrogène.

5. Un composé selon la revendication 1 de formule IVb

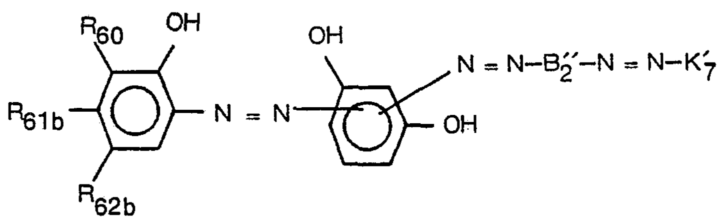

IVb

dans laquelle $R_{60}$ est tel que défini à la revendication 1,

$R_{61b}$ représente l'hydrogène,

$$-NO_2,\ -CH_2-Z_3,\ -SO_2-NH-(CH_2)_{m'}-Z_3,\ -NH-CO-(CH_2)_a-Z_3 \text{ ou}$$

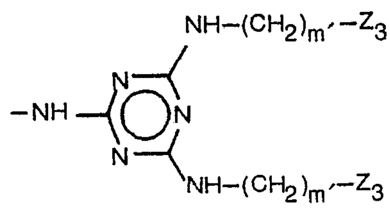

;

$R_{62b}$ représente l'hydrogène,

$$-NO_2,\ -CH_2-Z_3,\ -SO_2-NH_2,\ -SO_2-NH-(CH_2)_{m'}-Z_3,$$

$$-CO-NH-(CH_2)_{m'}-Z_3,\ -NH-CO-(CH_2)_a-Z_3 \text{ ou}$$

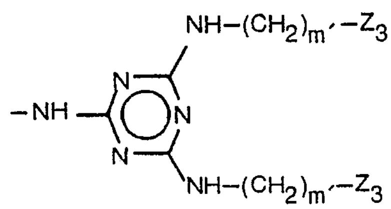

;

$B_2''$ représente 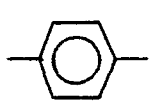 ou 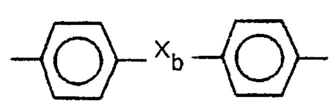

où Xb signifie $X_1$, $X_{11}$, $X_{12}$, $X_{17}$, $X_{27}$, $X_{49}$, $X_2''$, $X_{14}'$, $X_{19}'$, $X_{19}''$, $X_{19}'''$, $X_{20}'$, $X_{20}''$, $X_{32}'$, $X_{34}'$, $X_{34}^{iv}$, $X_{34}^{v}$ ou $X_{34}^{vi}$, où $X_1$ à $X_{49}$ sont tels que définis à la revendication 1, et les autres symboles X sont tels que définis à la revendication 2,

$Z_3$ représente $-N(CH_3)_2$, $-\overset{\oplus}{N}(CH_3)_3\ A^{\ominus}$, 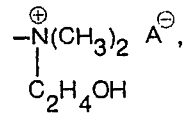, 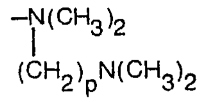

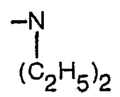 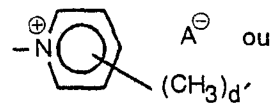 ou 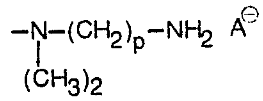

m' signifie 2 ou 3,
a signifie 1 ou 2,
d' signifie 0 ou 1,
$K_{7'}$ représente l'un des groupes IVba à IVbf

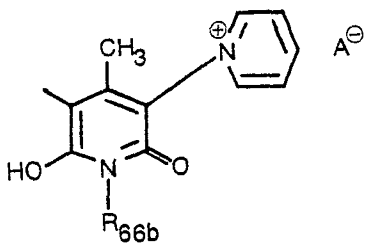

IVba

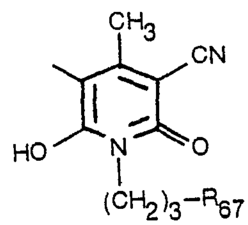

IVbb

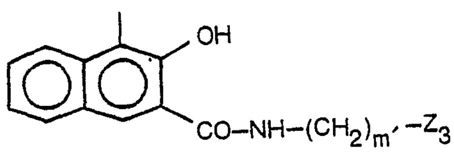

IVbc

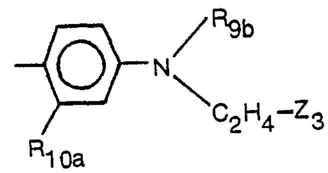

IVbd

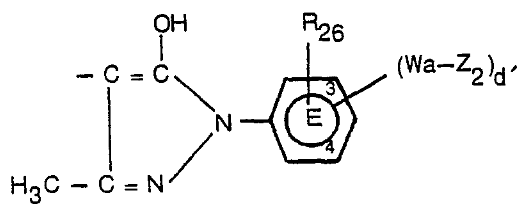

IVbe

ou 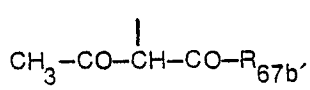

IVbf

où

$R_{9b}$ représente $-CH_3$, $-C_2H_5$ ou $-C_2H_4-Z_3$,
$R_{66b}$ représente l'hydrogène, $-CH_3$, $-C_2H_5$, $-C_2H_4OH$ ou $-(CH_2)_{m'}-Z_3$,
$R_{67b}$ représente $-(CH_2)_{m'}-Z_3$, $-NH-(CH_2)_{m'}-Z_3$ ou

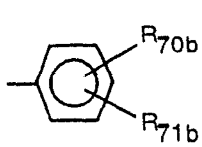

$R_{70}$ représente l'hydrogène,

$$—OH, —OCH_3, —NH—CO—(CH_2)_a—Z_3—,$$

$$—CO—NH—(CH_2)_{m'}—Z_3, —SO_2—NH—(CH_2)_{m'}—Z_3 \text{ ou}$$

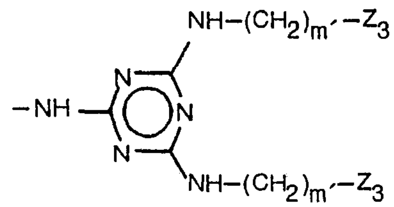

;

$R_{71b}$ représente l'hydrogène ou $—(CH_2)_{m'}—Z_3$,
d', $R_{26}$ et p sont tels que définis à la revendication 1, et
$R_{10a}$ est tel que défini à la revendication 2 et
Wa à $Z_2$ sont tels que définis à la revendication 1,
avec les conditions que
i) $R_{61a}$ et $R_{62a}$ ne représentent pas tous les deux le même groupe, sauf s'ils représentent tous les deux l'hydrogène,
ii) $R_{60}$ et $R_{61b}$ ne représentent pas tous les deux $—NO_2$ et
iii) $R_{60}$ ne représente pas $—NO_2$ lorsque $R_{61b}$ et $R_{62b}$ signifient tous les deux l'hydrogène.

6. Un composé selon la revendication 1 de formule IVf

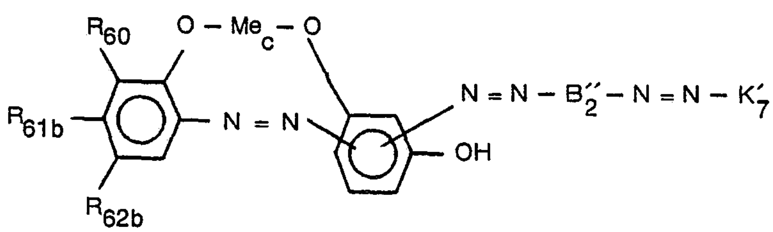

IVf

dans laquelle $R_{60}$ est tel que défini à la revendication 1,
$R_{61b}$, $B_{2''}$, $K_{7'}$ et $R_{62b}$ sont tels que définis à la revendication 5, et
$Me_c$ est tel que défini à la revendication 3,
avec les conditions que
i) $R_{61b}$ et $R_{62b}$ ne représentent pas tous les deux le même groupe, sauf s'ils signifient tous les deux l'hydrogène,
ii) $R_{60}$ et $R_{61b}$ ne représentent pas tous les deux $—NO_2$, et
iii) $R_{60}$ ne représente pas $—NO_2$ lorsque $R_{61b}$ et $R_{62b}$ signifient tous les deux l'hydrogène.

7. Un composé selon la revendication 1 de formule IVm

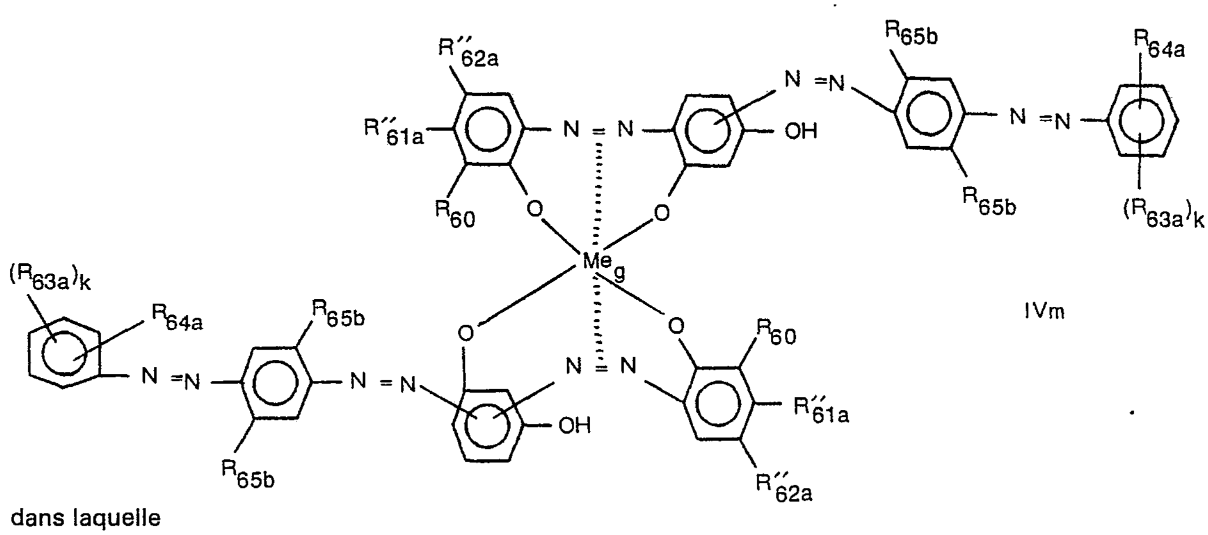

IVm

dans laquelle

$R_{60}$ et tel que défini à la revendication 1,

$R_{63a'}$, k et $R_{64a}$ sont tels que définis à la revendication 2, chaque $R_{65b}$ représente indépendamment $—Ch_3$ou $—OCH_3$,

$R_{61a''}$ représente l'hydrogène, $—NO_2$, —NH—CO—$CH_2$—$Z_3$ ou

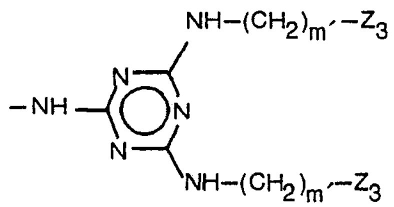

;

$R_{62a''}$ représente l'hydrogène,

$—NO_2$, $—SO_2—NH_2$, $—SO_2—N(CH_3)_2$, $—SO_2—NH—(CH_2)_{m'}—Z_3$, $—SO_2—NH—C_2H_4OH$,

ou, lorsque $R_{60}$ et $R_{61a''}$ signifient tous les deux l'hydrogène,

$—CO—NH—(CH_2)_{m'}—Z_3$, —NH—CO—$CH_2$—$Z_3$ ou

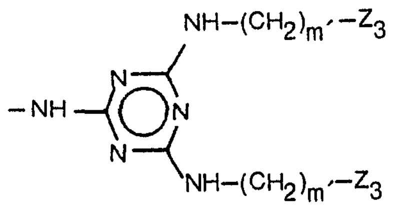

;

et

m' et $Z_3$ sont tels que définis à la revendication 5.

8. Un procédé de teinture d'un substrat, caractérisé en ce qu'on applique sur ledit substrat un composé de formule IV défini à la revendication 1.

9. Un substrat sur lequel un composé de formule IV défini à la revendication 1 a été appliqué.